# EUROPEAN PATENT APPLICATION

(11) **EP 4 671 831 A2**
(43) Date of publication of application: **31.12.2025**
(21) Application number: 25215798.7
(22) Date of filing: 15.01.2025
(51) Int. Cl.: G01T 1/20

(54) **RADIATION IMAGE SCANNER**

(30) Priority: 22.01.2024 JP 2024007257
(62) Divisional of application: 25151935.1
(71) Applicant: J. MORITA MFG. CORP., Fushimi-ku Kyoto-shi Kyoto 612-8533 (JP)
(72) Inventor: FUJII, Yusuke, Kyoto, 612-8533 (JP); HIROTA, Masayuki, Kyoto, 612-8533 (JP)
(74) Representative: Müller Hoffmann & Partner

(57) **Abstract**

A radiation image scanner includes: a stage body including a supporting surface; a positioning mechanism with a positioning surface having contact with an edge portion of an imaging plate to position the edge portion from an outer side of the edge portion in an extension direction of the supporting surface and press the edge portion against the supporting surface; an excitation light source; and a photodetector. The positioning mechanism is constituted so that a state can be changed between a first state where a distal end edge is disposed to be away from the supporting surface by a first distance and a second state where the distal end edge is disposed to be away from the supporting surface by a second distance smaller than the first distance.

## Description

### BACKGROUND

### Technical Field

The present disclosure relates to a radiation image scanner.

### Description of the Background Art

Japanese Patent Application Laid-Open No. 2011-53459 discloses a radiation image scanner including a transfer mechanism of transferring an imaging plate (IP). Disclosed as the transfer mechanism is an example of including a belt holding the IP and a belt drive mechanism of revolving the belt. The IP is transferred while being disposed on a holding surface as a part of the belt.

### SUMMARY

In a configuration that the IP is disposed on the holding surface of the belt as with Japanese Patent Application Laid-Open No. 2011-53459, a part of the IP may be held while being separated from the holding surface due to warpage of the IP, for example. When the IP is away from the holding surface, there is a possibility that a latent image of the IP cannot be correctly read.

The IP is considered to be pressed toward the holding surface using a pressing component to make the IP have contact with the holding surface. In this case, the component for pressing the IP may be captured in a radiation image as a shadow obstruction.

Accordingly, an object of the present disclosure is to be able to hold an imaging plate being in contact with a supporting surface while suppressing a shadow obstruction.

A radiation image scanner is a radiation image scanner reading a radiation image from an imaging plate, comprising: a stage body including a supporting surface which can have contact with a back surface of the imaging plate; a positioning mechanism with a positioning surface having contact with an edge portion of the imaging plate located on the supporting surface to position the edge portion from an outer side of the edge portion in an extension direction of the supporting surface and press the edge portion against the supporting surface; an excitation light source irradiating the imaging plate held on the stage body with excitation light; and a photodetector detecting emission light by the excitation light from the image plate, wherein an end edge of the positioning surface located in front of the supporting surface on a side farther away from the supporting surface is a distal end edge, and the positioning mechanism is constituted so that a state can be changed between a first state where the distal end edge is disposed to be away from the supporting surface by a first distance and a second state where the distal end edge is disposed to be away from the supporting surface by a second distance smaller than the first distance.

According to the radiation image scanner, the imaging plate being in contact with the supporting surface can be held while a shadow obstruction is suppressed.

These and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a schematic perspective view illustrating a radiation image scanner.
Fig. 2 is a partially-exploded perspective view illustrating the scanner.
Fig. 3 is a partial cross-sectional view along an III-III line in Fig. 1.
Fig. 4 is a perspective view of a partially-exploded stage located on a lower end portion of a frame part.
Fig. 5 is a perspective view illustrating the stage.
Fig. 6 is a perspective view illustrating a back surface of the stage.
Fig. 7 is an exploded perspective view illustrating the stage.
Fig. 8 is an exploded perspective view illustrating the back surface of the stage.
Fig. 9 is an enlarged view illustrating a positioning part of the stage.
Fig. 10 is a front view illustrating the stage located in a setting position.
Fig. 11 is a cross-sectional view along an XI-XI line in Fig. 10.
Fig. 12 is a cross-sectional view along an XII-XII line in Fig. 10.
Fig. 13 is a plan view illustrating the stage immediately after an imaging plate (IP) is sandwiched in a right-left direction.
Fig. 14 is a cross-sectional view along an XIV-XIV line in Fig. 13.
Fig. 15 is a cross-sectional view along an XV-XV line in Fig. 13.
Fig. 16 is a plan view illustrating the stage in which the IP is sandwiched in up-down and right-left directions.
Fig. 17 is a cross-sectional view along an XVII-XVII line in Fig. 16.
Fig. 18 is a cross-sectional view along an XVIII-XVIII line in Fig. 16.
Fig. 19 is a plan view illustrating the stage located in a discharge position.
Fig. 20 is a cross-sectional view along an XX-XX line in Fig. 19.
Figs. 21A to 21E are explanation views each illustrating a sandwiching operation of sandwiching the IP by a positioning surface.
Fig. 22 is a perspective view illustrating an inner structure of the radiation image scanner.
Fig. 23 is an exploded perspective view illustrating a back surface of the inner structure of the scanner.
Fig. 24 is an exploded perspective view illustrating the inner structure of the scanner.
Fig. 25 is a partially-exploded perspective view of a stage body.
Fig. 26 is a diagram of the inner structure of the scanner seen from a front surface side of a supporting surface.
Fig. 27 is a schematic cross-sectional view along an XXVII-XXVII line in Fig. 26.
Fig. 28 is a diagram illustrating a combination state where a combination positioning part and a stage-side positioning part are combined.
Fig. 29 is a front view illustrating an operation of the stage.
Fig. 30 is a front view illustrating an operation of the stage.
Fig. 31 is a front view illustrating an operation of the stage.
Fig. 32 is a front view illustrating a discharge operation of the stage.
Figs. 33A to 33D are explanation views each illustrating a sandwiching operation of sandwiching the IP by the positioning surface.
Fig. 34 is a perspective view illustrating a stage according to a modification example.
Fig. 35 is an exploded perspective view illustrating the stage according to the modification example in Fig. 34.
Fig. 36 is a front view illustrating the stage according to the modification example in Fig. 34 seen from a supporting surface side.
Fig. 37 is a partial cross-sectional view along an XXXVII-XXXVII line in Fig. 36.

### DESCRIPTION

### First embodiment

A radiation image scanner according to a first embodiment is described hereinafter.

### <Whole configuration>

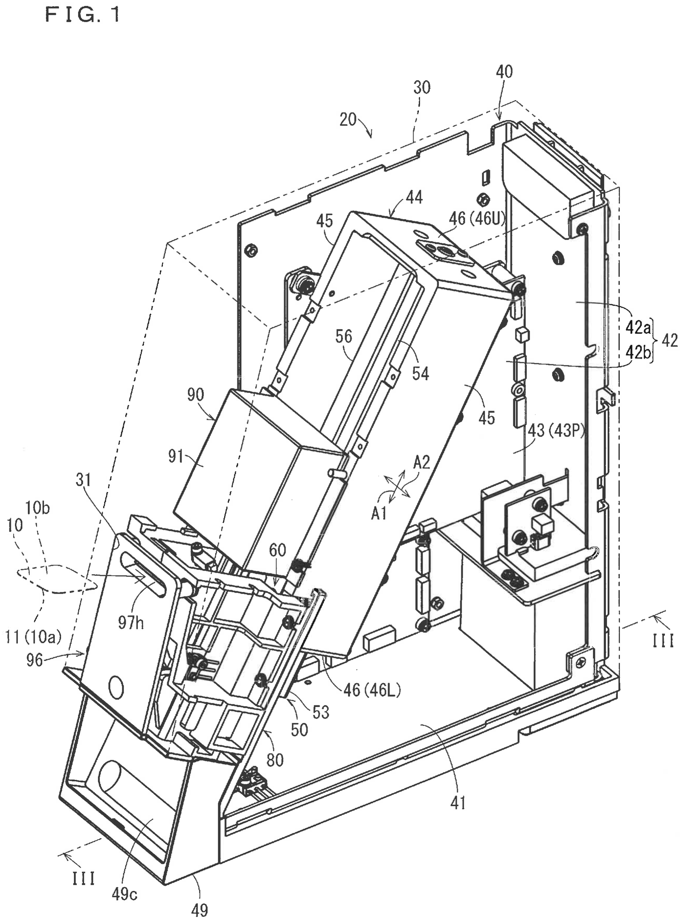

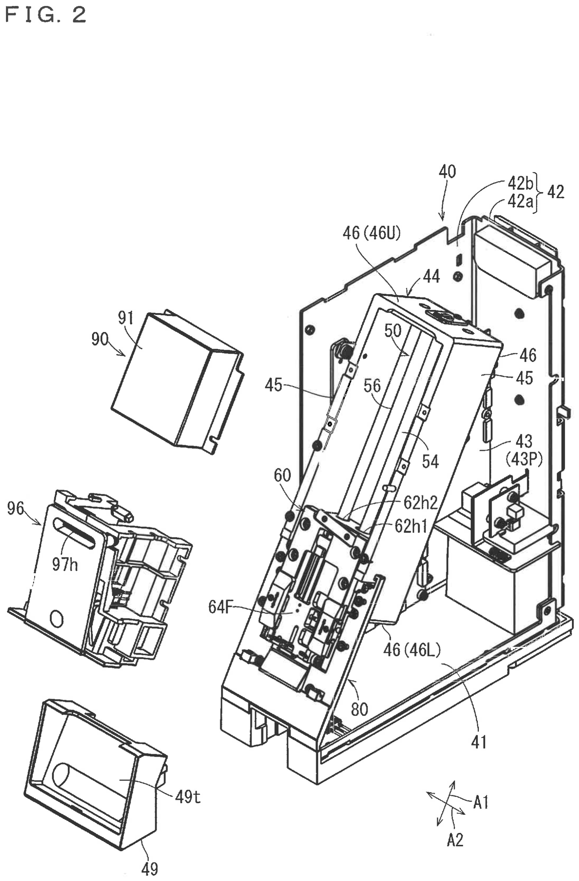

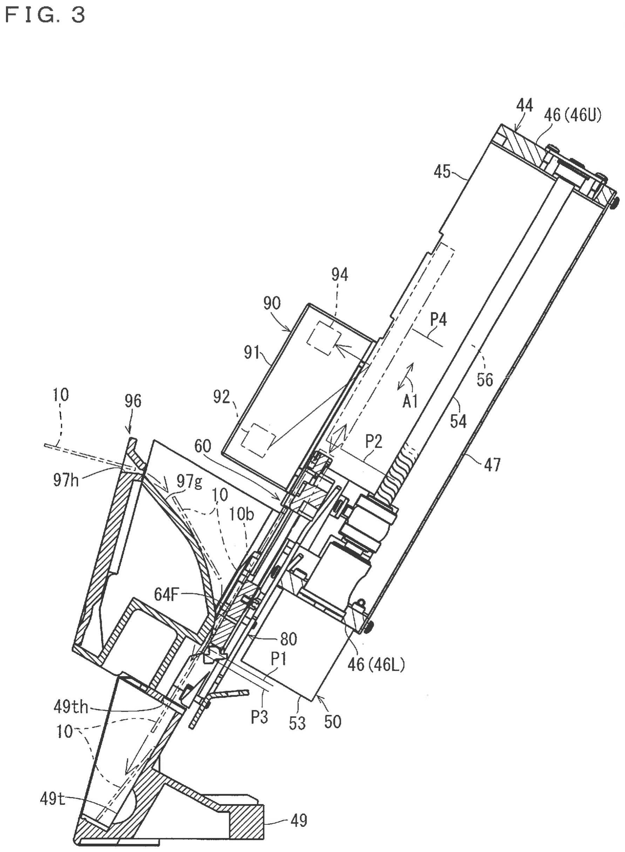

Fig. 1 is a schematic perspective view illustrating a scanner 20. A housing 30 is illustrated by a dash-double-dot line in Fig. 1. Fig. 2 is a partially-exploded perspective view illustrating the scanner 20. Fig. 3 is a partial cross-sectional view along a III-III line in Fig. 1. In Fig. 1 and Fig. 3, a stage 60 is located in a discharge position P3. In Fig. 2, a setting guide 96, the stage 60, and a reading unit 90 are broken down on a supporting member 40. In Fig. 3, a setting position P1 and a reading position P2 are located on an inner side (upper side) of the discharge position P3.

The radiation image scanner 20 is an apparatus reading a radiation image from a surface 10a of an imaging plate 10. In the specification of the present application, the imaging plate is referred to as the IP in some cases. That is to say, the IP indicates the imaging plate in the present application.

The IP 10 is a storage medium having a flat shape with a radiation image formation layer 11 and storing a radiation image. The radiation image formation layer 11 is exposed to a side of the surface 10a of the IP 10. A surface of the radiation image formation layer 11 is synonymous with the surface 10a of the IP 10. The radiation image formation layer 11 is a layer storing energy of emitted radiation and emitting emission light corresponding to the stored energy. For example, the radiation image formation layer 11 is formed by applying photostimulable phosphor to one main surface of a film formed of resin. When the IP 10 is irradiated with X-ray passing through a photographing object from an X-ray generator, energy corresponding to strength of the X-ray is stored in the radiation image formation layer 11. Since the strength of the X-ray is based on distribution of an X-ray absorption region in the photographing object, distribution of the energy stored in the radiation image formation layer 11 is a radiation image of the photographing object by the X-ray. In this manner, the IP 10 stores the radiation image by the X-ray as a latent image.

The scanner 20 is an apparatus reading the radiation image from the radiation image formation layer 11 and generating image data of the radiation image. The scanner 20 includes the stage 60, an excitation light source 92, a photodetector 94, and the setting guide 96.

The IP 10 is supported on the stage 60 via the setting guide 96. The IP 10 supported on the stage 60 is irradiated with excitation light from the excitation light source 92. When the IP 10 is irradiated with the excitation light, the radiation image formation layer 11 of the IP 10 emits light. The photodetector 94 detects the emission light. The image data of the radiation image is generated based on a detection signal of the photodetector 94.

The image data of the radiation image generated by reading the IP 10 may be transmitted to the other computer (not shown) which can have communication with the scanner 20 by wireless communication or wired communication. The image data of the radiation image may be recorded in a data storage medium (for example, a flash memory) detachably attached to the scanner 20. Although the description of the present embodiment is based on an assumption of the IP 10 having one size, the IPs 10 with a plurality of sizes which can be held on the stage 60 may be prepared.

A configuration of each unit in the scanner 20 is described.

The scanner 20 includes a housing 30 housing the stage 60, the excitation light source 92, the photodetector 94, and the setting guide 96 (refer to Fig. 1).

The housing 30 includes an opening 31. The opening 31 is formed in one surface of side surfaces around the housing 30. The opening 31 is formed into a shape capable of exposing a part of the setting guide 96 including a slot 97h to an outer part. A user of the scanner 20 can insert the IP 10 into the slot 97h of the setting guide 96 through the opening 31.

A collection tray 49 is provided to a lower part of one side surface of the housing 30 such as a lower side of the setting guide 96, for example. The collection tray 49 includes a quadrangular tray part 49t having a bottom part and a surrounding wall part surrounding the bottom part, for example. The collection tray 49 is set in the housing 30 while the tray part 49t is inclined. A discharge port 49th is formed in an upper side part of the surrounding wall part of the tray part 49t (refer to Fig. 3). The IP 10 discharged from the stage 60 is discharged to the tray part 49t of the collection tray 49 through the discharge port 49th. The collection tray 49 may be detachably or non-detachably set in the housing 30.

A switch for receiving various instructions may be provided to the housing. A display apparatus for displaying various types of information may be provided to the housing. The display apparatus may be a liquid crystal display panel or an organic electro-luminescence (EL) display panel, for example.

A configuration of each unit provided to an inner part of the housing 30 is described.

The supporting member 40 is provided to the inner part of the housing 30. The supporting member 40 supports the stage 60, the excitation light source 92, the photodetector 94, and the setting guide 96. The supporting member 40 is described as an example; thus, a configuration of supporting each configuration in the housing 30 is not limited to the example described herein.

The supporting member 40 includes a base plate 41, an intermediate supporting plate 42, and a frame part 44.

The base plate 41 is a plate-like member disposed along a horizontal direction (direction perpendicular to a gravity direction) in a lower part of an inner space in the housing 30. Herein, the base plate 41 is formed into an elongated quadrangular plate-like shape. The base plate 41 can close a downward opening of the housing 30.

The intermediate supporting plate 42 is supported in an upright state on the base plate 41. The intermediate supporting plate 42 is made up of a back plate part 42a and a side plate part 42b continuously formed into an L-like shape. The back plate part 42a is provided upright from a back end portion of the base plate 41 toward an upward direction. The side plate part 42b is provided upright from a one lateral part of the base plate 41 toward an upward direction.

One lateral part of the frame part 44 is fixed to the side plate part 42b by screwing, for example. For example, the frame part 44 is supported by the intermediate supporting plate 42 in an oblique posture with respect to the gravity direction.

A circuit unit 43 may be supported by the intermediate supporting plate 42. The circuit unit 43 is a unit in which various electrical components are mounted to a circuit substrate, for example. The circuit unit may be a control unit executing various types of control of the scanner 20 or a power source circuit supplying electrical power to each unit of the scanner 20, for example. The circuit unit 43 may be supported by the other part different from the intermediate supporting plate 42 such as the base plate 41, the housing 30, or the frame part 44, for example.

The frame part 44 includes a pair of longitudinal direction side plates 45, a pair of short-side direction side plates 46, and a bottom plate 47. The bottom plate 47 has a rectangular plate-like shape elongated in one direction. Each of the pair of longitudinal direction side plates 45 is formed into a rectangular plate-like shape corresponding to a length of a long side of the bottom plate 47. The pair of longitudinal direction side plates 45 are supported in an upright state on a pair of long sides of the bottom plate 47. Each of the short-side direction side plates 46 is formed into a rectangular plate-like shape corresponding to a length of a short side of the bottom plate 47. The pair of short-side direction side plates 46 are supported in an upright state on a pair of short sides of the bottom plate 47. Accordingly, the frame part 44 has a configuration that the pair of longitudinal direction side plates 45 and the pair of short-side direction side plates 46 are continuously formed into a quadrangular frame-like shape. Since the bottom plate 47 is provided to a bottom of the frame part, the frame part 44 has a box-like shape having the bottom plate 47 as a bottom and surrounding one main surface side of the bottom by the pair of longitudinal direction side plates 45 and the pair of short-side direction side plates 46. An upper one and a lower one of the pair of short-side direction side plates 46 are distinguished as the short-side direction side plate 46U and the short-side direction side plate 46L, respectively, in some cases hereinafter. The frame part 44 is opened on a side opposite to the bottom plate 47. The pair of longitudinal direction side plates 45 and the pair of short-side direction side plates 46 are fixed to the bottom plate 47 by screwing or welding, for example.

As described above, the frame part 44 is supported by the intermediate supporting plate 42 in the oblique posture. The frame part 44 is opened to an obliquely upper side toward the same side as the opening 31.

The pair of longitudinal direction side plates 45 also extend in an oblique posture with respect to the gravity direction. Thus, an edge of the pair of longitudinal direction side plates 45 on a side opposite to the bottom plate 47 also extends in an oblique posture with respect to the gravity direction.

The excitation light source 92 and the photodetector 94 are attached to a part of the pair of longitudinal direction side plates 45 on a side opposite to the bottom plate 47. The excitation light source 92 and the photodetector 94 are located closer to the short-side direction side plate 46L on the lower side between the pair of short-side direction side plates 46. The excitation light source 92 emits the excitation light toward a side of the frame part 44, and the photodetector 94 detects light from the side of the frame part 44. The excitation light source 92 and the photodetector 94 are attached to the frame part 44 by screwing, for example. For example, the reading unit 90 has a configuration of housing the excitation light source 92 and the photodetector 94 in the case 91. The reading unit 90 is fixed to the pair of longitudinal direction side plates 45 to extend across the pair of longitudinal direction side plates 45.

The stage 60 is supported to be movable in an inner side of the excitation light source 92 and the photodetector 94 between the pair of longitudinal direction side plates 45. In the description hereinafter, a relative movement direction of the stage 60 with respect to the excitation light source 92 and the photodetector 94 may be referenced as a main scanning direction A1 for convenience in some cases. When the IP 10 held by the stage 60 passes through the inner side of the excitation light source 92 and the photodetector 94, the IP 10 is irradiated with the excitation light from the excitation light source 92, and the photodetector 94 detects the emission light of the IP 10 by the excitation light.

The frame part 44 supports an actuation plate 80. The actuation plate 80 is supported at a part of the pair of longitudinal direction side plates 45 closer to the short-side direction side plate46L on the lower side, and extends to an obliquely lower side than the short-side direction side plate 46L on the lower side, i.e. when the scanner 20 is positioned on a horizontal plane the actuation plate 80 extends obliquely and downwards from the short-side direction side plate 46L. The actuation plate 80 may be an actuation member not having a plate-like shape.

The setting guide 96 is attached to the actuation plate 80. The setting guide 96 is attached to the actuation plate 80 by screwing, for example.

A space where the stage 60 can be disposed is formed between the actuation plate 80 and the setting guide 96. The stage 60 extends to an obliquely lower side than the short-side direction side plate 46L on the lower side in the main scanning direction A1, and can be disposed in a position overlapped with the actuation plate 80.

The stage 60 is disposed between the actuation plate 80 and the setting guide 96 while extending to an obliquely lower side than the frame part 44. The stage 60 can be located in the setting position P1 and the discharge position P3 while extending to the obliquely lower side than the frame part 44. The setting position P1 is a position where the IP 10 is set in the stage 60, and the discharge position P3 is a position where the IP 10 is discharged. The discharge position P3 is a position on an obliquely lower side than the setting position P1.

The setting guide 96 includes a plate guide surface 97g. The plate guide surface 97g is a surface guiding the IP 10 from the slot 97h toward the stage 60 located in the setting position P1. When a user of the scanner 20 inserts the IP 10 into the slot 97h, the IP 10 is guided to slide down the plate guide surface 97g. Accordingly, the IP 10 is set in the stage 60 in the setting position P1.

The collection tray 49 is located on an obliquely lower extension of the actuation plate 80 The IP 10 discharged from the stage 60 falls into the collection tray 49, and is collected while the stage 60 is located in the discharge position P3.

The excitation light source 92 irradiates the IP 10 with the excitation light. The excitation light is light for exciting the radiation image formation layer 11, and is laser light with a specific wavelength exciting the radiation image formation layer 11, for example.

The excitation light source 92 may have a configuration including a laser light source emitting laser light as the excitation light and a micro electro mechanical systems (MEMS) mirror. For example, also applicable is a configuration that a laser light source is reflected by a MEMS mirror so that an emission destination of the laser light from the laser light source is moved along a vertical scanning direction A2 intersecting with (perpendicular to) the main scanning direction A1 on the surface 10a of the radiation image formation layer 11. A galvanometer mirror or a polygon mirror, for example, can also be used for the configuration of the mirror in place of the micro electro mechanical systems (MEMS) mirror. Configurations of a lens system is additionally necessary depending on the configuration of the mirror, but can be used for the scanner by appropriating combining them.

The photodetector 94 is a sensor detecting light emitting from the IP 10 by the excitation light and outputting a signal corresponding strength thereof. Image data of the radiation image is generated based on the signal of the photodetector 94.

The photodetector 94 may have a configuration that elements detecting the light are arranged in line. For example, the photodetector 94 may be disposed to have a posture where an arrangement direction of the elements is parallel to the vertical scanning direction A2. The elements detecting the light may be a silicon photomultiplier, a photomultiplier, or a photodiode, for example.

In the present embodiment, the excitation light source 92 and the photodetector 94 are integrally formed as the reading unit 90. For example, the excitation light source 92 and the photodetector 94 are integrally formed while being housed in the module case 91. An elongated reading slit is formed along the vertical scanning direction A2 in a part of the module case 91 facing a side of the supporting member 40 from the photodetector 94. The excitation light is emitted toward the IP 10 through the reading slit. The photodetector 94 detects the emission light of the IP 10 through the reading slit.

The laser light by the excitation light source 92 enters the surface of the radiation image formation layer 11 of the IP 10 held on the stage 60 during movement of the stage 60 along the main scanning direction A1, and the emission destination of the laser light is moved along the vertical scanning direction A2. Accordingly, the surface 10a of the radiation image formation layer 11 sequentially generates the emission light along a line along the vertical scanning direction A2.

The photodetector 94 is provided in a position where the emission light of the radiation image formation layer 11 generated by the laser light from the excitation light source 92 can be detected. For example, the excitation light source 92 is disposed to irradiate the IP 10 with the laser light from an oblique direction, and the photodetector 94 is disposed in a front side of a position of the IP 10 irradiated with the laser light. Then, when the surface 10a of the radiation image formation layer 11 sequentially generates the emission light along the line along the vertical scanning direction A2, the photodetector 94 detects the emission light.

When scanning is repetitively performed in the vertical scanning direction A2 by the excitation light source 92 and the photodetector 94 during movement of the stage 60, the photodetector 94 reads the radiation image of a wide surface of the IP 10 such as the whole IP 10, for example.

It is not necessary to perform reading during movement of the stage 60. Also applicable is a configuration that the excitation light source 92 and the photodetector 94 are moved while the stage 60 is stopped, for example. Also applicable is a configuration that the stage 60 and both of the excitation light source 92 and the photodetector 94 are moved.

### <Stage and configuration for moving stage>

The stage 60 is moved along the main scanning direction A1 while holding the IP 10. Described is a configuration for movably supporting the stage 60.

The stage 60 can be moved between edge portions of the pair of longitudinal direction side plates 45 on a side opposite to the bottom plate 47 along the main scanning direction A1. A protrusion dimension of the short-side direction side plate 46L on the lower side from the bottom plate 47 is smaller than that of the longitudinal direction side plate 45 from the bottom plate 47. Thus, the stage 60 can be moved to the obliquely lower side across the short-side direction side plate 46L on the lower side from between the pair of longitudinal direction side plates 45 along the main scanning direction A1. That is to say, the stage 60 can reciprocate between the position between the pair of longitudinal direction side plates 45 and the position protruding to the lower side between the pair of longitudinal direction side plates 45 along the main scanning direction A1 (refer to Fig. 3).

The stage 60 has a configuration of being able to be moved and driven by a stage body moving mechanism 50. The stage body moving mechanism 50 includes a movement drive part 52 and a pair of guide rods 56.

The movement drive part 52 is a part applying drive force to the stage 60 along the main scanning direction A1. In the present embodiment, the movement drive part 52 includes a motor 53 and a screw shaft part 54. The screw shaft part 54 is a rod-like member around which a screw groove is formed. Fig. 3 illustrates the screw groove in a part of the screw shaft part 54. The screw shaft part 54 is rotatably supported by the pair of short-side direction side plates 46 across the pair of short-side direction side plates 46. The motor 53 is fixed to the frame part 44 in a non-rotatable form. For example, the motor 53 is fixed to an outer side of the short-side direction side plate 46L on the lower side in a non-rotatable form. A shaft of the motor 53 is fixed to the screw shaft part 54 in a relatively non-rotatable form, and the screw shaft part 54 is rotationally driven in a normal rotation direction or a reverse direction in accordance with a rotation of the motor 53 in the normal rotation direction or the reverse direction. Rotational movement of the shaft of the motor 53 may be transmitted to the screw shaft part 54 via a transmitter such as a gear or a pulley.

The stage 60 includes a through hole 62h1 with a screw groove (refer to Fig. 2). The screw shaft part 54 is screwed in the through hole 62h1 described above. The stage 60 in which the screw shaft part 54 is screwed is driven to be moved along the main scanning direction A1 by rotation of the screw shaft part 54.

The guide rod 56 is an elongated rod-like member, and is fixed to the pair of short-side direction side plates 46 across the pair of short-side direction side plates 46. The guide rod 56 is inserted into a guide hole 62h2 or a guide groove formed in the stage 60 (refer to Fig. 2). Accordingly, the guide rod 56 can have a role to suppress rotation of the stage 60 around the screw shaft part 54. The plurality of (two in the present embodiment) guide rods 56 are provided herein, but one guide rod 56 is also applicable.

The movement direction of the stage 60 by the movement drive part 52 is not limited to the above example, but may also be a horizontal direction or a gravity direction. It is sufficient that the movement drive part 52 is an actuator moving the stage 60, thus may be a linear motor, for example, in addition to the above configuration, and a mechanism of moving the stage 60 by a belt is also applicable. It is also appliable to move the reading unit 90 and read the IP on the stage instead of moving the stage. When the reading unit is a sensor which can read planar surface information of the IP, also assumed is a case where any of the stage and the reading unit is not moved.

The stage 60 reciprocates between the setting position P1 and the reading position P2 by the stage body moving mechanism 50.

In the setting position P1, a part of the stage 60 closer to an upper end is disposed on the short-side direction side plate 46L, and an intermediate portion and a lower end portion in the longitudinal direction of the stage 60 extends to a lower side from the short-side direction side plate 46L on the lower side.

The stage 60 includes a supporting surface 64F facing a side opposite to the bottom plate 47. The supporting surface 64F is inclined with respect to the gravity direction. Herein, the supporting surface 64F is inclined along the same inclination direction as an extension direction of the longitudinal direction side plate 45. That is to say, the supporting surface 64F is inclined to be directed to an obliquely upper side.

The stage 60 located in the setting position P1 can receive the IP 10 guided by the setting guide 96. The setting position P1 needs not be necessarily set in the position described above, but may be set between the pair of longitudinal direction side plates 45 in accordance with a positional relationship with the setting guide 96, for example.

The reading position P2 is a position where the excitation light source 92 and the photodetector 94 reads the radiation image, that is to say, the photodetector 94 reads the radiation image of the IP 10 in accordance with the excitation light from the excitation light source 92. In the present embodiment, the reading position P2 is set in the position between the pair of longitudinal direction side plates 45. More specifically, the reading position P2 is set in the position closer to the lower side between the pair of longitudinal direction side plates 45.

That is to say, the reading unit 90 including the excitation light source 92 and the photodetector 94 is fixed between outward edge portions of the pair of longitudinal direction side plates 45. The reading unit 90 is located closer to the setting position P1 described above between the pair of longitudinal direction side plates 45. When the IP 10 on the stage 60 passes through the position facing the reading slit of the reading unit 90, the radiation image of the IP 10 is read. The reading position P2 may also be grasped as a position where the IP 10 on the stage 60 reaches the reading slit and reading is started.

Differing from the above example, also assumed is a case where the reading unit moves along the main scanning direction A1 to read the radiation image of the IP remaining in a fixed position to read the radiation image or a case where a three-dimensional sensor reads the radiation image of the IP remaining in a fixed position. In this case, the position where the IP remaining in the fixed position is held is the reading position P2.

In the present embodiment, the stage 60 is also moved to the discharge position P3 by the stage body moving mechanism 50. The discharge position P3 is set in a position farther away from the setting position P1 in relation to the reading position P2. The configuration is not limited to the present example, but the IP 10 of the stage 60 may be discharged in a position different from the discharge position P3 such as the setting position P1 by the other mechanism, for example.

As described above, the collection tray 49 is provided to the lower side of the discharge position P3. The discharge port 49th of the collection tray 49 is opened on a lower extension of the stage 60. The IP 10 slides down the stage 60 in the discharge position P3 and is discharged to the collection tray 49 through the discharge port 49th of the collection tray 49.

In the present embodiment, the stage 60 is also moved to a back position P4 by the stage body moving mechanism 50 (refer to Fig. 3). The back position P4 is set in a position on an opposite side of the reading position P2 from the setting position P1. That is to say, the stage 60 can be moved from the setting position P1 to the back position P4 through the reading position P2. In the back position P4, it is applicable that the IP 10 on the stage 60 is not covered by the reading unit 90 but is exposed, or is covered by the other member. Any configuration is applicable as long as the IP 10 is not accidently exposed.

An operation of the stage body moving mechanism 50 described above is controlled by a controller 43P (refer to Fig. 1). The controller 43P is made up of a computer including at least one processor and a storage, for example. The processor is a central processing unit (CPU), for example, and is made up of an electrical circuit. When the processor executes a reading program, various functions for reading are achieved. When the controller 43P controls a rotational direction and a rotational amount of the motor 53 described above, movement of the stage 60 along the main scanning direction A1 is controlled. The controller 43P is assumed to be a circuit achieved by the circuit unit 43 described above.

The controller 43P may control the excitation light source 92 and the photodetector 94 using the reading unit 90. The controller 43P may perform various types of signal processing for generating the radiation image based on a signal detected by the photodetector 94, image processing, and display processing for a display apparatus, for example.

### <Stage>

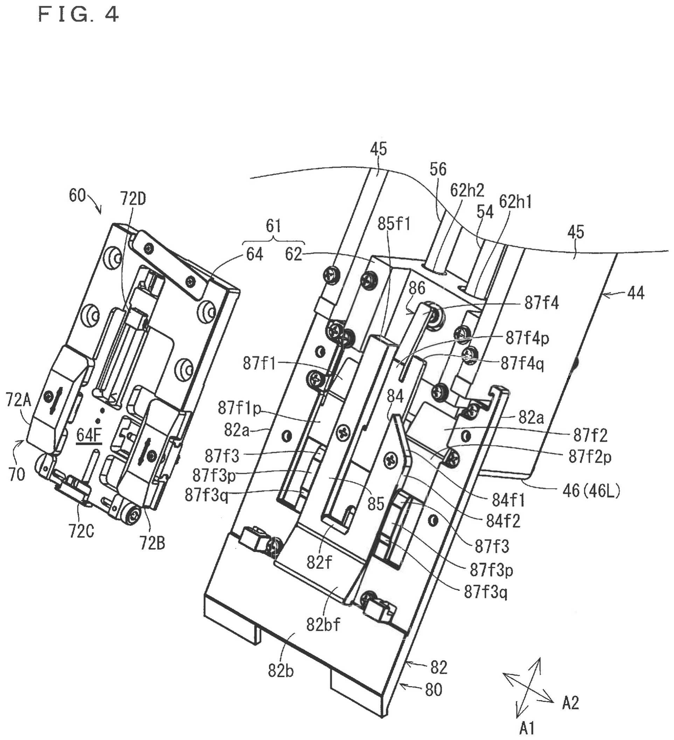

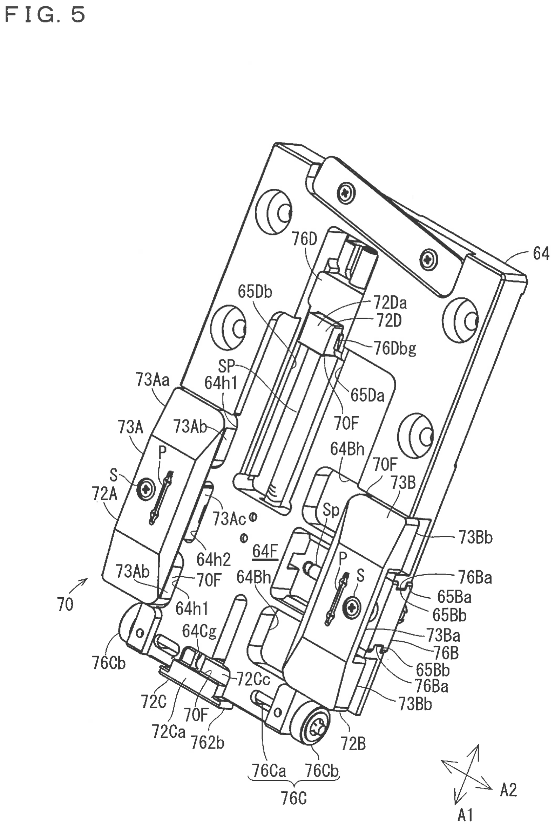

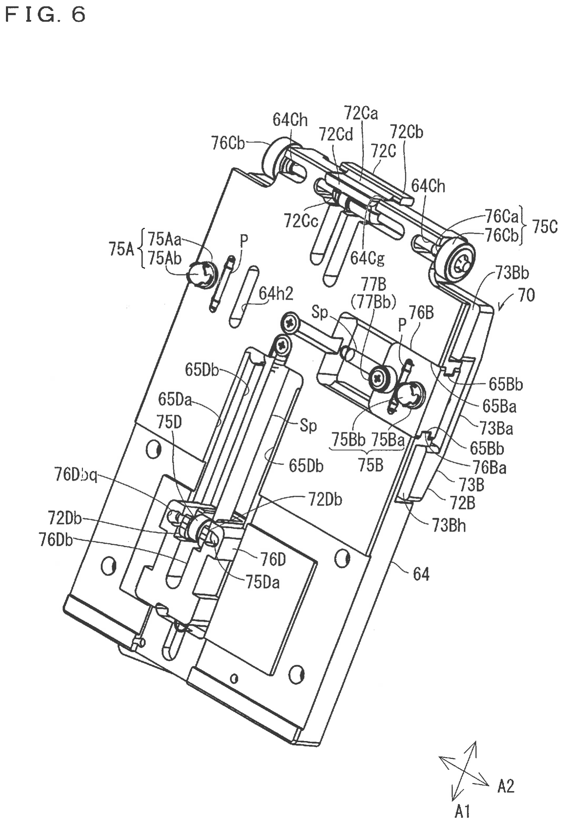

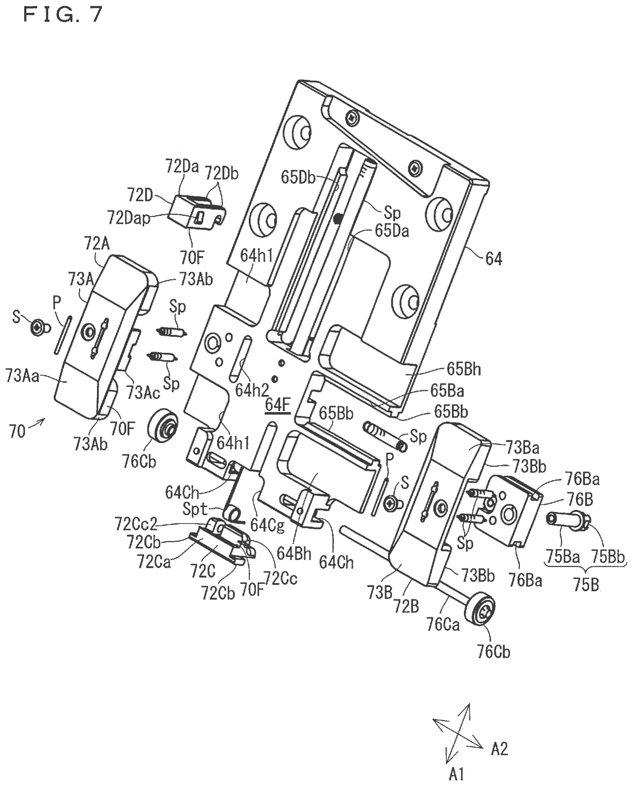

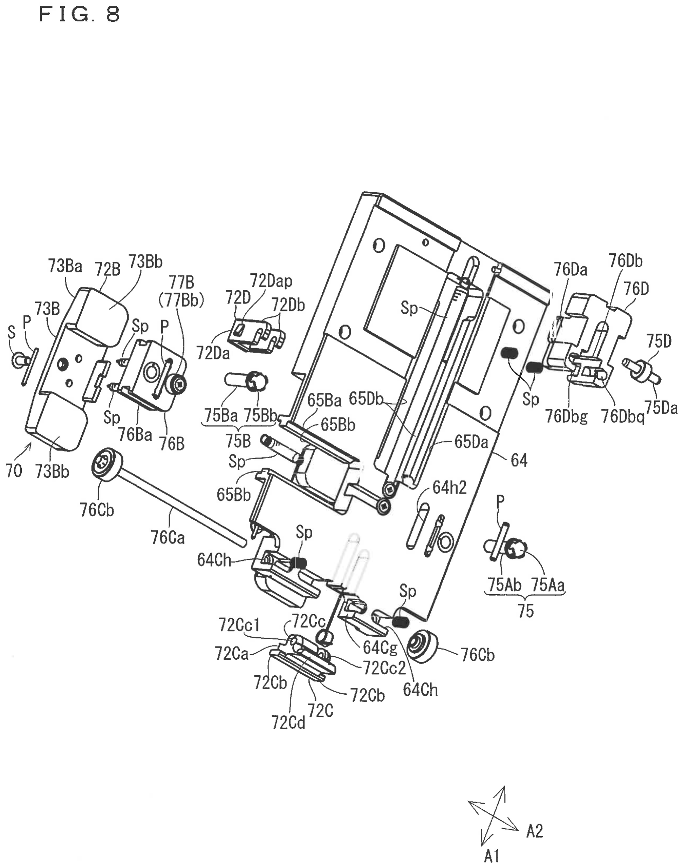

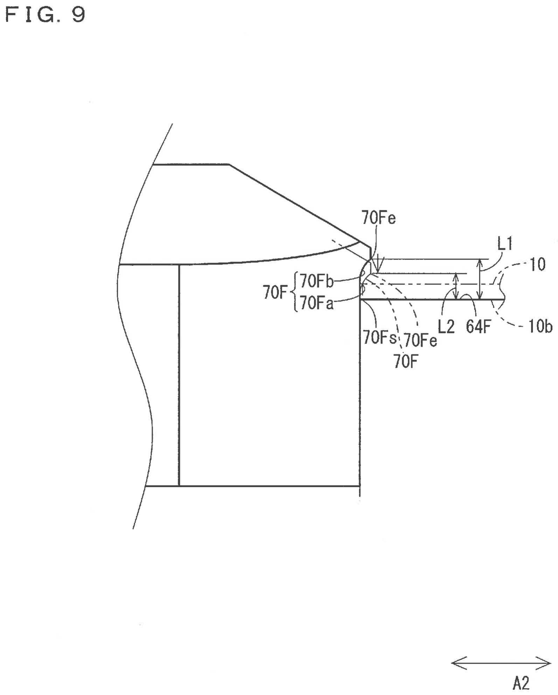

Described is a whole configuration of the stage 60. Fig. 4 is a perspective view of a partially-exploded stage 60 located on a lower end portion of the frame part 44. Fig. 5 and Fig. 6 are perspective views each illustrating the stage 60, and Fig. 7 and Fig. 8 are exploded perspective views each illustrating the stage 60. A movable support 62 is omitted in Fig. 5 to Fig. 8. Fig. 9 is an enlarged view illustrating a positioning part of the stage 60.

The stage 60 includes a stage body 61 and a positioning mechanism 70.

The stage body 61 includes the supporting surface 64F which can have surface contact with a back surface 10b of the IP 10. In the present embodiment, the stage body 61 includes the movable support 62 and a plate-like part 64.

The movable support 62 is formed into a rectangular parallelepiped shape. The through hole 62h1 is formed in the movable support 62 (refer to Fig. 2). As described above, the screw shaft part 54 which can be rotationally driven in both the normal rotation direction and the reverse direction by the motor 53 is screwed in the through hole 62h1. When the screw shaft part 54 is rotated in the normal rotation direction, the stage 60 can be moved to one side along the screw shaft part 54, and when the screw shaft part 54 is rotated in the reverse direction, the stage 60 can be moved to the other side along the screw shaft part 54. A structure referred to as a ball screw, for example, is applicable to such a structure.

The guide hole 62h2 parallel to the through hole 62h1 described above is formed in the movable support 62. Thus, the movable support 62 is moved and driven in both the normal direction and the reverse direction along the main scanning direction A1 in accordance with rotation of the screw shaft part 54 screwed in the through hole 62h1 in the normal rotation direction or the reverse direction while being guided by the guide rod 56 inserted into the guide hole 62h2.

The plate-like part 64 is formed into a shape planarly extending to be larger than the IP 10 such as a quadrangular plate-like shape herein. The plate-like part 64 needs not be necessarily formed into the quadrangular plate-like shape, but may be formed into the other shape such as an oval shape.

The supporting surface 64F is provided to a surface on one side of the plate-like part 64. The supporting surface 64F may extend to be larger than the IP 10. When a plurality of sizes are assumed as the IP 10, the supporting surface 64F may extend to be larger than the largest IP 10.

More specifically, the plate-like part 64 is formed into an elongated rectangular shape along one direction (the main scanning direction A1 herein). A part of a surface on the other side (the surface on a side opposite to the supporting surface 64F) of the plate-like part 64 on one side of the longitudinal direction of the plate-like part 64 is fixed to the movable support 62. Fixation is performed by screwing, for example. The plate-like part 64 is supported by the movable support 62 in a cantilever form so as to extend from the movable support 62 toward a side of the setting position P1 along the main scanning direction A1. A part of the surface on one side of the plate-like part 64 closer to the lower side is concaved more than the other part. A bottom surface of the concave part is the supporting surface 64F which can have surface contact with the back surface 10b of the IP 10.

The plate-like part 64 and the supporting surface 64F are inclined with respect to the gravity direction (lower direction) and the supporting surface 64F is directed to an obliquely upper direction while the stage 60 is supported by the supporting member 40, i.e. it is oblique and faces upwards. In the present embodiment, an inclination angle of the plate-like part 64 and the supporting surface 64F coincides with that of the longitudinal direction side plate 45 in the extension direction. The plate-like part 64 and the supporting surface 64F are moved along the main scanning direction A1 while being guided by the guide rod 56 and keeping a constant inclination angle. When the movable support 62 is moved closer to the short-side direction side plate 46L on the lower side, a part of the plate-like part 64 extending from the movable support 62 passes over the short-side direction side plate 46L on the lower side and extends to an obliquely lower side. Since the supporting surface 64F is inclined to be directed to an obliquely upper side in this state, the IP 10 supplied on the supporting surface 64F through the setting guide 96 can be received on the supporting surface 64F.

The supporting surface 64F may not be inclined with respect to the gravity direction. For example, the supporting surface 64F may extend along a horizontal direction perpendicular to the gravity direction, or may also extend along the gravity direction.

The positioning mechanism 70 is a mechanism for positioning the IP 10 in a regular posture on the supporting surface 64F. The regular posture is a position and an inclination state of the IP 10 preset based on the stage 60, and is a predetermined position and inclination appropriate for reading by the reading unit 90.

A right-left sandwiching direction and an up-down sandwiching direction are described herein for convenience of description. The right-left sandwiching direction is a direction along the supporting surface 64F. The up-down sandwiching direction is a direction along the supporting surface 64F perpendicular to the right-left sandwiching direction. That is to say, the right-left sandwiching direction and the up-down sandwiching direction are perpendicular to each other on a plane parallel to the supporting surface 64F. In the present embodiment, the right-left sandwiching direction is a direction along the horizontal direction perpendicular to the gravity direction. Thus, in the present embodiment, the right-left sandwiching direction coincides with the vertical scanning direction A2. The right-left sandwiching direction is referred to as the right-left sandwiching direction A2 in some cases hereinafter. The right-left sandwiching direction A2 may be a direction intersecting with the horizontal direction. In the present embodiment, the up-down sandwiching direction is a direction perpendicular to the vertical scanning direction A2 along the supporting surface 64F. Thus, the up-down sandwiching direction coincides with the main scanning direction A1. The up-down sandwiching direction is referred to as the up-down sandwiching direction A1 in some cases hereinafter. The up-down sandwiching direction may be a direction different from the main scanning direction A1. That is to say, it is sufficient that the right-left sandwiching direction and the up-down sandwiching direction are directions intersecting with each other along the supporting surface 64F, and may also be referred to as the first direction and the second direction, respectively.

The positioning mechanism 70 has contact with the edge portion of the IP 10 supported on the supporting surface 64F to position the edge portion from the outer side thereof in the extension direction of the supporting surface 64F.

In the present embodiment, the positioning mechanism 70 includes a left positioning part 72A, a right positioning part 72B, a lower positioning part 72C, and an upper positioning part 72D. The left positioning part 72A and the right positioning part 72B perform positioning in the right-left sandwiching direction A2 on the IP 10 in the horizontal direction. The lower positioning part 72C and the upper positioning part 72D perform positioning in the up-down sandwiching direction A1 on the IP 10 in the up-down direction.

The IP 10 is moved to the reading position P2 while holding the IP 10 in the regular posture by the positioning mechanism 70. In the reading position P2, the radiation image of the IP 10 held on the stage 60 in the regular posture is read by the reading unit 90.

In the present embodiment, the stage 60 supports the IP 10 in a posture where a longitudinal direction of the IP 10 is inclined with respect to the horizontal direction. Specifically, the longitudinal direction of the plate-like part 64 and the supporting surface 64F on a side of one surface of the plate-like part 64 is inclined with respect to the horizontal direction, and a short-side direction thereof extends along the horizontal direction. Thus, when the IP 10 is supported on the stage 60 in a posture where the longitudinal direction of the IP 10 extends along the longitudinal direction of the plate-like part 64 and the supporting surface 64F, the longitudinal direction of the IP 10 is inclined with respect to the horizontal direction.

In the present embodiment, a minimum interval between the left positioning part 72A and the right positioning part 72B in the right-left sandwiching direction A2 (the horizontal direction) is smaller than that between the lower positioning part 72C and the upper positioning part 72D in the up-down sandwiching direction A1. In the present embodiment, a maximum interval between the left positioning part 72A and the right positioning part 72B in the right-left sandwiching direction A2 (the horizontal direction) is smaller than that between the lower positioning part 72C and the upper positioning part 72D in the up-down sandwiching direction A1. Thus, the stage 60 has a configuration appropriate to support the IP 10 in the posture where the longitudinal direction of the IP 10 extends along the longitudinal direction of the plate-like part 64 and the supporting surface 64F.

Regardless of the present embodiment, the stage may support the IP in a posture where a short-side direction of the IP is inclined with respect to the horizontal direction. For example, it is applicable that a longitudinal direction of the plate-like part and the supporting surface of the stage extends along the horizontal direction, and a short-side direction is inclined with respect to the horizontal direction.

### <Positioning mechanism>

The positioning mechanism 70 is described more specifically. As illustrated in Fig. 4 to Fig. 8, the positioning mechanism 70 includes the left positioning part 72A and the right positioning part 72B. The left positioning part 72A and right positioning part 72B are arranged with an interval along the right-left sandwiching direction A2. At least one of the left positioning part 72A and right positioning part 72B is moved along the right-left sandwiching direction A2. Accordingly, the left positioning part 72A and the right positioning part 72B have contact with the right and left edge portions of the IP 10 to sandwich the IP 10 supported on the supporting surface 64F along the right-left sandwiching direction A2. Accordingly, the IP 10 is positioned at a fixed position in the right-left sandwiching direction A2.

A character indicating a positional relationship of right, left, up, and down assigned to each of the positioning parts 72A, 72B, 72C, and 72D is assigned in accordance with the example of the positional relationship in the present embodiment, thus does not limit the positional relationship of right, left, up, and down of each of the positioning parts 72A, 72B, 72C, and 72D.

In the present embodiment, the left positioning part 72A is fixed to a fixed position on the stage body 61. The right positioning part 72B is moved close to and away from the positioning part 72A on the stage body 61 along the right-left sandwiching direction A2.

As described above, the positioning mechanism 70 includes the lower positioning part 72C and the upper positioning part 72D. The lower positioning part 72C and upper positioning part 72D are arranged with an interval along the up-down sandwiching direction A1. A least one of the lower positioning part 72C and upper positioning part 72D are moved along the up-down sandwiching direction A1. Accordingly, the lower positioning part 72C and the upper positioning part 72D have contact with the upper and lower edge portions of the IP 10 to sandwich the IP 10 supported on the supporting surface 64F along the up-down sandwiching direction A1. Accordingly, the IP 10 is positioned at a fixed position in the up-down sandwiching direction A1.

In the present embodiment, the lower positioning part 72C is fixed to a fixed position on the stage body 61 in at least one of the setting position P1 and the reading position P2. The upper positioning part 72D is moved close to and away from the lower positioning part 72C on the stage body 61 along the up-down sandwiching direction A1.

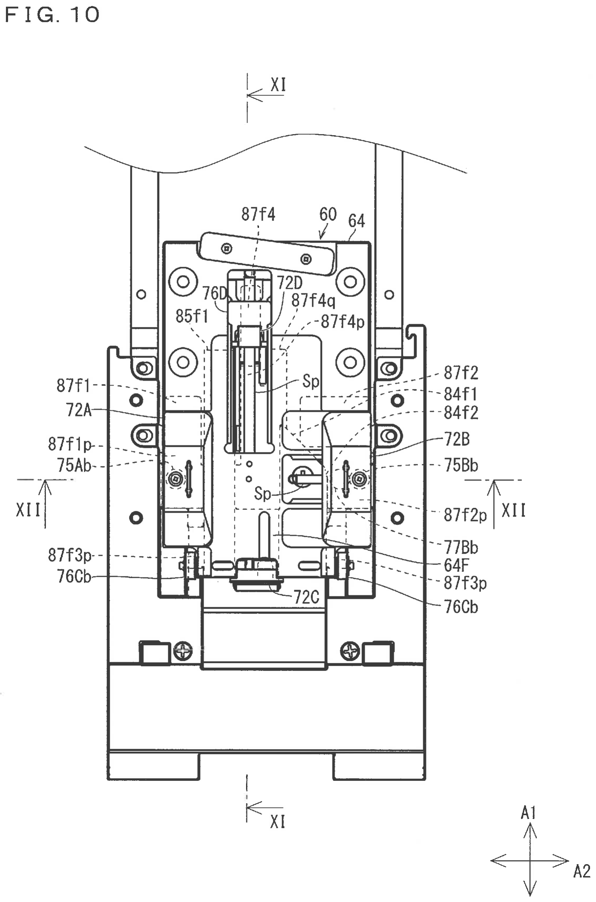

In the state where the IP 10 is located in the setting position P1, the left positioning part 72A and the right positioning part 72B are opened. Both the lower positioning part 72C and the upper positioning part 72D are opened (refer to Fig. 5 and Fig. 10). In this state, the IP 10 is set on the supporting surface 64F of the stage 60.

In the state where the IP 10 is located in the reading position P2, the left positioning part 72A and the right positioning part 72B are close to each other. Herein, the movable right positioning part 72B gets close to the left positioning part 72A in the fixed position. The edge of the IP 10 on a side of the right positioning part 72B has contact with the right positioning part 72B on a movable side, and the IP 10 is pressed to a side of the left positioning part 72A. Then, the edge of the IP 10 on the side of the left positioning part 72A has contact with the left positioning part 72A on a fixation side. Accordingly, the IP 10 is positioned in the right-left sandwiching direction A2.

In the state where the IP 10 is located in the reading position P2, the lower positioning part 72C and the upper positioning part 72D are close to each other. Herein, the movable upper positioning part 72D gets close to the lower positioning part 72C in the fixed position. The edge of the IP 10 on the upper side has contact with the upper positioning part 72D on a movable side, and the IP 10 is pressed to a side of the lower positioning part 72C. Then, the edge of the IP 10 on the lower side has contact with the lower positioning part 72C on a fixation side. Accordingly, the IP 10 is positioned in the up-down sandwiching direction A1.

In the present embodiment, the positioning parts 72A and 72C are disposed in a fixed position in the supporting surface 64F of the stage 60 in setting and reading. A state where the edge portion on one side of the IP 10 has contact with the left positioning part 72A and the edge portion on the lower side of the IP 10 has contact with the lower positioning part 72C is the regular posture.

Any of the left positioning part 72A and the right positioning part 72B may be the movable side and the fixation side. Both the left positioning part 72A and the right positioning part 72B may be moved to be opened and closed. Any of the lower positioning part 72C and the upper positioning part 72D may be the movable side and the fixation side. Both the lower positioning part 72C and the upper positioning part 72D may be moved to be opened and closed.

The positioning mechanism 70 needs not necessarily include all of four positioning parts 72A, 72B, 72C, and 72D. For example, the upper positioning part 72D may be omitted.

However, the positioning mechanism 70 preferably includes the positioning parts 72A, 72B, 72C, and 72D positioning the IP 10 from the surrounding four directions to position the IP 10 at the fixed position on the supporting surface 64F.

The positioning mechanism 70 includes a positioning surface 70F having contact with the edge portion of the IP 10 located on the supporting surface 64F. Accordingly, the positioning surface 70F positions the edge portion from the outer side thereof in the extension direction of the supporting surface 64F, and presses the edge portion against the supporting surface 64F.

Described in the present embodiment is an example that each of the positioning parts 72A, 72B, 72C, and 72D includes the positioning surface 70F described above. All of the positioning parts 72A, 72B, 72C, and 72D needs not include the positioning surface 70F in the sense described above. For example, some of the plurality of positioning parts may be a surface which does not have a function of pressing the edge portion of the IP against the supporting surface such as a surface perpendicular to the supporting surface, for example.

The positioning surface 70F includes a distal end edge located in front of the supporting surface 64F of the positioning surface 70F on a side farther away from the supporting surface 64F (refer to Fig. 9).

When an intersection part of the positioning surface 70F with the supporting surface 64F or a part thereof on an extension of the supporting surface 64F is a positioning reference part 70Fs, it is sufficient that the distal end edge 70Fe is located closer to a center side of the supporting surface 64F in relation to the positioning reference part 70Fs. Accordingly, a part of the positioning surface 70F protruding to an inner side with reference to the positioning reference part 70Fs can press the edge portion of the IP 10 toward the supporting surface 64F.

The positioning mechanism 70 is constituted so that a state can be changed between a first state and a second state. The first state is a state where the distal end edge 70Fe is disposed to be away from the supporting surface 64F by a first distance L1. The second state is a state where the distal end edge 70Fe is disposed to be away from the supporting surface 64F by a second distance L2 smaller than the first distance L1.

In the first state, the distal end edge 70Fe is located away from the supporting surface 64F by the first distance L1 larger than the second distance L2. Thus, even when the edge portion of the IP 10 comes off the supporting surface 64F with a large degree, the distal end edge 70Fe can be easily disposed on the edge portion of the IP 10 on a side opposite to the supporting surface 64F.

In the second state, the distal end edge 70Fe is located away from the supporting surface 64F by the second distance L2 smaller than the first distance L1. Thus, the edge portion of the IP 10 can be easily pressed toward the supporting surface 64F in a part of the positioning surface 70F on the inner side than the distal end edge 70Fe.

From this point, it is sufficient that the positioning operation of positioning the edge portion of the IP 10 is performed using the positioning surface 70F in the first state. It is sufficient that the excitation light source 92 and the photodetector 94 read the radiation image from the IP 10 in the second state.

It is sufficient that the positioning surface 70F has contact with the edge portion of the IP 10 as a whole to be able to position the edge portion from the outer side thereof and press the edge portion against the supporting surface; thus, a shape thereof is not particularly limited.

For example, the positioning surface 70F includes a main positioning surface 70Fa and a main pressing surface 70Fb (refer to Fig. 9).

The main positioning surface 70Fa is a surface extending along a direction perpendicular to the supporting surface 64F. Herein, the perpendicular direction includes a perpendicular direction within a margin of error such as a perpendicular direction within 90° ± 5° and preferably 90° ± 3°, for example.

The main pressing surface 70Fb is a surface protruding to the inner side, i.e. towards the center, of the supporting surface 64F from an edge of the main positioning surface 70Fa and away from a surface of the supporting surface 64F. The main pressing surface 70Fb is continuously formed with the main positioning surface 70Fa. The main pressing surface 70Fb protrudes from the main positioning surface 70Fa to face the supporting surface 64F.

A direction of the main pressing surface 70Fb extending from the main positioning surface 70Fa is optionally set. An angle of the direction of the extending main pressing surface 70Fb with respect to the main positioning surface 70Fa may be 90°, or may also be larger or smaller than 90°.

The main pressing surface 70Fb may be a curved surface or a planar surface, or may also be formed into a step-like form by a plurality of continuous level differences.

A boundary between the main positioning surface 70Fa and the main pressing surface 70Fb needs not be made up of a trough line where a planar surface and a planar surface intersect with each other, but may be a boundary where a planar surface and a curved surface intersect with each other, for example.

The main pressing surface 70Fb may be a curved surface or a planar surface, or may also be formed into a step-like form by a plurality of continuous level differences.

In the example in the present embodiment, the main pressing surface 70Fb is an inclined surface directed to a direction away from the supporting surface 64F toward the inner side of the supporting surface 64F from the edge of the front side of the supporting surface 64F. That is to say, a distance from the main pressing surface 70Fb to the supporting surface 64F increases toward the inner side of the supporting surface 64F from the edge of the front side of the supporting surface 64F contacting the main positioning surface 70Fa. The main pressing surface 70Fb is a curvature surface having a concave shape.

An edge of the main pressing surface 70Fb farthest away from the main positioning surface 70Fa is the distal end edge 70Fe.

The positioning surface 70F is not limited to the above example. It is sufficient that the positioning surface 70F has contact with the edge portion of the IP 10 as a whole to be able to position the edge portion from the outer side thereof and press the edge portion against the supporting surface. For example, the positioning surface may be made up of a surface wholly inclined with respect to the supporting surface or a wholly curved surface.

Described in the present embodiment is an example that the main positioning surface 70Fa and the main pressing surface 70Fb are integrally formed. However, the main positioning surface and the main pressing surface may be separately formed. In this case, it is applicable that the main pressing surface is moved to be close to and away from the supporting surface while a protrusion length of the main positioning surface from the supporting surface is kept constant so that a position of the distal end edge with respect to the supporting surface can be changed.

### <Positioning mechanism in right-left sandwiching direction>

As illustrated in Fig. 4 to Fig. 8, the left positioning part 72A is an elongated part extending along one side part of the plate-like part 64 in the horizontal direction.

The left positioning part 72A includes a positioning body part 73A and a height direction driven member 75A.

The positioning body part 73A includes an elongated body 73Aa, a pair of leg parts 73Ab, and an intermediate extension piece 73Ac.

The body 73Aa has a flat shape elongated along the up-down sandwiching direction A1, and is disposed on one side part of the plate-like part 64.

The pair of leg parts 73Ab protrude to the side of the plate-like part 64 from both ends of the body 73Aa. The pair of leg parts 73Ab are disposed in a guide concave part 64Ah1 formed in one side part of the plate-like part 64.

The intermediate extension piece 73Ac is an intermediate portion of the body 73Aa in the longitudinal direction and is a plate-like part protruding to the side of the plate-like part 64 from the edge portion on the side of the right positioning part 72B. The intermediate extension piece 73Ac is disposed in an elongated through hole 64Ah2 formed in one side part of the plate-like part 64.

Then, the left positioning part 72A is assembled to the plate-like part 64 while the pair of leg parts 73Ab are disposed in the corresponding pair of guide concave parts 64Ah1 and the intermediate extension piece 73Ac is disposed in through hole 64Ah2.

In this state, the left positioning part 72A protrudes from the supporting surface 64F. The left positioning part 72A can change the position to adjust the height with respect to the supporting surface 64F, that is to say, the protrusion length while the pair of leg parts 73Ab are guided by the corresponding pair of guide concave parts 64A1.

The position of the surfaces of the pair of leg parts 73Ab and the intermediate extension piece 73Ac on the side of the right positioning part 72B are aligned in the right-left sandwiching direction A2. The edge of the body 73Aa on the side of the right positioning part 72B protrudes to the side of the right positioning part 72B more than the pair of leg parts 73Ab and the intermediate extension piece 73Ac.

The positioning surface 70F of the left positioning part 72A is formed by the surfaces of the pair of leg parts 73Ab and the intermediate extension piece 73Ac on the side of the right positioning part 72B and the edge of the body 73Aa on the side of the right positioning part 72B.

A coil spring Sp as a biasing member intervenes between the plate-like part 64 and the left positioning part 72A. One end of the coil spring Sp is fixed to the left positioning part 72A, and the other end of the coil spring Sp is fixed to the plate-like part 64. For example, each end portion of the coil spring Sp passes through the left positioning part 72A or the plate-like part 64, and is fixed by a pin P, for example, so as not to come out of the left positioning part 72A or the plate-like part 64. The coil spring Sp biases the left positioning part 72A toward the plate-like part 64, that is to say, a direction in which the height is reduced.

The height direction driven member 75A includes the rod-like part 75Aa and a driven part 75Ab.

The rod-like part 75Aa passes through the plate-like part 64 and is connected to the body 73Aa. For example, the rod-like part 75Aa is connected to the body 73Aa at a position between the pair of leg parts 73Ab. They are connected by fastening and fixing a fastener S passing through the body 73Aa to an end portion of the rod-like part 75Aa. The fastener S may be a screw or a rivet, for example.

The end portion of the rod-like part 75Aa protruding to a side of a back surface of the plate-like part 64 is formed to be thicker than an intermediate portion of the rod-like part 75Aa. Accordingly, suppressed is that the rod-like part 75Aa comes out of a side of the supporting surface 64F. As described above, the fastener S passes through the body 73Aa, and a head part of the fastener S is hooked on the body 73Aa. Accordingly, hooking of the left positioning part 72A is retained. For example, allowed is movement of the left positioning part 72A in a height direction with respect to the plate-like part 64 between the head part of the fastener S and the end portion of the rod-like part 75Aa protruding to the side of the back surface of the plate-like part 64, and provided is an interval small enough to suppress the pair of leg parts 73Ab coming out of the guide concave part 64Ah1.

The driven part 75Ab is rotatably supported to the end portion of the rod-like part 75Aa protruding to the side of the back surface of the plate-like part 64. The driven part 75Ab is a spherical body or a roller, for example.

The height direction driven member 75A protrudes to the side of the back surface of the plate-like part 64. The protrusion length of the height direction driven member 75A from the side of the back surface of the plate-like part 64 is changed in conjunction with change of the height dimension of the left positioning part 72A from the plate-like part 64.

This left positioning part 72A is supported at a fixed position in a direction along the supporting surface 64F. In a direction perpendicular to the supporting surface 64F, the coil spring Sp constantly biases the left positioning part 72A to a direction in which the height dimension from the supporting surface 64F is reduced. When the height direction driven member 75A protruding to the side of the back surface of the plate-like part 64 is moved in a retracting direction, the left positioning part 72A can be moved in a direction in which the height dimension from the supporting surface 64F is increased against biasing force of the coil spring Sp.

The right positioning part 72B is provided to face the left positioning part 72A described above with an interval therebetween. Herein, the right positioning part 72B is provided with an interval between the right positioning part 72B and the left positioning part 72A along the right-left sandwiching direction A2.

Although the left positioning part 72A described above is disposed in a fixed position in the direction along the supporting surface 64F, the right positioning part 72B is supported on the stage body 61 to be movable along the right-left sandwiching direction A2 along the supporting surface 64F.

More specifically, a slit 65Ba is formed along the right-left sandwiching direction A2 in a part of the plate-like part 64 on a side opposite to the left positioning part 72A described above. The slit 65Ba is opened on an outer side along the right-left sandwiching direction A2. Long guide convex parts 65Bb extending along the right-left sandwiching direction A2 protrude on both side surfaces of the slit 65Ba.

The positioning mechanism 70 includes a sandwiching adjustable base 76B supported on the stage body 61 to be movable along the right-left sandwiching direction along the supporting surface 64F. The sandwiching adjustable base 76B is formed into a flat rectangular parallelepiped shape. Guide concave parts 76Ba into which the guide convex parts 65Bb described above are movably fitted are formed in both side parts of the sandwiching adjustable base 76B.

When the pair of guide convex parts 65Bb of the slit 65Ba are fitted into the pair of guide concave parts 76a of the sandwiching adjustable base 76B, the sandwiching adjustable base 76B is movably supported along the right-left sandwiching direction A2.

The coil spring Sp intervenes between a part of the plate-like part 64 on the back side of the slit 65Ba and the sandwiching adjustable base 76B. One end portion of the coil spring Sp is connected to a part of the plate-like part 64 on the back side of the slit 65Ba, and the other end portion thereof is connected to the sandwiching adjustable base 76B. The coil spring Sp constantly biases the sandwiching adjustable base 76B to be directed to the back side of the slit 65Ba.

A width direction driven member 77B protrudes to the back side of the plate-like part 64 from the sandwiching adjustable base 76B. The width direction driven member 77B includes a driven part 77Bb. The driven part 77Bb is a roller, for example. The driven part 77Bb is supported to be rotatable around an axis perpendicular to the supporting surface 64F. The driven part 77Bb is disposed in a position protruding more than the back surface of the plate-like part 64.

The coil spring Sp constantly biases the sandwiching adjustable base 76B to the back side of the slit 65Ba. When the driven part 77Bb is moved to a side of the opening of the slit 65Ba, the sandwiching adjustable base 76B can be moved to a right outer side along the right-left sandwiching direction A2.

The right positioning part 72B is supported in a height-adjustable form with respect to the supporting surface 64F on the sandwiching adjustable base 76B described above.

More specifically, the right positioning part 72B includes a positioning body part 73B and a height direction driven member 75B.

The positioning body part 73B has a bilaterally mirror symmetry structure with the positioning body part 73A described above, and includes a body 73Ba corresponding to the body 73Aa, a pair of leg parts 73Bb corresponding to the pair of leg parts 73Ab, and an intermediate extension piece 73Bc corresponding to the intermediate extension piece 73Ac. The positioning surface 70F is formed in a part of a left side of the positioning body part 73B.

The coil spring Sp biases the right positioning part 72B in the direction where the height is reduced as with the left positioning part 72A. The height direction driven member 75B is connected to the right positioning part 72B as with the height direction driven member 75B described above, and is moved in the height direction together with the right positioning part 72B.

A pair of guide concave parts 64Bh are formed in the other side part of the plate-like part 64. In order to allow the movement of the right positioning part 72B in the right-left sandwiching direction A2, the guide concave part 64Bh is formed in a concave longer than the guide concave part 64Ah1 in the right-left direction.

Then, the pair of leg parts 73Bb are disposed in the corresponding pair of guide concave parts 64Bh, and the right positioning part 72B is attached to the sandwiching adjustable base 76B disposed in the slit 65Ba while the intermediate extension piece 73Ac is disposed in the slit 65Ba.

In this state, the right positioning part 72B protrudes from the supporting surface 64F. The right positioning part 72B can change the position to adjust the height with respect to the supporting surface 64F, that is to say, the protrusion length while the pair of leg parts 73Bb are guided by the corresponding pair of guide concave parts 64Bh.

The coil spring Sp as the biasing member intervenes between the sandwiching adjustable base 76B and the right positioning part 72B. One end of the coil spring Sp is fixed to the right positioning part 72B, and the other end of the coil spring Sp is fixed to the sandwiching adjustable base 76B. For example, each end portion of the coil spring Sp is fixed by the pin P, for example, so as not to come out of the right positioning part 72B or the plate-like part 64 in the manner similar to the above description. The coil spring Sp biases the right positioning part 72B toward the plate-like part 64, that is to say, the direction in which the height is reduced.

The height direction driven member 75B includes a rod-like part 75Ba corresponding to the rod-like part 75Aa and a driven part 75Bb corresponding to the driven part 75Ab as with the height direction driven member 75A.

The rod-like part 75Ba passes through the sandwiching adjustable base 76B and is connected to a body 73Ba. The connection is performed by the fastener S, for example.

The end portion of the rod-like part 75Ba protruding to a side of a back surface of the sandwiching adjustable base 76B is formed to be thicker than an intermediate portion of the rod-like part 75Ba. In the manner similar to the supporting structure of the left positioning part 72A on the plate-like part 64, allowed is movement of the right positioning part 72B in a height direction with respect to the sandwiching adjustable base 76B by the head part of the fastener S and the end portion of the rod-like part 75Ba protruding to the side of the back surface of the sandwiching adjustable base 76B, and suppressed is the pair of leg parts 73Bb coming out of the guide concave part 64Bh.

The height direction driven member 75B protrudes to the side of the back surface of the sandwiching adjustable base 76B. The protrusion length of the height direction driven member 75B from the side of the back surface of the sandwiching adjustable base 76B is changed in conjunction with change of the height dimension of the right positioning part 72B from the sandwiching adjustable base 76B.

The coil spring Sp in the slit 65Ba constantly biases this right positioning part 72B toward the left positioning part 72A in the direction along the supporting surface 64F. When the width direction driven member 77B is moved to the right side in the right-left sandwiching direction A2, the sandwiching adjustable base 76B and the right positioning part 72B can be moved in the direction away from the left positioning part 72A against the biasing force.

In the direction perpendicular to the supporting surface 64F, the coil spring Sp constantly biases the right positioning part 72B to the direction in which the height dimension from the supporting surface 64F is reduced. When the height direction driven member 75B protruding to the side of the back surface of the plate-like part 64 is moved in the retracting direction, the right positioning part 72B can be moved in the direction in which the height dimension from the supporting surface 64F is increased against biasing force of the coil spring Sp.

Herein, the height direction driven member 75B passes through the sandwiching adjustable base 76B, thus can be moved along the right-left sandwiching direction A2 together with the right positioning part 72B and the sandwiching adjustable base 76B. Thus, even when the right positioning part 72B is moved to any position, the height of the right positioning part 72B can be changed by displacing the height direction driven member 75B.

The left positioning part 72A and the right positioning part 72B described above are an example of the height adjustable positioning part which can adjust the height with respect to the supporting surface 64F. The height adjustable positioning part may be supported in a height-adjustable form directly with respect to the stage body 61 as with the left positioning part 72A, or may also be supported in a height-adjustable form indirectly with respect to the stage body 61 as with the right positioning part 72B.

The right positioning part 72B described above is supported on the sandwiching adjustable base 76B in a height-adjustable form with respect to the supporting surface 64F, thus is an example of a biaxial direction adjustable positioning part which can adjust the height in both the right-left sandwiching direction A2 and the height direction.

The left positioning part 72A is an example of the fixed position adjustable positioning part facing the right positioning part 72B as the biaxial direction adjustable positioning part and supported on the sandwiching adjustable base 76B in a height-adjustable form at a fixed position in the direction along the supporting surface 64F.

### <Positioning mechanism in up-down sandwiching direction>

The lower positioning part 72C is a part located on one side of the plate-like part 64 in the up-down sandwiching direction A1, that is herein a part located on the lower side thereof. The lower positioning part 72C extends along the right-left sandwiching direction A2 along a lower boundary in a boundary surrounding the supporting surface 64F. The lower positioning part 72C protrudes from the supporting surface 64F more than the supporting surface 64F. A surface of the lower positioning part 72C directed to an inner side (an upper side) of the lower positioning part 72C is formed in the positioning surface 70F described above.

In the present embodiment, the lower positioning part 72C is an example of a discharge adjustable positioning part. The lower positioning part 72C is pivotably supported via a discharge base 76C, and is supported in a height-adjustable form with respect to the supporting surface 64F.

More specifically, the lower positioning part 72C includes a body 72Ca, a regulation piece 72Cb, a support shaft part 72Cc, and a receiving piece 72Cd.

The body 72Ca is formed into a rectangular parallelepiped shape. An edge portion of an inward portion of the body 72Ca away in front of the supporting surface 64F linearly protrudes to the side of the supporting surface 64F, and a remaining portion thereof has a planar surface. A part of the body 72Ca facing the plate-like part 64 is the positioning surface 70F described above.

The support shaft part 72Cc partially protrudes from the body 72Ca. A through hole 72Cc1 extending along the right-left direction is formed in the support shaft part 72Cc. A partial concave part 72Cc2 is formed in an intermediate portion of the support shaft part 72Cc in a width direction.

The regulation piece 72Cb protrudes in the right-left direction at a position in the body 72Ca away from the support shaft part 72Cc.

The receiving piece 72Cd extends from the body 72Ca to protrude to the side of the back surface of the plate-like part 64.

A partial concave part 64Cg is formed in a lower part of the plate-like part 64. An insertion concave part 64Ch is formed in a part of the lower part of the plate-like part 64 located on both sides of the concave part 64Cg.

The discharge base 76C includes a shaft 76Ca and a driven part 76Cb.

The shaft 76Ca passes through the insertion concave part 64Ch of the plate-like part 64 and an insertion hole 72Cc1 of the lower positioning part 72C while the lower positioning part 72C described above is disposed in the concave part 64Cg. In this state, both end portions of the shaft 76Ca protrude from both sides of the lower part of the plate-like part 64. The driven part 76Cb is attached to both ends of the shaft 76Ca. Accordingly, detachment of the shaft 76Ca is prevented. A central axis of the shaft 76Ca is a direction along the support shaft part 72Cc and more specifically, a direction along the right-left sandwiching direction A2.

Accordingly, the lower positioning part 72C is pivotably supported on the stage body 61 around a rotating shaft along the supporting surface 64F via the discharge base 76C.

A posture where the body 72Ca protrudes in a vertical direction with respect to the supporting surface 64F is a positioning posture of the lower positioning part 72C. A posture where the body 72Ca is inclined to be away from the supporting surface 64F is a discharge posture of the lower positioning part 72C. In this posture, the positioning surface 70F of the lower positioning part 72C is inclined toward an obliquely lower side. Accordingly, the IP 10 supported on the lower positioning part 72C is discharged to slide down to the lower side by gravity.

A helical torsion spring Spt as a biasing member is attached to the shaft 76Ca in the concave part 72Cc2 described above. One end of the helical torsion spring Spt has contact with the back surface of the plate-like part 64, and the other end thereof has contact with the body 72Ca. The lower positioning part 72C is rotated and biased toward the positioning posture by biasing force of the helical torsion spring Spt. When the receiving piece 72Cd is pressed toward the inner side of the plate-like part 64, the lower positioning part 72C can be pivoted toward the discharge posture against the biasing force of the helical torsion spring Spt.

The insertion concave part 64Ch in the lower part of the plate-like part 64 is formed into an elongated concave shape in a direction intersecting with (herein, perpendicular to) the supporting surface 64F. Thus, the shaft 76Ca can be moved in the direction intersecting with the supporting surface 64F.

The coil spring Sp as the biasing member intervenes between an inner surface of the insertion concave part 64Ch and the shaft 76Ca in the insertion concave part 64Ch. The coil spring Sp biases the shaft 76Ca to the side of the back surface of the plate-like part 64 with respect to the supporting surface 64F. Thus, the lower positioning part 72C is constantly biased to a direction in which a height with respect to the supporting surface 64F is reduced. When the driven part 76Cb is pressed to a direction protruding from the supporting surface 64F in this state, the lower positioning part 72C can protrude from the supporting surface 64F with a large degree against the biasing force of the coil spring Sp.

The upper positioning part 72D is provided to face the lower positioning part 72C described above with an interval therebetween. Herein, the upper positioning part 72D is provided with an interval between the upper positioning part 72D and the lower positioning part 72C along the up-down sandwiching direction A1.

Although the lower positioning part 72C described above is disposed in a fixed position in the direction along the supporting surface 64F, the upper positioning part 72D is supported on the stage body 61 to be movable along the up-down sandwiching direction A1 along the supporting surface 64F.

More specifically, a slit 65Da is formed along the up-down sandwiching direction A1 in a part of the plate-like part 64 on a side opposite to the lower positioning part 72C described above. The slit 65Da is opened on an outer side along the up-down sandwiching direction A1. Long guide convex parts 65Db extending along the up-down sandwiching direction A1 protrude on both side surfaces of the slit 65Da.

The positioning mechanism 70 includes a sandwiching adjustable base 76D supported on the stage body 61 to be movable along the up-down sandwiching direction A1 along the supporting surface 64F. The sandwiching adjustable base 76D is formed into a rectangular parallelepiped shape with a slit-like concave part 76Db. Guide concave parts 76Da into which the guide convex parts 65Db described above are movably fitted are formed in both side parts of the sandwiching adjustable base 76D.

Since the pair of guide convex parts 65Db of the slit 65Da are fitted into the pair of guide concave parts 76Da of the sandwiching adjustable base 76D, the sandwiching adjustable base 76D is supported to be movable along the up-down sandwiching direction A1 in the slit 65Da.

The coil spring Sp intervenes between a part of the plate-like part 64 on a back side of the slit 65Da and the sandwiching adjustable base 76D. One end portion of the coil spring Sp is connected to a part of the plate-like part 64 on the back side of the slit 65Da, and the other end portion thereof is connected to the sandwiching adjustable base 76D. The coil spring Sp constantly biases the sandwiching adjustable base 76D to be directed to the back side of the slit 65Da.

The sandwiching adjustable base 76D protrudes to the side of the back surface of the plate-like part 64 in the supporting state described above. When the protruding part of the sandwiching adjustable base 76D is pressed along the up-down sandwiching direction, the sandwiching adjustable base 76B can be moved to the upper side along the slit 65Da.

The upper positioning part 72D includes a body 72Da and a pair of side parts 72Db.

The body 72Da is formed into a rectangular parallelepiped shape. A part of the body 72Da facing the supporting surface 64F is the positioning surface 70F described above. The pair of side parts 72Db extend from the body 72Da toward the side of the back surface of the plate-like part 64. A gap is formed between the pair of side parts 72Db.

A driven part 75D is rotatably supported between tip end portions of the pair of side parts 72Db via a shaft 75Da. The driven part 75D is a roller, for example. The shaft 75Da extends along the right-left sandwiching direction A2, and the driven part 75D is supported to be rotatable around an axis along the right-left sandwiching direction A2.

When convex parts 72Dap in outer surfaces of the pair of side parts 72Db are fitted into guide concave parts 76Dbg formed in a pair of inner surfaces of the concave parts 76Db while the upper positioning part 72D is disposed in the slit-like concave parts 76Db of the sandwiching adjustable base 76D, the upper positioning part 72D is supported to be movable in a direction intersecting with (herein, perpendicular to) the supporting surface 64F. Since the convex part 72Dap has contact with a bottom of the guide concave part 76Dbg, movement of the upper positioning part 72D in a direction to the side of the back surface of the plate-like part 64 is regulated.

Both ends of the shaft 75Da protrude to an outer side from the pair of side parts 72Db. Concave parts 76Dbq in which both ends of the shaft 75Da can be disposed is formed in a pair of facing parts of the concave parts of the concave parts 76Db. Since both ends of the shaft 75Da is fitted into the concave parts 76Dbq, suppressed is that the upper positioning part 72D comes out of a side of a front surface of the plate-like part 64.

The coil spring Sp as the biasing member intervenes between both ends of the shaft 75Da and a back side part of the concave part 76Dbq. The upper positioning part 72D is biased to a direction in which a height with respect to the supporting surface 64F is reduced by biasing force of the coil spring Sp.

The driven part 75D supported by the upper positioning part 72D is disposed to protrude from the concave part 76Db to the side of the back surface of the plate-like part 64. When the driven part 75D is pressed toward the plate-like part 64, the upper positioning part 72D can be moved to increase a height with respect to the supporting surface 64F.

The lower positioning part 72C and the upper positioning part 72D described above are an example of the height adjustable positioning part which can adjust the height with respect to the supporting surface 64F. The height adjustable positioning part may be supported in a height-adjustable form indirectly with respect to the plate-like part 64 as with the lower positioning part 72C or the upper positioning part 72D.

The upper positioning part 72D is supported on the sandwiching adjustable base 76D in a height-adjustable form with respect to the supporting surface 64F, thus is an example of a biaxial direction adjustable positioning part which can adjust the height in both the up-down sandwiching direction A1 and the height direction.

The lower positioning part 72C is an example of the fixed position adjustable positioning part facing the upper positioning part 72D as the biaxial direction adjustable positioning part and supported on the sandwiching adjustable base 76D in a height-adjustable form at a fixed position in the direction along the supporting surface 64F.

### <Drive mechanism of positioning part>

The positioning parts 72A, 72B, 72C, and 72D described above may be driven by any configuration. For example, the positioning parts 72A, 72B, 72C, and 72D may be driven using force of driving the stage 60. The positioning parts 72A, 72B, 72C, and 72D may be driven by a drive part (for example, a motor or a solenoid actuator) different from a drive part such as a motor driving the stage 60 based on control of the controller 43P.

In the present embodiment, the positioning parts 72A, 72B, 72C, and 72D are driven using force of driving the stage 60, and a configuration therefor is described hereinafter.

As described above, the driven part 75Ab for moving the left positioning part 72A, the driven parts 75Bb and 77Bb for moving the right positioning part 72B, the receiving piece 72Cd and the driven part 76Cb for moving the lower positioning part 72C, and the driven part 75D and the sandwiching adjustable base 76D for moving the upper positioning part 72D protrude on the side of the back surface of the plate-like part 64. When the driven parts 75Ab, 75Bb, 76Cb, and 75D are moved on the side of the back surface of the plate-like part 64 in accordance with movement of the stage 60, the heights of the positioning parts 72A, 72B, 72C, and 72D with respect to the supporting surface 64F are changed. When the driven part 77Bb is moved on the side of the back surface of the plate-like part 64 in accordance with movement of the stage 60, the right positioning part 72B can be moved along the right-left sandwiching direction A2. When the sandwiching adjustable base 76D relatively moved with respect to the plate-like part 64 on the side of the back surface of the plate-like part 64 in accordance with the movement of the stage 60, the upper positioning part 72D can be relatively moved with respect to the plate-like part 64 along the up-down sandwiching direction A1. Furthermore, when the receiving piece 72Cd is moved on the side of the back surface of the plate-like part 64 in accordance with the movement of the stage 60, the posture of the lower positioning part 72C can be changed between the positioning posture and the discharge posture.

As illustrated in Fig. 4, the actuation plate 80 is disposed to be located on the side of the back surface of the plate-like part 64 in a movement route of the stage 60. Each of the parts 75Ab, 75Bb, 77Bb, 72Cd, 76Cb, 75D, and 76D described above has contact with the actuation plate 80 and is moved in accordance with the movement of the stage 60, and the positioning parts 72A, 72B, 72C, and 72D are thereby driven.

In the present embodiment, the actuation plate 80 includes a first actuation plate 82 and a second actuation plate 86. The first actuation plate 82 and the second actuation plate 86 are overlapped with each other while the first actuation plate 82 is located near the plate-like part 64. The actuation plate may have a configuration made up of one plate or three or more layers.

The mechanism of actuating each part described above is not limited to the above example. Each part described above may have contact with the frame part of the other component attached to the frame part and be moved. Each part described above may be driven via a link mechanism.

As described above, the actuation plate 80 is supported at a part closer to a lower side of the frame part 44 to extend to an obliquely lower side, i.e. to extend obliquely from a lower side of the frame part 44. The stage 60 can be overlapped with the actuation plate 80 while being located in the setting position P1. When the stage 60 is moved from the setting position P1 toward the reading position P2 or the discharge position P3, the stage 60 is relatively moved with respect to the actuation plate 80; thus, the actuation plate 80 can move each of the parts 75Ab, 75Bb, 77Bb, 72Cd, 76Cb, 75D, and 76D described above.

More specifically, the first actuation plate 82 includes a pair of support side parts 82a, a base part 82b, and elongated parts 82 and 85.

The base part 82b has a width corresponding to a width of the frame part 44. The pair of support side parts 82a extend in a parallel state from both right and left ends of the base part 82b. Since a tip end portion of the base part 82b is fixed to a part closer to the lower side of the frame part 44, the actuation plate 80 is fixed to the frame part 44. In this state, the base part 82b is supported at a position on an obliquely lower side away from the frame part 44.

A slope surface 82bf having a height gradually larger toward a lower side is formed in an intermediate portion of the base part 82b in the right-left direction. The IP 10 discharged from the stage 60 is guided toward the collection tray 49 by the slope surface 82bf.

Two elongated parts 84 and 85 extend from the intermediate portion of the base part 82b in the right-left direction toward the frame part 44. The pair of support side parts 82a and two elongated parts 84 and 85 extend with a gap in a parallel state.

The elongated part 84 includes guide surfaces 84f1 and 84f2. The guide surface 84f1 is an inclined surface inclined outward from a tip end of the elongated part 84 toward a base end. The guide surface 84f2 is continuously formed with a side of a base end of the guide surface 84f1 to extend along the up-down sandwiching direction A1. Since the driven part 77Bb has contact with the guide surface 84f2, the right positioning part 72B is kept in a state of being located away from the left positioning part 72A. Since the driven part 77Bb has contact with the guide surface 84f211 and is moved, the right positioning part 72B can be moved along the right-left sandwiching direction A2.

The elongated part 85 includes a direct contact surface 85f1. A surface directed to an upper side at a tip end of the elongated part 85 in the up-down sandwiching direction A1 is the direct contact surface 85f1. Since the sandwiching adjustable base 76D has contact with the direct contact surface 85f1, the upper positioning part 72D is kept in a state of being located away from the lower positioning part 72C.

The first actuation plate 82 includes a direct contact surface 82f located between the elongated parts 84 and 85. The direct contact surface 82f is directed to the upper side in the up-down sandwiching direction A1. Since the receiving piece 72Cd has direct contact with the direct contact surface 82f, the posture of the lower positioning part 72C is changed from the positioning posture to the discharge posture.

The second actuation plate 86 is overlapped with the first actuation plate 82 on a side opposite to the plate-like part 64. The second actuation plate 86 may be fixed to the first actuation plate 82, or may also be fixed to the frame part 44.

The second actuation plate 86 includes a part extending in a region between the pair of support side parts 82a of the first actuation plate 82 and between two elongated parts 84 and 85.

A left slope surface 87f1 is formed between one support side part 82a and the elongated part 85, and a right slope surface 87f2 is formed between the other support side part 82a and the elongated part 84 in the second actuation plate 86. The left slope surface 87f1 and the right slope surface 87f2 are inclined to be directed to a direction away from the plate-like part 64 toward the upper side along the up-down sandwiching direction A1. In other words, the left slope surface 87f1 and the right slope surface 87f2 described above are inclined to be away from a movement trajectory of the stage 60 from the setting position P1 toward the reading position P2.

A planar surface 87f1p is continuously formed on an obliquely lower side of the left slope surface 87f1, and a planar surface 87f2p is continuously formed on an obliquely lower side of the right slope surface 87f2. The planar surfaces 87f1p and 87f2p are surfaces parallel to the supporting surface 64F.

In a state where the driven parts 75Ab and 75Bb have contact with the planar surfaces 87f1p and 87f2p, the left positioning part 72A and the right positioning part 72B keep a constant height with respect to the supporting surface 64F. Since the driven parts 75Ab and 75Bb have contact with the slope surfaces 87f1p and 87f2p and are moved in the up-down sandwiching direction A1, the left positioning part 72A and the right positioning part 72B adjust a height with respect to the supporting surface 64F.

A lower slope surface 87f3 is formed between one support side part 82a and the elongated part 85 and between the other support side part 82a and the elongated part 84 in the second actuation plate 86. Two lower slope surfaces 87f3 are located obliquely below the left slope surface 87f1 and the right slope surface 87f2 described above. The lower slope surface 87f3 is inclined to be directed to a direction away from the plate-like part 64 toward the upper side along the up-down sandwiching direction A1.

A planar surface 87f3p is continuously formed on an obliquely lower side of the left slope surface 87f3. The planar surface 87f3p is a surface parallel to the supporting surface 64F. An opposite slope surface 87f3q is continuously formed on an obliquely lower side of the planar surface 87f3p. The opposite slope surface 87f3q is inclined in a direction opposite to the lower slope surface 87f3. That is to say, the opposite slope surface 87f3q is inclined to be away from the movement trajectory of the stage 60 from the setting position P1 toward the reading position P2.

In a state where the driven part 76Cb has contact with the planar surface 87f3p, the lower positioning part 72C keeps a constant height with respect to the supporting surface 64F. When the driven part 76Cb has contact with the lower slope surface 87f3 or the opposite slope surface 87fq, the lower positioning part 72C adjusts the height with respect to the supporting surface 64F.

An upper slope surface 87f4 is formed in a region in the second actuation plate 86 extending to a further upper side from the region between the elongated parts 84 and 85. The upper slope surface 87f4 is inclined to be directed to a direction away from the plate-like part 64 toward the upper side along the up-down sandwiching direction A1.

A planar surface 87f4p is continuously formed on an obliquely lower side of the upper slope surface 87f4. The planar surfaces 87f3p and 87f2p are surfaces parallel to the supporting surface 64F.

In a state where the driven part 75D has contact with the planar surface 87f4p, the upper positioning part 72D keeps a constant height with respect to the supporting surface 64F. When the driven part 75D has contact with the upper slope surface 87f4, the upper positioning part 72D adjusts the height with respect to the supporting surface 64F.

A direct contact surface 87f4q is formed adjacent to the upper slope surface 87f4 described above. The direct contact surface 87f4q is directed to the upper side in the up-down sandwiching direction A1. The direct contact surface 87f4q has contact with the sandwiching adjustable base 76D in the manner similar to the direct contact surface 84f1 to regulate the position of the sandwiching adjustable base 76D in the up-down sandwiching direction A1.

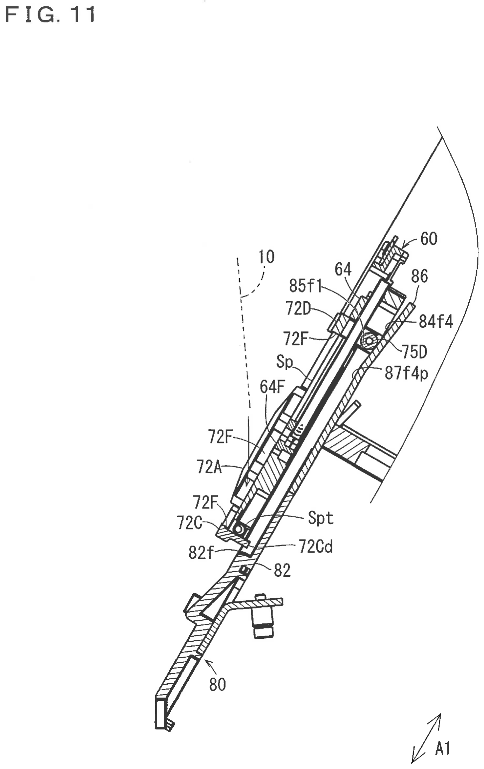

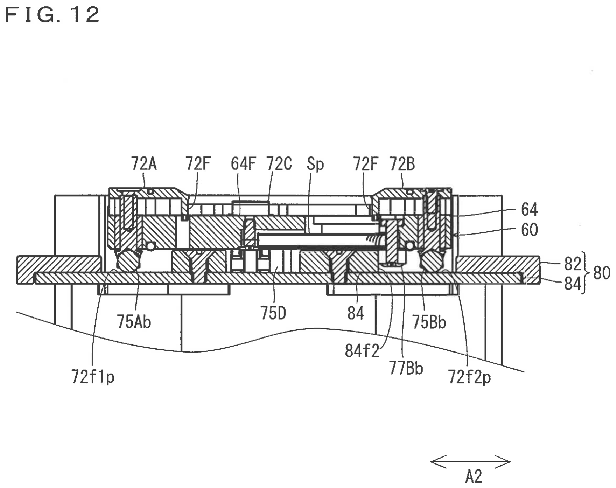

Fig. 10 to Fig. 12 illustrate the stage 60 located in the setting position P1. This state is the first state.

The left positioning part 72A is supported at the fixed position in the direction along the supporting surface 64F with respect to the plate-like part 64. The coil spring Sp biases the left positioning part 72A in the direction where the height with respect to the supporting surface is reduced. Since the driven part 75Ab has contact with the planar surface 87F1p, the left positioning part 72A is kept in the state of protruding from the supporting surface 64F with a large degree.

The coil spring Sp biases the right positioning part 72B toward the left positioning part 72A. Since the driven part 77Bb has contact with the guide surface 84f2, the right positioning part 72B is kept in a state of being located farther away from the left positioning part 72A.

The coil spring Sp biases the right positioning part 72B in the direction where the height with respect to the supporting surface 64F is reduced. Since the driven part 75Bb has contact with the planar surface 87f2p, the right positioning part 72B is kept in the state of protruding from the supporting surface 64F with a large degree.

The lower positioning part 72C is supported at the fixed position in the direction along the supporting surface 64F with respect to the plate-like part 64. The lower positioning part 72C is rotated and biased toward the positioning posture by the helical torsion spring Spt, and is kept in the positioning posture by biasing force thereof. The coil spring Sp biases the lower positioning part 72C in the direction where the height with respect to the supporting surface 64F is reduced. Since the driven part 76Cb has contact with the planar surface 87f3p, the lower positioning part 72C is kept in the state of protruding from the supporting surface 64F with a large degree.

The coil spring Sp biases the upper positioning part 72D toward the lower positioning part 72C. Since the sandwiching adjustable base 76D has contact with the direct contact surfaces 85f1 and 87f4q, the upper positioning part 72D is kept in a state of being located farther away from the lower positioning part 72C.

The coil spring Sp biases the upper positioning part 72D in the direction where the height with respect to the supporting surface 64F is reduced. Since the driven part 75D has contact with a part of the planar surface 87f4p or the slope surface 87f4 close to the planar surface 87f4p, the upper positioning part 72D is kept in the state of protruding from the supporting surface 64F with a large degree.

In this state, the distal end edge 70Fe of the positioning surface 70F of each of the positioning parts 72A, 72B, 72C, and 72D is kept in the state of being located away from the supporting surface 64F by the first distance L1 (refer to the positioning surface 70F shown by a solid line in Fig. 9).

In this state, the IP 10 is supplied to the stage 60 through the setting guide 96. The IP 10 is supported on the supporting surface 64F between the positioning parts 72A, 72B, 72C, and 72D.

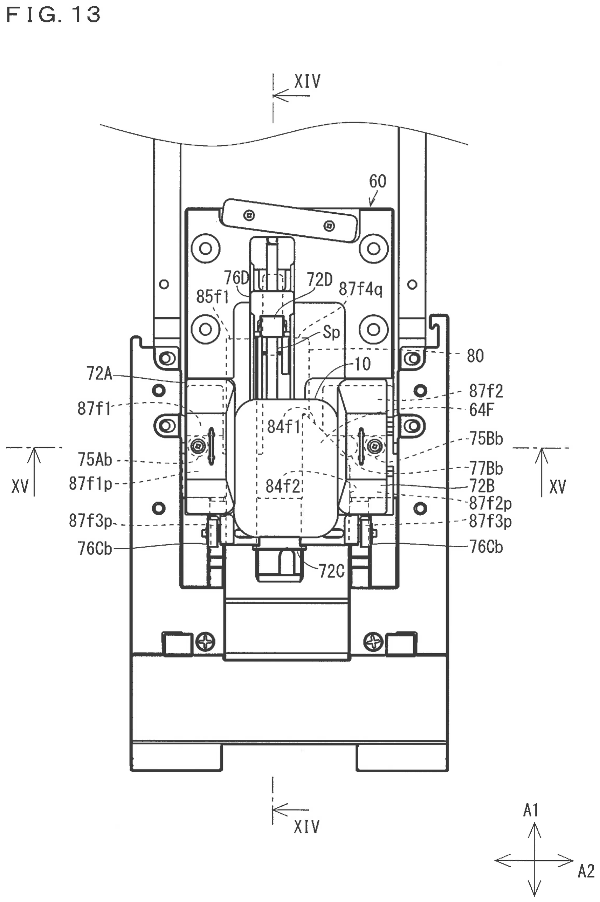

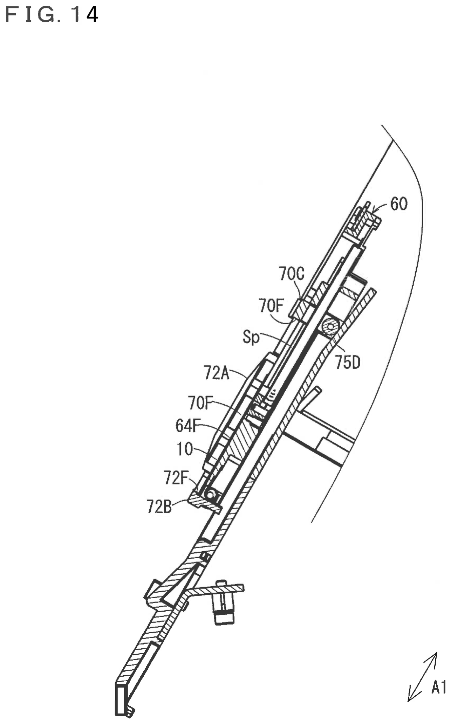

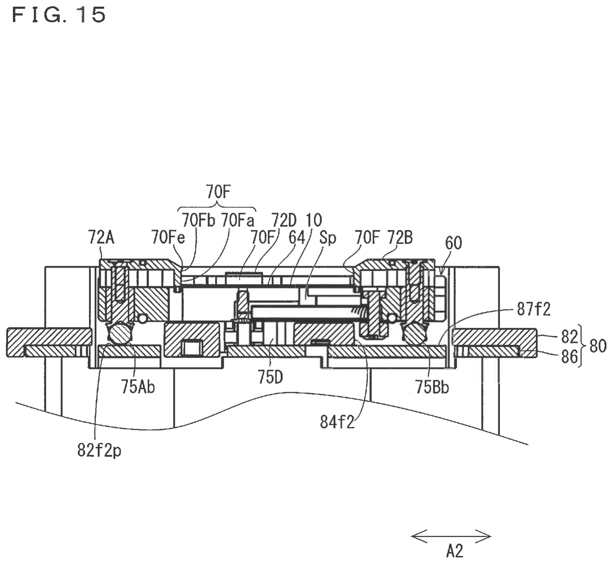

Fig. 13 to Fig. 15 illustrate a state immediately after the IP 10 is sandwiched between the left positioning part 72A and the right positioning part 72B halfway through the movement of the stage 60 from the setting position P1 to the reading position P2.

When the stage 60 is moved from the setting position P1 toward the reading position P2, the driven part 77Bb is moved from the guide surface 85f2 to the inclined guide surface 84f1, and rolls on the guide surface 84f1. As the stage 60 is moved from the setting position P1 to the reading position P2, the driven part 77Bb is moved to a left side in accordance with the inclination of the guide surface 84f1. Then, the right positioning part 72B is moved toward the left positioning part 72A by the biasing force of the coil spring Sp.

When the IP 10 is disposed on the supporting surface 64F, the right positioning part 72B has contact with the IP 10, and presses the IP 10 toward the left positioning part 72A. Even when the IP 10 is inclined on the supporting surface 64F, the right positioning part 72B presses the IP 10 toward the left positioning part 72A; thus, the inclination is corrected.

When an interval between the left positioning part 72A and the right positioning part 72B is substantially the same as a width of the IP 10, the right positioning part 72B is stopped while the IP 10 is sandwiched between the left positioning part 72A and the right positioning part 72B. The IP 10 is sandwiched and held between the left positioning part 72A and the right positioning part 72B by the biasing force of the coil spring Sp biasing the right positioning part 72B.

The sandwiching adjustable base 76D in the upper positioning part 72D keeps a state of having contact with the direct contact surfaces 85f1 and 87f4q. Since the stage 60 is moved in the obliquely upper direction with respect to the direct contact surfaces 85f1 and 87f4q, the upper positioning part 72D is relatively moved with respect to the stage 60, and gets close to the lower positioning part 72C by the movement of the stage 60. However, it is preferable that the IP 10 is not sandwiched between the lower positioning part 72C and the upper positioning part 72D (the lower positioning part 72C and the upper positioning part 72D are not close enough to sandwich the IP 10).

The reason is that when the IP 10 is sandwiched between the lower positioning part 72C and the upper positioning part 72D after the IP 10 is sandwiched between the left positioning part 72A and the right positioning part 72B, easily achieved is an inclination correction effect on the IP 10 by sandwiching between the left positioning part 72A and the right positioning part 72B.

In this state, the driven parts 75Ab, 75Bb, and 76Cb are located on the planar surfaces 87f1p, 87f2p, and 87f3p. Thus, the left positioning part 72A, the right positioning part 72B, and the lower positioning part 72C are kept in a state of protruding from the supporting surface 64F with a large degree as with the setting position P1.

The IP 10 is sandwiched between the left positioning part 72A and the right positioning part 72B while the distal end edge 70Fe keeps the large distance L1 from the supporting surface 64F. Thus, it is difficult for the edge portion of the IP 10 to be sandwiched between the supporting surface 64F and the main pressing surface 70Fb with strong force when the IP 10 is sandwiched and held. The inclination of the IP 10 is thereby easily corrected.

For example, it is assumed that the inclined IP 10 is sandwiched between the left positioning part 72A and the right positioning part 72B. In this case, there is a possibility that a corner part of the IP 10 is pressed against the positioning surface 70F. When the corner part of the IP 10 is sandwiched between the supporting surface 64F and the main pressing surface 70Fb with strong force, it is difficult for the corner part of the IP 10 to smoothly slide and be moved along the positioning surface 70F, and there is a possibility that the inclination of the IP 10 cannot be corrected.

When the supporting surface 64F and the main pressing surface 70Fb are located away from each other in sandwiching the IP 10 between the left positioning part 72A and the right positioning part 72B, the corner part of the inclined IP 10 can be wholly moved on the positioning surface 70F smoothly; thus, the inclination of the IP 10 is easily corrected.

Also in the lower positioning part 72C, the distal end edge 70Fe preferably keeps the large distance L1 from the supporting surface 64F so that the IP 10 can be smoothly moved on the positioning surface 70F.

Considered is that there is a high possibility that the upper positioning part 72D does not have contact with the IP 10 in sandwiching the IP 10 in the right-left direction. Thus, it is applicable that the driven part 75D reaches the slope surface 87f4 and a height of the upper positioning part 72D with respect to the supporting surface 64F starts to be reduced.

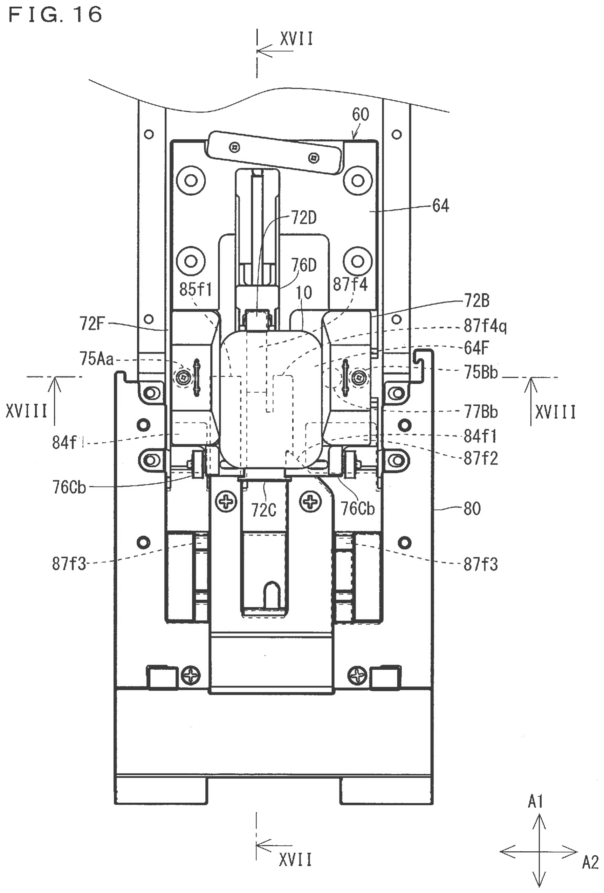

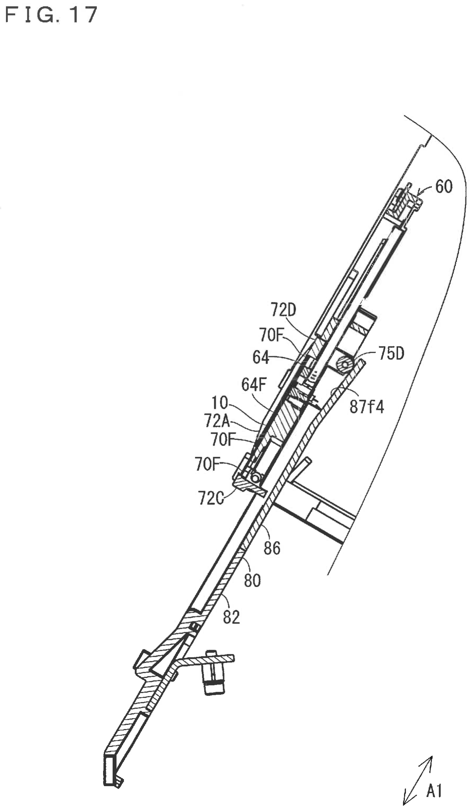

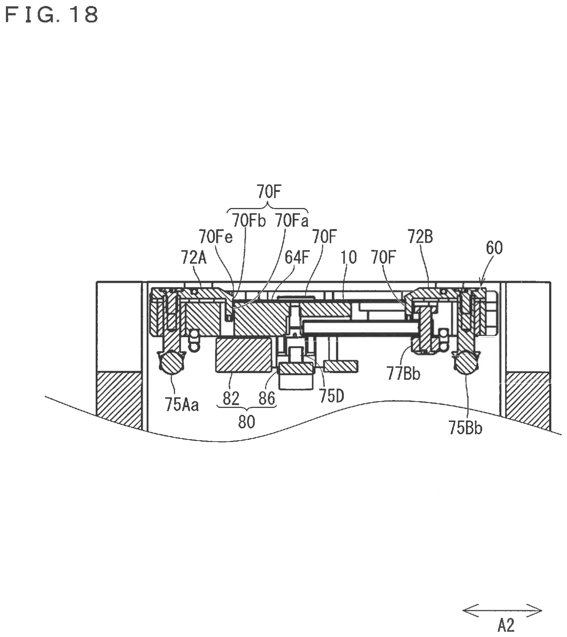

Fig. 16 to Fig. 18 illustrate a state where the IP 10 is completely positioned and held by the positioning parts 72A, 72B, 72C, and 72D. This state is the second state. The stage 60 is moved to the reading position P2 while this holding state is kept, and the radiation image of the IP 10 is read by the reading unit 90.

The driven part 77Bb of the right positioning part 72B is located on an obliquely upper side than the guide surface 84f1. Thus, the coil spring Sp biases the right positioning part 72B toward the left positioning part 72A, and the IP 10 is sandwiched between the left positioning part 72A and the right positioning part 72B by the biasing force of the coil spring Sp.

The sandwiching adjustable base 76D in the upper positioning part 72D is located on an obliquely upper side away from the direct contact surfaces 85f1 and 87f4q. Accordingly, the upper positioning part 72D is biased toward the lower positioning part 72C by the biasing force of the coil spring Sp, and the IP 10 is sandwiched between the upper positioning part 72D and the lower positioning part 72C by the biasing force of the coil spring Sp.

Thus, the IP 10 is positioned and held in a fixed position in the direction of the supporting surface 64F.

The driven parts 75Ab, 75Bb, 76Cb, and 75D are moved on the slope surfaces 87f1, 87f2, 87f3, and 87f4 and moved in a direction gradually away from the back surface of the plate-like part 64 halfway through the movement of the stage 60 toward the reading position P2. Accordingly, each of the positioning parts 72A, 72B, 72C, and 72D are moved by the biasing force of the coil spring Sp so that a height with respect to the supporting surface 64F is reduced. Finally, it is applicable that the driven parts 75Ab, 75Bb, 76Cb, and 75D pass over the slope surfaces 87f1, 87f2, 87f3, and 87f4 and the position thereof is not regulated by the actuation plate 80.

Since the height of each of the positioning parts 72A, 72B, 72C, and 72D is reduced, the distance of the distal end edge 70Fe with respect to the supporting surface 64F is changed from the first distance L1 to the small second distance L2. Then, the main pressing surface 70Fb presses the edge portion of the IP 10 toward the supporting surface 64F, warpage of the IP 10 is resolved, and the IP 10 approaches a flat state along the supporting surface 64F.

The stage 60 reaches the reading position P2 while the IP 10 is held in the flat state, and the radiation image of the IP 10 is read by the reading unit 90. The distance of the IP 10 from the excitation light source 92 and the photodetector 94 is kept as constant as possible; thus, a clearer image is obtained.

The stage 60 passes over the reading position P2 to reach the back position P4. When the stage 60 is returned from the back position P4 to the setting position P1, a reverse operation to the above operation is performed.

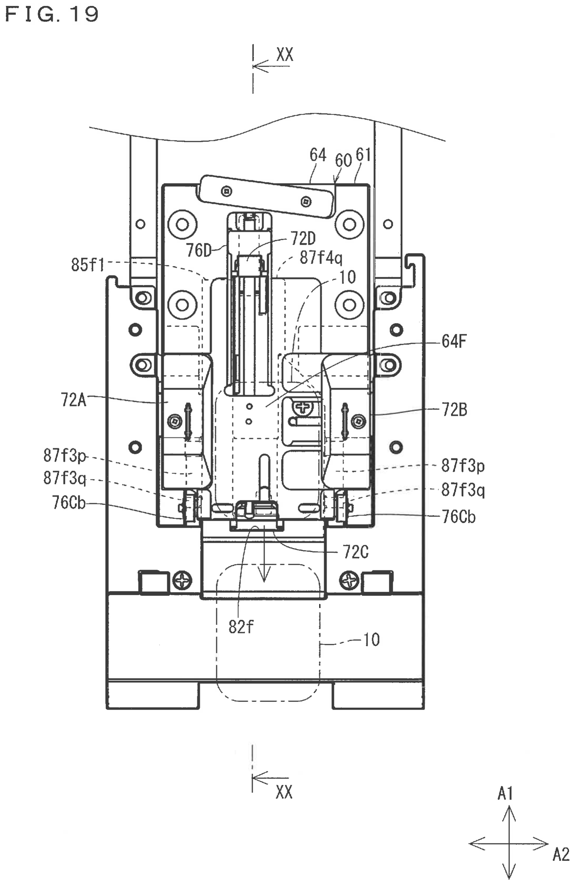

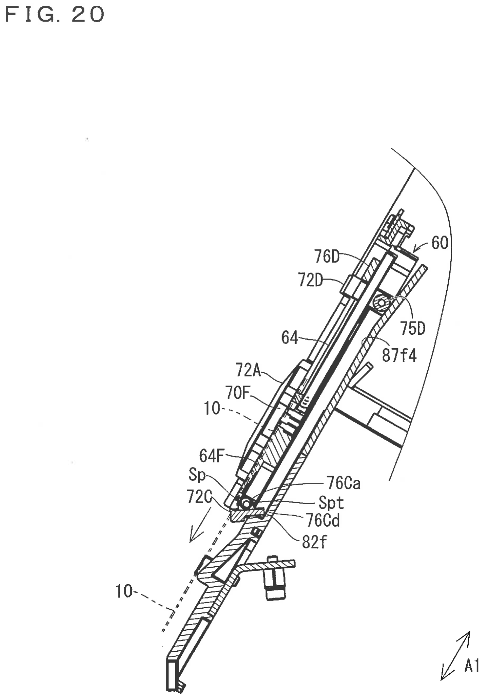

Fig. 19 and Fig. 20 illustrate the stage 60 located in the discharge position P3.

When the stage 60 is moved from the setting position P1 to the discharge position P3, the receiving piece 72Cd of the lower positioning part 72C has contact with the direct contact surface 82f, and the lower positioning part 72C is rotated to change the posture from the positioning posture to the discharge posture against the biasing force of the helical torsion spring Spt. When the lower positioning part 72C is inclined with respect to the supporting surface 64F with a large degree, the IP 10 on the positioning surface 70F of the lower positioning part 72C is easily discharged to the lower side by the gravity.

The driven part 76Cb rolls on the opposite slope surface 87f3q to be moved in the direction away from the side of the back surface of the plate-like part 64. Since the shaft 76Ca is pressed by the biasing force of the coil spring Sp, the lower positioning part 72C is displaced to reduce the height with respect to the supporting surface 64F. Since the protrusion length of the lower positioning part 72C from the supporting surface 64F is reduced, the IP 10 easily passes the lower side of the lower positioning part 72C and is discharged.

As described above, the coil spring Sp as the biasing member biasing each of the positioning parts 72A, 72B, 72C, and 72D in the height direction, the driven parts 75Ab, 74Bb, 76Cb, and 75D as the receiving parts receiving the force for moving each of the positioning parts 72A, 72B, 72C, and 72D, and the slope surfaces 87f1, 87f2, 87f3, and 87f4 as the actuation surfaces for actuating the receiving part are the examples of the positioning part operation mechanism of moving the positioning parts 72A, 72B, 72C, and 72D as the height adjustable positioning parts so that the height with respect to the supporting surface 64F is reduced in accordance with the movement of the stage body 61 from the setting position P1 to the reading position P2 by the stage body moving mechanism 50. Although the receiving part described above is necessarily the driven part, preferable is a member capable of reducing slide resistance with a counterpart member.

The coil spring Sp as the biasing member biasing the right positioning part 72B or the upper positioning part 72D, the driven parts 77Bb or the sandwiching adjustable base 76D as the receiving parts receiving the force for moving the right positioning part 72B or the upper positioning part 72D, and the guide surfaces 84f1 and 84f2 and the direct contact surfaces 85f1 and 87f4q as the actuation surfaces for actuating the receiving part are the examples of the positioning part operation mechanism of moving the sandwiching adjustable bases 76B and 76D toward the edge portion of the IP 10 in accordance with the movement of the stage body 61 from the setting position P1 to the reading position P2 by the stage body moving mechanism 50.

The receiving piece 72Cd and the direct contact surface 82f described above are the examples of the positioning part operation mechanism of pivoting the lower positioning part 72C so that the lower positioning part 72C as the discharge adjustable positioning part gets away from the edge portion of the IP 10 in accordance with the movement of the stage body 61 from the setting position P1 to the discharge position P3 by the stage body moving mechanism 50.

### <Effect etc.>

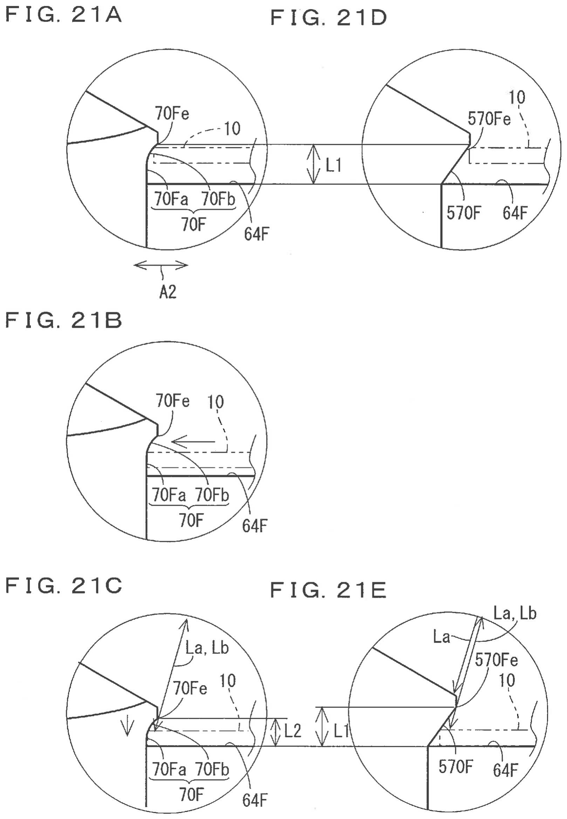

According to the radiation image scanner 20 having the above configuration, when the positioning surface 70F is moved toward the edge portion of the IP 10 from the first state, the edge portion is easily pressed against the supporting surface 64F even in a case where the edge portion of the IP 10 comes off the supporting surface 64F (refer to Figs. 21A and 21B). When the radiation image is read from the IP 10 using the excitation light source 92 and the photodetector 94 in the second state, the positioning surface 70F hardly blocks excitation light La and emission light Lb, and a shadow obstruction hardly occurs (refer to Fig. 21C). Accordingly, the IP 10 being in contact with the supporting surface 64F can be held while the shadow obstruction is suppressed.

Assumed is a case where a positioning surface 500 is a surface wholly inclined in front of the supporting surface 64F as illustrated in Figs. 21D and 21E. In this case, a length of the positioning surface 500 in an inclination direction is assumed to be increased to press the IP 10 located away from the supporting surface 64F to substantially the same degree as described above against the supporting surface 64F. In this case, there is a possibility that the positioning surface 500 is overlapped with the IP 10 from the edge to an inner side thereof with a large degree. In this case, since the positioning surface 500 blocks the excitation light La and the emission light Lb, there is a possibility that the shadow obstruction has large influence on the edge portion of the IP 10 (shadow obstruction easily occurs).

According to the present embodiment, since an amount of overlapping of the positioning surface 70F with the IP 10 can be reduced, influence of the shadow obstruction can be reduced (the shadow obstruction can hardly occur).

Since the distal end edge 70Fe of the positioning surface 70F is located on the inner side of the supporting surface 64F than the positioning reference part 70Fs, the IP 10 can be effectively pressed against the supporting surface 64F.

When the positioning mechanism 70 includes the positioning parts 72A, 72B, 72C, and 72D as the height adjustable positioning parts which can adjust the height with respect to the supporting surface 64F and these positioning parts 72A, 72B, 72C, and 72D include the positioning surface 70F, the position of the distal end edge 70Fe of the positioning surface 70F can be changed by adjusting the heights of the positioning parts 72A, 72B, 72C, and 72D as the height adjustable positioning parts.

When the positioning surface 70F includes the main positioning surface 70Fa and the main pressing surface 70Fb continuously formed with the main positioning surface 70Fa, the main pressing surface 70Fb can be disposed away from the supporting surface 64F with a large degree in the first state. Thus, even when the protrusion length of the main pressing surface 70Fb from the main positioning surface 70Fa is small, the edge portion of the IP 10 can be easily pressed against the supporting surface 64F. In the second state, the main pressing surface 70Fb gets close to the positioning surface of the supporting surface 64F. Since the protrusion length of the main pressing surface from the main positioning surface can be reduced, the shadow obstruction further hardly occurs. Since the protrusion length of the positioning surface from the positioning surface can be reduced depending on the direction of the excitation light La and the emission light Lb, there is a possibility that the shadow obstruction can further hardly occur.

Since the main pressing surface 70Fb is the inclined surface directed to the direction away from the supporting surface 64F with getting far from the main positioning surface 70Fa, the IP 10 can be easily positioned in the direction along the supporting surface 64F while being pressed against the supporting surface 64F.

The positioning mechanism 70 includes the sandwiching adjustable bases 76B and 76D, and the right positioning part 72B and the upper positioning part 72D as the height adjustable positioning parts function as the biaxial direction adjustable positioning parts supported in a height-adjustable form with respect to the sandwiching adjustable bases 76B and 76D. The IP 10 can be pressed toward the supporting surface 64F and positioned by the right positioning part 72B and the upper positioning part 72D as the biaxial direction adjustable positioning parts.

The positioning mechanism 70 includes the left positioning part 72A and the lower positioning part 72C as the fixed position adjustable positioning parts supported in the height adjustable form at the fixed position in the direction along the supporting surface 64F. Thus, the IP 10 can be positioned in the fixed position on the supporting surface 64F based on the left positioning part 72A and the lower positioning part 72C as the fixed position adjustable positioning parts.

The lower positioning part 72C is pivotably supported in the height-adjustable formed with respect to the supporting surface 64F as the discharge adjustable positioning part via the discharge base 76C. Thus, when the lower positioning part 72C is pivoted, the lower positioning part 72C as the discharge adjustable positioning part can be moved in the direction away from the edge portion of the IP 10. Accordingly, the IP 10 can be easily discharged.

The positioning parts 72A, 72B, 72C, and 72D as the height adjustable positioning part are moved so that the height with respect to the supporting surface 64F is reduced in conjunction with the movement of the stage body 61 by the stage body moving mechanism 50. Accordingly, the IP 10 is pressed against the supporting surface 64F with a simple configuration by moving the stage body 61 to the reading position P2 after setting the IP 10. The positioning part (the positioning parts 72C and 72D in the present embodiment) having contact with a short side of the IP 10 may have a configuration not vertically adjustable.

The sandwiching adjustable bases 76B and 76D are moved toward the edge portion of the IP 10 in conjunction with the movement of the stage body 61 by the stage body moving mechanism 50. Accordingly, the IP 10 can be positioned with a simple configuration by moving the stage body 61 to the reading position P2 after setting the IP 10.

the lower positioning part 72C as the discharge adjustable positioning part is pivoted to get away from the edge portion of the IP 10 in conjunction with the movement of the stage body 61 from the setting position P1 to the discharge position P3 by the stage body moving mechanism 50. Accordingly, when the stage body 61 is moved to the discharge position P3, the IP 10 can be easily discharged.

### Second embodiment

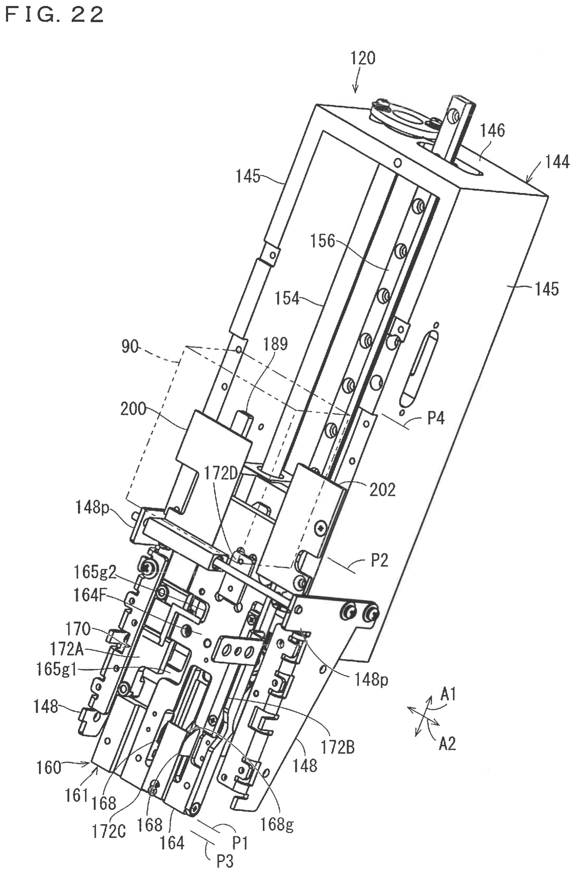

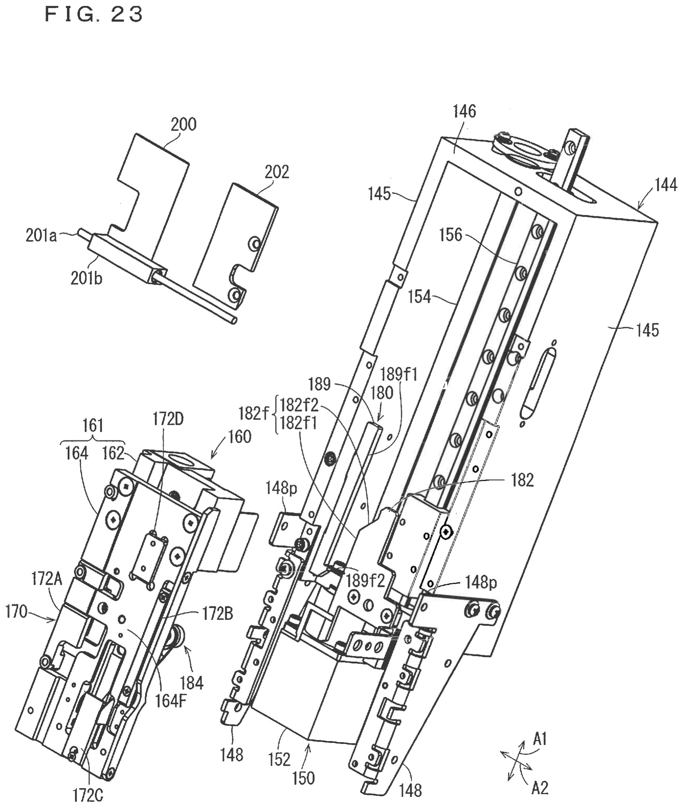

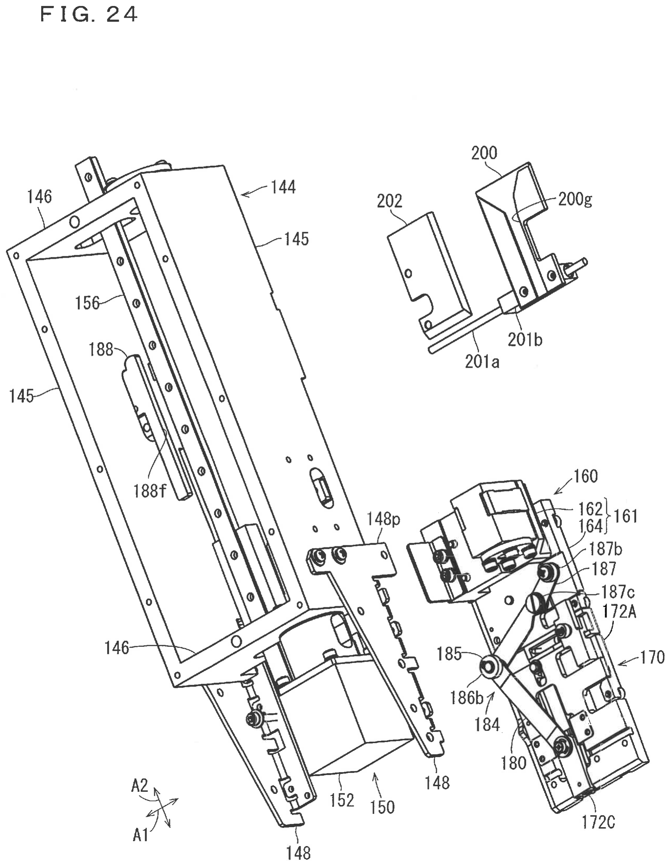

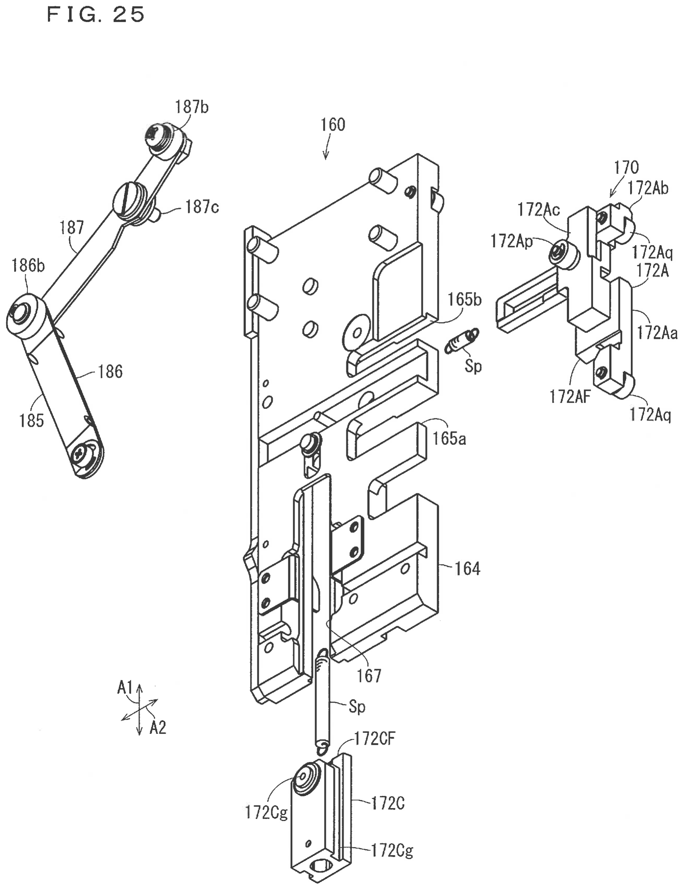

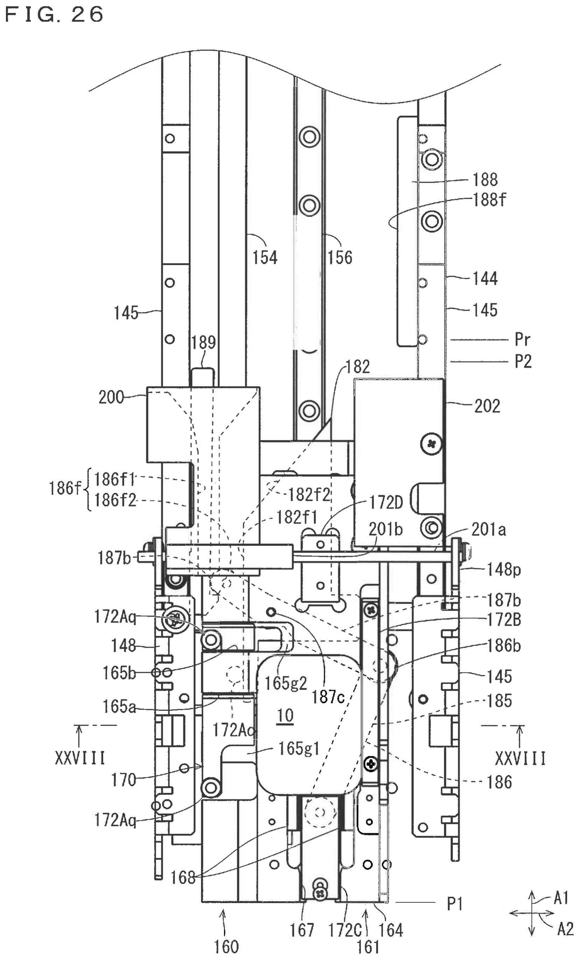

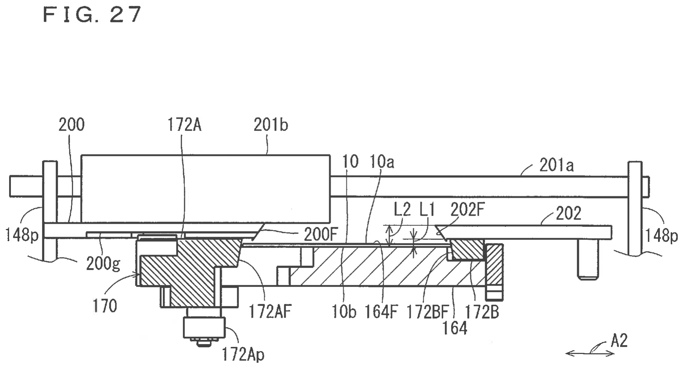

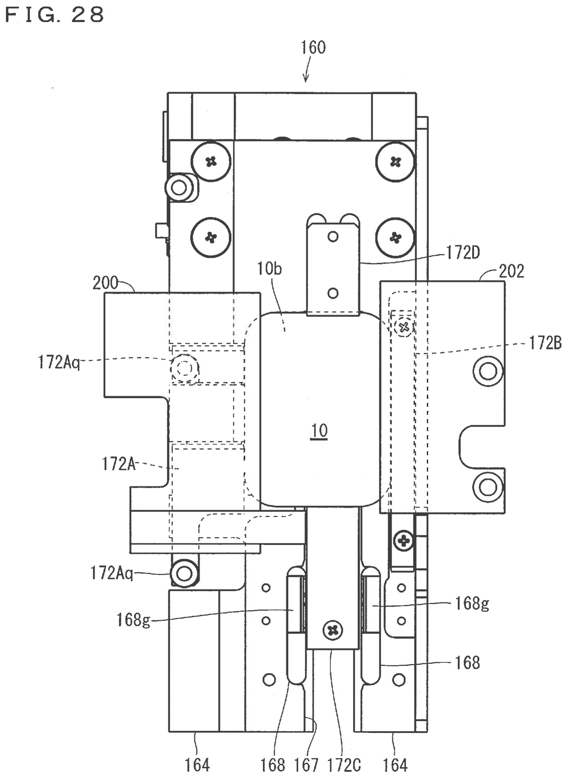

A radiation image scanner according to a second embodiment is described. Fig. 22 is a perspective view illustrating an inner structure of a radiation image scanner 120, Fig. 23 and Fig. 24 are exploded perspective views of the inner structure thereof, Fig. 25 is a partially-exploded perspective view of a stage body 161, and Fig. 26 is a diagram of the inner structure thereof seen from a front surface side of a supporting surface 164F. Fig. 27 is a schematic cross-sectional view along an XXVII-XXVII line in Fig. 26. Fig. 27 mainly illustrates a plate-like part 164, a left positioning part 172A, a right positioning part 172B, and combination positioning parts 200 and 202. Fig. 28 is a diagram illustrating the combination positioning parts 200 and 202 combined with the left positioning part 172A and the right positioning part 172B as stage-side positioning parts.

The scanner 120 is an apparatus reading a radiation image from the IP 10, and includes the stage body 161, a positioning mechanism 170, the excitation light source 92, and the photodetector 94 in the manner similar to the first embodiment. A configuration similar to that described in the first embodiment can be used as the excitation light source 92 and the photodetector 94.

The stage body 161 is a part corresponding to the stage body 61 described above, and includes the supporting surface 164F which can have contact with the back surface 10b of the IP 10.

The stage body 161 is movably supported by a frame part 144, and is moved along the main scanning direction A1 by a stage body moving mechanism 150.

The frame part 144 is formed into a quadrangular frame-like shape including a pair of longitudinal direction side plates 145 corresponding to the pair of longitudinal direction side plates 45 and a pair of short-side direction side plates 146 corresponding to the pair of short-side direction side plates 46 in the manner similar to the frame part 44.

The frame part 144 is housed in the housing 30 and supported at a fixed posture in the manner similar to the frame part 44.

The stage body moving mechanism 150 includes a movement drive part 152 corresponding to the movement drive part 52, a screw shaft part 154 corresponding to the screw shaft part 54, and a guide rod 156 corresponding to the guide rod 56.

A movable support 162 is fixed to a side of a back surface of the stage body 161 close to an upper end thereof. The stage body 161 and the movable support 162 constitute a stage 160 corresponding to the stage 60 described above. The guide rod 156 is inserted into the movable support 162, and the screw shaft part 154 is screwed in a spring hole formed in the movable support 162. When the screw shaft part 154 is rotated by rotationally driving of a movement drive part 152, the stage 160 is moved and driven along the main scanning direction A1.

In the manner similar to the first embodiment described above, the stage body 161 can be moved to the back position P4 from the setting position P1 obliquely below the frame part 144 through the reading position P2 in the frame part 144 by the stage body moving mechanism 150, and can also be moved reversely. Furthermore, the stage body 161 also reciprocate between the setting position P1 and the discharge position P3 by the stage body moving mechanism 150.

The actuation plate 80 described above is omitted in the frame part 144. A pair of supports 148 extend from a lower part of both side parts of the frame part 144 toward an obliquely lower side. The stage body 161 is disposed between the pair of supports 148 while the stage body 161 is located in the setting position P1. The pair of supports 148 support the setting guide 96 described above. The IP 10 supplied through the setting guide 96 is supplied to the stage body 161 between the pair of supports 148.

The collection tray 49 is located obliquely below the pair of supports 148. In the manner similar to the first embodiment, when the IP 10 slides down the stage body 161 located in the discharge position P3 obliquely below the setting position P1, the IP 10 is collected in the collection tray 49.

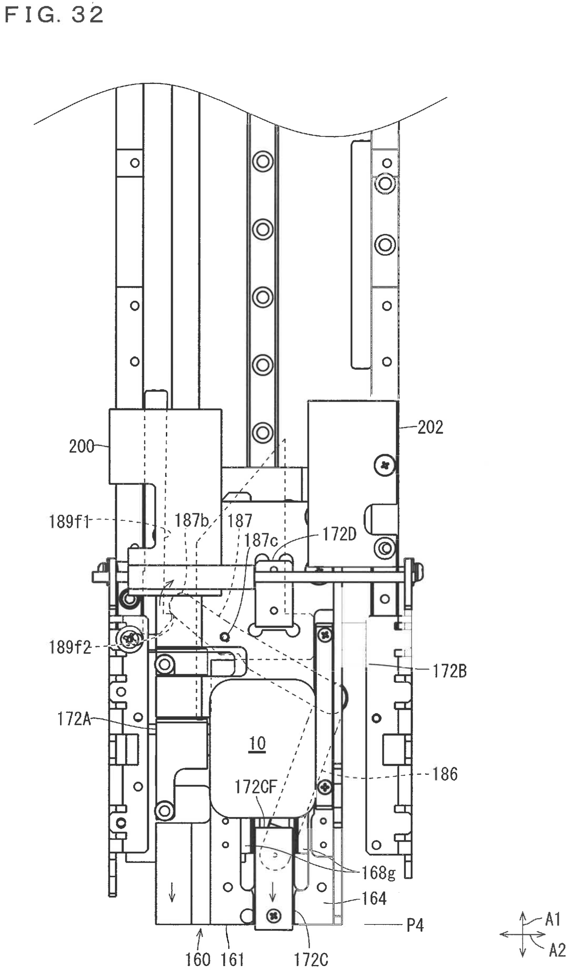

The positioning mechanism 170 is a part corresponding to the positioning mechanism 70 described above, and includes positioning surfaces 170Fa and 170Fb (refer to Fig. 32). The positioning surfaces 170Fa and 170Fb are surfaces having contact with the edge portion of the IP 10 located on the supporting surface 164F, positioning the edge portion of the supporting surface 164F in the extension direction from the outer side thereof, and pressing the edge portion against the supporting surface 164F.

Described in the first embodiment described above is the example that the positioning surface 70F adjusts the height with respect to the supporting surface 64F, thereby changing the distance from the supporting surface 64F to the distal end edge 70Fe.

In the present second embodiment, combination positioning surfaces 200F and 202F as the other surfaces in the first state are added to stage-side positioning surfaces 172AF and 172BF forming the positioning surface 170Fb in the second state to constitute the positioning surface 170Fa. Further described is an example that a distance of distal end edges 170Fae and 170Fbe from the supporting surface 164F is changed by presence or absence of combination of the other combination positioning surfaces 200F and 202F with the stage-side positioning surfaces 172AF and 172BF (refer to Fig. 32).

In the present embodiment, the positioning mechanism 170 includes the left positioning part 172A and the right positioning part 172B as the stage-side positioning parts and the combination positioning parts 200 and 202. The left positioning part 172A and the right positioning part 172B as the stage-side positioning parts are incorporated into the stage 160 and moved along the main scanning direction A1 together with the stage 160. The combination positioning parts 200 and 202 are supported at a fixed position by the frame part 144 in the main scanning direction A1. The left positioning part 172A and the right positioning part 172B are combined with and separated from the combination positioning parts 200 and 202 in accordance with the position of the stage 160 in the main scanning direction A1. When the left positioning part 172A and the right positioning part 172B are combined with the combination positioning parts 200 and 202, the other combination positioning surfaces 200F and 202F are added to the stage-side positioning surfaces 162AF and 172BF. When the left positioning part 172A and the right positioning part 172B as the stage-side positioning parts are separated from the combination positioning parts 200 and 202, the other combination positioning surfaces 200F and 202F are separated from the stage-side positioning surfaces 172AF and 172BF.

A configuration of each part is specifically described.

### <Whole configuration of stage>

Described is a whole configuration of the stage 160. The stage 160 includes a stage body 161 and a positioning mechanism 170.

The stage body 161 includes the supporting surface 164F which can have surface contact with the back surface 10b of the IP 10. In the present embodiment, the stage body 161 includes the movable support 162 corresponding to the movable support 62 and the plate-like part 164 corresponding to the plate-like part 64 in the manner similar to the stage body 61.

The plate-like part 164 is formed into a plate-like shape including the supporting surface 164F corresponding to the supporting surface 64F in the manner similar to the plate-like part 64. A main difference between the plate-like part 64 and the plate-like part 164 is a configuration for supporting the positioning mechanism 170.

The positioning mechanism 170 includes the left positioning part 172A, the right positioning part 172B, a lower positioning part 172C, and an upper positioning part 172D.

In the manner similar to the first embodiment, the IP 10 is positioned in the right-left sandwiching direction A2 by the left positioning part 172A and the right positioning part 172B. In the present embodiment, the left positioning part 172A is moved along the right-left sandwiching direction A2, and the right positioning part 172B is fixed to a fixed position on the plate-like part 164.

The IP 10 is positioned in the up-down sandwiching direction A1 by the lower positioning part 172C and the upper positioning part 172D. In the present embodiment, the lower positioning part 172C is moved along the up-down sandwiching direction A1, and the upper positioning part 172D is fixed to a fixed position on the plate-like part 164.

In the state where the stage 160 is located in the setting position P1, the left positioning part 172A and the right positioning part 172B are opened. Both the lower positioning part 172C and the upper positioning part 172D are opened (refer to Fig. 26). In this state, the IP 10 can be set on the supporting surface 164F of the stage 160.

The left positioning part 172A and the right positioning part 172B are closed halfway through the movement of the stage 160 from the setting position P1 to the reading position P2. The lower positioning part 172C and the upper positioning part 172D are closed. Accordingly, the IP 10 is held at a fixed position on the supporting surface 164F.

The lower positioning part 172C is moved and retracted from the IP 10 before the stage 160 reaches the reading position P2. In the state where the stage body 161 reaches the reading position P2, the IP 10 is sandwiched between the left positioning part 172A and the right positioning part 172B to be held in the fixed position, and the lower positioning part 172C is in a state of being retracted from the IP 10. Thus, overlapping of the lower positioning part 172C with a lower side edge of the IP 10 is suppressed in reading the IP 10.

When the stage 160 returns to the setting position P1, the left positioning part 172A and the right positioning part 172B are opened. Thus, the IP 10 can get away from between the left positioning part 172A and the right positioning part 172B.

When the stage 160 is moved from the setting position P1 to the discharge position P3, the lower positioning part 172C is moved to a further lower side. Accordingly, the IP 10 is moved to the lower side of the plate-like part 164 by the gravity, and can have contact with a discharge guide surface 168g described hereinafter. The IP 10 is moved to an obliquely lower side by the gravity, and has contact with the discharge guide surface 168g. Then, the IP 10 may get away from the supporting surface 164F, pass over the lower positioning part 172C, and be discharged to the obliquely lower side.

### <Positioning mechanism on right and left sides>

A positioning mechanism in the right-left sandwiching direction A2 is described more specifically.

The right positioning part 172B is an elongated part extending along one side part of the plate-like part 164. In the present embodiment, the long right positioning part 172B formed separately from the plate-like part 164 is fixed by a screw to one side part of the plate-like part 164. The right positioning part 172B protrudes more than the supporting surface 164F.

The right positioning part 172B is an example of the stage-side positioning part protruding from the supporting surface 164F. A surface of the right positioning part 172B facing a side of the left positioning part 172A is a stage-side positioning surface 172BF extending in front of the supporting surface 164F from the supporting surface 164F or an extension of the supporting surface 164F. It is sufficient that the stage-side positioning surface 172BF extends more forward than the supporting surface 164F, thus may not face the supporting surface 164F. The stage-side positioning surface 172BF is an inclined surface directed to a direction away from the supporting surface 164F toward a center of the supporting surface 164F. That is to say, a distance from the supporting surface 164F to the stage-side positioning surface 172BF in a direction perpendicular to the supporting surface 164F is reduced toward the center of the supporting surface 164F. The center of the supporting surface 164F may be the geometric center of the supporting surface 164F.

When the stage-side positioning surface 172BF is the inclined surface, the stage-side positioning surface 172BF may be a planar surface or a curved surface. The stage-side positioning surface 172BF may not be an inclined surface. For example, the stage-side positioning surface 172BF may be a surface having a step-like shape.

In the present embodiment, the right positioning part 172B is made up of the member different from the plate-like part 164, but the right positioning part may be a part integrally formed with the plate-like part by cutting processing, for example.

The left positioning part 172A is provided with an interval between the left positioning part 172A and the right positioning part 172B along the right-left sandwiching direction A2.

More specifically, slits 165a and 165b are formed along the right-left sandwiching direction A2 in a part of the plate-like part 164 on a side opposite to the right positioning part 172B described above. In the present embodiment, two slits 165a and 165b are parallelly formed in different positions in the up-down sandwiching direction A1. Two slits 165a and 165b are opened on an outer side along the right-left sandwiching direction A2.

Concave parts 165g1 and 165g2 concaved more than the plate-like part 164 are formed in a part of a front side of the plate-like part 164 around the slits 165a and 165b.

The left positioning part 172A is formed separately from the plate-like part 164, and is movably supported along the right-left sandwiching direction A2 by the slits 165a and 165b. More specifically, a part of the left positioning part 172A is formed into a shape capable of being disposed in the slits 165a and 165b, and the other part of the left positioning part 172A is disposed in a position protruding more than the supporting surface 164F.

More specifically, the left positioning part 172A includes positioning bodies 172Aa and 172Ab and a back side support 172Ac. The positioning body 172Aa is a part disposed in the slit 165a and the concave part 165g1 around the slit 165a. The positioning body 172Ab is a part disposed in the slit 165b and the concave part 165g2 around the slit 165b. The positioning bodies 172Aa and 172Ab protrude more than the supporting surface 164F.

The back side support 172Ac is a part continuously formed with the positioning bodies 172Aa and 172Ab on a side opposite to the supporting surface 164F. The back side support 172Ac has contact with a part of the plate-like part 164 between the slits 165a and 165b from a side opposite to the supporting surface 164F. When the positioning bodies 172Aa and 172Ab have contact with bottom surfaces of the concave parts 165g1 and 165g2 from a side of the supporting surface 164F and the back side support 172Ac has contact with the plate-like part 164 from a side opposite to the supporting surface 164F, the left positioning part 172A can be moved along the slits 165a and 165b while being positioned in a thickness direction of the plate-like part 164.

The left positioning part 172A is an example of the stage-side positioning part protruding from the supporting surface 164F. A surface of each of the positioning bodies 172Aa and 172Ab of the left positioning part 172A facing a side of the right positioning part 172B is a stage-side positioning surface 172AF extending in front of the supporting surface 164F from the supporting surface 164F or an extension of the supporting surface 164F. It is sufficient that the stage-side positioning surface 172AF extends more forward than the supporting surface 164F, thus may not face the supporting surface 164F. The stage-side positioning surface 172AF is an inclined surface directed to a direction away from the supporting surface 164F toward the center of the supporting surface 164F.

When the stage-side positioning surface 172AF is the inclined surface, the stage-side positioning surface 172AF may be a planar surface or a curved surface. The stage-side positioning surface 172AF may not be an inclined surface. For example, the stage-side positioning surface 172AF may be a surface having a step-like shape.

The stage 160 includes the coil spring Sp as the biasing member biasing the left positioning part 172A to a side of the right positioning part 172B. For example, one end portion of the coil spring Sp is fixed to the back side support 172Ac and the other end portion thereof is fixed to a fixed position in the back surface of the plate-like part 164 on the side of the back surface of the plate-like part 164. The coil spring Sp is constantly extended between the back side support 172Ac and the fixing position in the back surface of the plate-like part 164, and the left positioning part 172A is biased to the side of the right positioning part 172B by compression force of the coil spring Sp.

A driven part 172Ap is integrally combined with the left positioning part 172A as a receiving part receiving force of moving the left positioning part 172A. In the present embodiment, the driven part 172Ap is rotatably supported by the back side support 172Ac. The driven part 172Ap is a roller and protrudes to the side of the back surface of the plate-like part 164. When the driven part 172Ap has contact with an actuation plate 182 fixed to the frame part 144 in the movement of the stage 160, the left positioning part 172A is moved along the right-left sandwiching direction A2.

The left positioning part 172A is an example of a stage-side adjustable positioning part movably supported on the stage body 161 along the right-left sandwiching direction A2 along the supporting surface 164F. The right positioning part 172B is an example of a stage-side fixed positioning part facing the left positioning part 172A as the stage-side adjustable positioning part and supported at a fixed position on the stage body 161.

A movement operation of the left positioning part 172A in accordance with the movement of the stage 160 is further described hereinafter.

The left positioning part 172A includes a transmission part 172Aq transmitting force along the right-left sandwiching direction A2 to the combination positioning part 200. In the present embodiment, the transmission part 172Aq is rotatably supported by each of the positioning bodies 172Aa and 172Ab. The transmission part 172 Aq is a roller, and protrudes from the left positioning part 172A in the thickness direction of the plate-like part 164. A rotational axis direction of the transmission part 172Aq is a direction perpendicular to the supporting surface 164F. Two transmission parts 172Aq are away from each other in the up-down sandwiching direction A1, and are located on both ends of the left positioning part 172A in the up-down sandwiching direction A1 herein. Two transmission parts 172Aq are disposed in the same position in the right-left sandwiching direction A2.

### <Positioning mechanism on upper and lower sides>

The lower positioning part 172C is a part located on one side of the plate-like part 164 in the up-down sandwiching direction A1, that is herein a part located a side part on the lower side thereof.

More specifically, a slit 167 is formed along the up-down sandwiching direction A1 in a part on a lower side of the plate-like part 164.

The lower positioning part 172C is formed into an elongated plate-like shape along an extension direction of the slit 167. A thickness of the lower positioning part 172C is larger than that of the plate-like part 164. An intermediate portion of the lower positioning part 172C in the thickness direction is disposed in the slit 167. A guide groove 172Cg is formed on both side parts of the lower positioning part 172C. The lower positioning part 172C is supported to be able to reciprocate along a direction along the slit 167 while both side edges of the slit 167 is fitted into the guide groove 172Cg. The lower positioning part 172C can be moved along the slit 167. The lower positioning part 172C is located in a standby position of receiving the edge portion on the lower side of the IP 10 in setting and reading the IP 10. The lower positioning part 172C can be moved to the sandwiching position above the standby position after setting and before reading the IP 10. The lower positioning part 172C can be moved to a separated discharge position below the standby position in discharging the IP 10.

A surface of the lower positioning part 172C directed to an inner side (upper side) is formed in the positioning surface 172CF. The positioning surface 172CF supports the IP 10 on the supporting surface 164F from the lower side.

The stage 160 includes the coil spring Sp as the biasing part constantly making force in an upper direction constantly act on the lower positioning part 172C. For example, one end portion of the coil spring Sp is fixed to a back side part of the slit 167 and the other end portion thereof is fixed to the lower positioning part 172C on the side of the back surface of the plate-like part 164. The coil spring Sp is constantly extended between the back side part of the slit 167 and the lower positioning part 172C, and the lower positioning part 172C is biased to the upper direction along the up-down sandwiching direction A1 by compression force of the coil spring Sp.

A shaft part 172Cq is integrally formed with the lower positioning part 172C. The shaft part 172Cq is provided to a part of the lower positioning part 172C facing a side opposite to the supporting surface 164F. The driven part 172Cq protrudes more than the back surface of the plate-like part 164. A link mechanism 185 is connected to the shaft part 172Cq. The lower positioning part 172C is driven to reciprocate along the up-down sandwiching direction A1 in accordance with an operation of the link mechanism 185. The link mechanism 185 is described hereinafter.

The stage 160 includes a discharge guide 168 located below the left positioning part 172A and the right positioning part 172B in the up-down sandwiching direction A1. The discharge guide 168 is fixed to a fixed position on the plate-like part 164 to protrude from the supporting surface 164F. The discharge guide may be a part integrally formed with the plate-like part.

In the present embodiment, the discharge guide 168 includes a plate-like part perpendicular to the supporting surface 164F, and an upper end portion thereof protrudes from the supporting surface 164F at a position adjacent to the lower positioning part 172C located in the standby position. Formed in an upward part of the discharge guide 168 is a discharge guide surface 168g directed to a direction away from the supporting surface 164F toward a lower side along the up-down sandwiching direction A1. That is to say, a height of the discharge guide surface 168g with respect to the supporting surface 164F increases toward the lower side along the up-down sandwiching direction A1.

The lower positioning part 172C located in the standby position is located above the discharge guide surface 168g in the up-down sandwiching direction A1. More specifically, the positioning surface 172CF of the lower positioning part 172C located in the standby position is located above the discharge guide surface 168g. Thus, when the IP 10 on the supporting surface 164F slides down the supporting surface 164F by the gravity, the lower edge portion of the IP 10 has contact with and is supported by the positioning surface 172CF before having contact with the discharge guide surface 168g.

The lower positioning part 172C located in the separated discharge position is located below of the discharge guide surface 168g in the up-down sandwiching direction A1. More specifically, the positioning surface 172CF of the lower positioning part 172C located in the separated discharge position is located below the discharge guide surface 168g. In this state, the IP 10 on the supporting surface 164F is not supported by the positioning surface 172CF, but has contact with the discharge guide surface 168g. Since the discharge guide surface 168g gradually protrudes from the supporting surface 164F toward the lower side, the lower edge portion of the IP 10 is lifted by the discharge guide surface 168g in a direction away from the supporting surface 164F. Accordingly, the IP 10 can fall to the lower side from the stage 160 without having interference with the positioning surface 172CF.

The discharge guide surface 168g described above may be omitted. In this case, the IP 10 on the stage 160 may be taken out by a hand, for example.

The upper positioning part 172D is located on the other side of the plate-like part 164 in the up-down sandwiching direction A1, that is herein the upper side thereof. The upper positioning part 172D is formed separately from the plate-like part 164. The upper positioning part may be integrally formed with the plate-like part.

The upper positioning part 172D is provided to face the lower positioning part 172C with an interval in the up-down sandwiching direction A1. It is preferable that the position of the lower positioning part 172C and the position of the upper positioning part 172D are the same in the right-left sandwiching direction A2, and the lower positioning part 172C and the upper positioning part 172D face at the front in the up-down sandwiching direction A1 to sandwich the IP 10.

The upper positioning part 172D protrudes more than the supporting surface 164F. A surface of the upper positioning part 172D protruding more than the supporting surface 164F and directed to the inner side (lower side) is formed in a positioning surface 172DF. When the lower positioning part 172C is moved to the upper side while the IP 10 supported on the supporting surface 164F is supported by the positioning surface 172CF of the lower positioning part 172C, the IP 10 is pressed to the upper side and moved. Then, an upper edge portion of the IP 10 has contact with the upper positioning part 172D, and movement of the IP 10 to the upper side is regulated. Accordingly, the IP 10 is sandwiched between the lower positioning part 172C and the upper positioning part 172D in the up-down sandwiching direction A1. In this state, the upper end portion of the IP 10 has contact with the positioning surface 172DF to position the IP 10 in the first direction.

The positioning surfaces 172BF and 172DF described above may be inclined surfaces directed to a direction away from the supporting surface 164F toward the center of the supporting surface 164F.

### <Combination positioning part>

The combination positioning parts 200 and 202 are located away from the supporting surface 164F. For example, an interval where the left positioning part 172A or the right positioning part 172B can be disposed is provided between the combination positioning parts 200 and 202 and the supporting surface 164F.

The combination positioning parts 200 and 202 include combination positioning surfaces 200F and 202F, respectively, which can be disposed to protrude with respect to the stage-side positioning surfaces 172AF and 172BF and face the supporting surface 164F. The state where the combination positioning surfaces 200F and 202F protrude with respect to the stage-side positioning surfaces 172AF and 172BF indicates that the combination positioning surfaces 200F and 202F protrude to a side of the center of the supporting surface 164F more than the stage-side positioning surfaces 172AF and 172BF in the right-left sandwiching direction A2, for example.

The combination positioning parts 200 and 202 can change the state between a state of being combined with the left positioning part 172A and the right positioning part 172B as the stage-side positioning part and a state of being separated from the parts 172A and 172B.

In the present embodiment, the combination positioning parts 200 and 202 are located halfway through a route of the stage 160 from the setting position P1 toward the reading position P2. The combination positioning parts 200 and 202 are directly or indirectly supported at a fixed position on the frame part 144 in the main scanning direction A1.

An end portion of the combination positioning parts 200 and 202 close to the setting position P1 is located closer to a side of the reading position P2 than the left positioning part 172A and the right positioning part 172B of the stage 160 located in the setting position P1. Thus, the combination positioning parts 200 and 202 are not overlapped with the left positioning part 172A and the right positioning part 172B in the state where the stage 160 is located in the setting position P1.

An end portion of the combination positioning parts 200 and 202 closer to the reading position P2 is located closer to a side of the setting position P1 than an emission position Pr of light emitted by the reading unit 90 (refer to Fig. 26). The emission position Pr is a position where the excitation light from the excitation light source 92 is emitted to the IP 10, and is a position of a front surface of the photodetector 94, for example. Thus, when the stage 160 is read by the reading unit 90 in the reading position P2, the excitation light is not blocked by the combination positioning parts 200 and 202, but is emitted to the IP 10.

The state of being combined indicates a state where the stage-side positioning surfaces 172AF and 172BF can position the IP 10 together with the combination positioning surfaces 200F and 202F (refer to Fig. 28). For example, in the combination state, the combination positioning surfaces 200F and 202F are overlapped with a whole part of the stage-side positioning surfaces 172AF and 172BF having contact with the side edge of the IP 10.

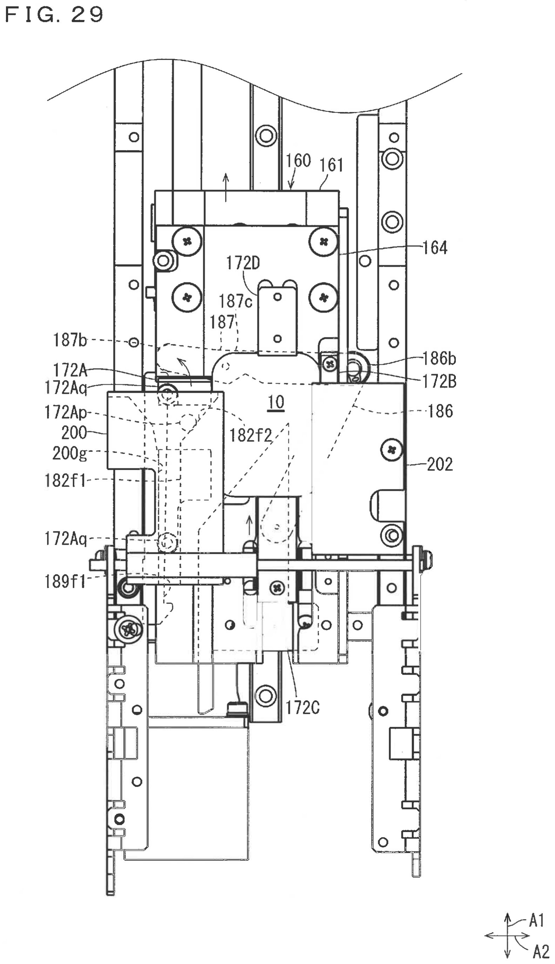

The state of being separated indicates a state other than the combination state described above. For example, in the separation state, the combination positioning surfaces 200F and 202F may not be overlapped with the stage-side positioning surfaces 172AF and 172BF, for example (refer to Fig. 26 and Fig. 32). In the separation state, it is also applicable that the combination positioning surfaces 200F and 202F are overlapped with a part of the stage-side positioning surfaces 172AF and 172BF, but a part of the stage-side positioning surfaces 172AF and 172BF having contact with the side edge of the IP 10 is exposed to a side of the reading position P2 (refer to Fig. 29 to Fig. 31).

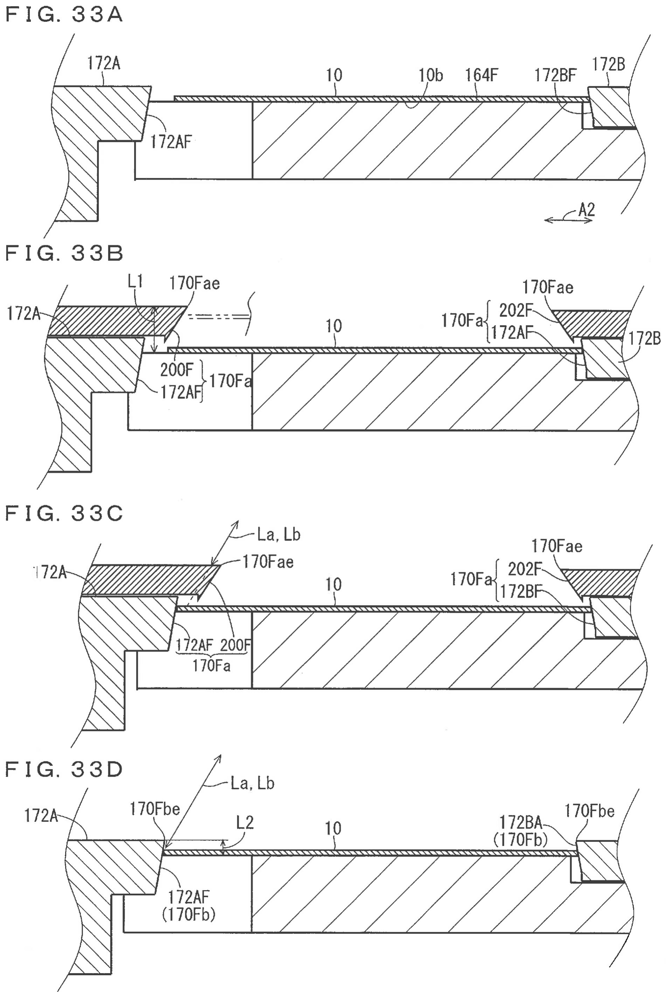

In the first state, the combination positioning parts 200 and 202 described above are combined with the left positioning part 172A or the right positioning part 172B as the stage-side positioning part. The positioning surface 170Fa in the first state includes the left positioning part 172A and the combination positioning surface 200F on the left side, and includes the stage-side positioning surface 172BF and the combination positioning surface 202F on the right side in the right-left sandwiching direction A2. The distal end edges 170Fae of the positioning surface 170Fa on the right and left sides are end edges located on a side farther away from the supporting surface 164F in the combination positioning surfaces 200F and 202F (refer to Fig. 33B).

In the second state, the combination positioning parts 200 and 202 are separated from the left positioning part 172A or the right positioning part 172B as the stage-side positioning part.

The positioning surface 170Fb in the second state is made up of the left positioning part 172A or the right positioning part 172B as the stage-side positioning surface. The distal end edge 170Fbe in the second state is an end edge located on a side farther away from the supporting surface 164F in the left positioning part 172A or the right positioning part 172B as the stage-side positioning surface (refer to Fig. 33C).

In the manner similar to the first embodiment, the positioning operation of the edge part of the IP 10 may be performed in the first state. The excitation light source 92 and the photodetector 94 may read the radiation image from the IP 10 in the second state.

In the present embodiment, the left positioning part 172A and the right positioning part 172B as the stage-side positioning part are moved from the setting position P1 toward the reading position P2 together with the stage body 161. The combination positioning parts 200 and 202 are disposed halfway through a route of the movement of the stage body 161 from the setting position P1 to the reading position P2. Thus, the left positioning part 172A and the right positioning part 172B are combined to be overlapped with the combination positioning parts 200 and 202 halfway through the route of the movement of the stage body 161 from the setting position P1 to the reading position P2. This state is the first state, and the IP 10 is positioned in the first state.

Then, the left positioning part 172A and the right positioning part 172B are separated from the combination positioning parts 200 and 202 while the stage body 161 is located in the reading position P2. This state is the second state, and the radiation image is read from the IP 10 in the second state.

A configuration thereof is described more specifically.

The combination positioning part 200 is a part combined with the left positioning part 172A. The combination positioning part 200 is formed into an elongated plate-like shape in the up-down sandwiching direction A1. A surface of the combination positioning part 200 on a side of the combination positioning part 202 is formed in the combination positioning surface 200F in the right-left sandwiching direction A2.

The combination positioning surface 200F is an inclined surface inclined to a direction away from the supporting surface 164F toward the center of the supporting surface 164F. The combination positioning surface 200F is inclined to the same direction as the stage-side positioning surface 172AF. That is to say, the stage-side positioning surface 172AF and the combination positioning surface 200F are also inclined toward the center of the supporting surface 164F with getting far from the supporting surface 164F. An inclination angle of the combination positioning surface 200F with respect to the supporting surface 164F may be the same as or different from that of the stage-side positioning surface 172AF. The combination positioning surface 200F may be a planar surface or a curved surface.

An end edge portion of the combination positioning surface 200F on the side of the supporting surface 164F is overlapped with an end edge portion of the stage-side positioning surface 172AF on the side away from the supporting surface 164F. In the present embodiment, a part of the combination positioning part 200 on a side of the combination positioning part 202 as an edge portion of on the side of the supporting surface 164F protrudes to the side of the supporting surface 164F. The edge protrudes to an extent of not reaching the supporting surface 164F. Since the combination positioning surface 200F is also formed in the edge portion, a part of the combination positioning surface 200F is overlapped with the end edge portion of the stage-side positioning surface 172AF on the side away from the supporting surface 164F from the side of the combination positioning surface 202F. A part of the stage-side positioning surface 172AF on the side of the supporting surface 164F is not covered by the combination positioning surface 200F but is exposed to the right side in the right-left sandwiching direction A2. Thus, when the IP 10 is away from the supporting surface 164F, there is a possibility that the edge portion of the IP 10 has contact with the combination positioning surface 200f and is guided. When the IP 10 is located near the supporting surface 164F, the edge portion of the IP 10 may have contact with the stage-side positioning surface 172AF.

The combination positioning part 200 is movably supported along the right-left sandwiching direction A2. In the present embodiment, supporting pieces 148p protrude on a part of the pair of supports 148 on the side of the frame part 144. The pair of supporting pieces 148p support a supporting rod 201a along the right-left sandwiching direction A2. A movable support 201b is movably supported on the supporting rod 201a along the right-left sandwiching direction A2. The combination positioning surface 200F is supported by the movable support 201b in a posture along the supporting surface 164F at a position away in front of the supporting surface 164F. The combination positioning surface 200F can be moved along the right-left sandwiching direction A2 while being supported by the movable support 201b. That is to say, the combination positioning part 200 is an example of an adjustable combination positioning part movably supported along the right-left sandwiching direction A2.

A guide receiving groove 200g is formed in a surface of the combination positioning part 200 on a side facing the supporting surface 164F. The guide receiving groove 200g includes a part extending along the up-down sandwiching direction A1 and a guide shape part gradually spreading toward the upper side of the up-down sandwiching direction A1 on the upper side thereof.

When the stage 160 is moved along the up-down sandwiching direction A1, the pair of transmission parts 172Aq of the left positioning part 172A enter the guide receiving groove 200g. When the left positioning part 172A is moved along the right-left sandwiching direction A2 in this state, the transmission part 172Aq has contact with a side surface of the guide receiving groove 200g, and presses the left positioning part 172A along the right-left sandwiching direction A2. Accordingly, the combination positioning part 200 is moved in conjunction with the movement of the left positioning part 172A in the right-left sandwiching direction A2. The side surface of the guide receiving groove 200g described above has a role as a transmission force receiving part receiving force of the transmission part 172Aq as the transmission part.

The combination positioning part 202 is a part combined with the right positioning part 172B. The combination positioning part 202 is located to a fixed position in a right side part of the frame part 144. For example, the combination positioning part 202 is fixed to the frame part 144 by a screw. The combination positioning part 202 faces the combination positioning part 202 in the right-left sandwiching direction A2. The combination positioning part 200 may be provided in the same position as the combination positioning part 200 in the up-down sandwiching direction A1.

The combination positioning part 202 is formed into a plate-like shape along the up-down sandwiching direction A1 and the right-left sandwiching direction A2.

A surface of the combination positioning part 202 on a side of the combination positioning part 200 is formed in the combination positioning surface 202F in the right-left sandwiching direction A2.

The combination positioning surface 202F is an inclined surface inclined to a direction away from the supporting surface 164F toward the center of the supporting surface 164F in the manner similar to the combination positioning surface 200F. The combination positioning surface 202F is inclined to the same direction as the stage-side positioning surface 172BF in the manner similar to the combination positioning surface 200F.

An end edge portion of the combination positioning surface 202F on the side of the supporting surface 164F is overlapped with an end edge portion of the stage-side positioning surface 172BF on the side away from the supporting surface 164F in the manner similar to the combination positioning surface 200F.

The combination positioning surface 202F is located on a side of the combination positioning part 200 with respect to an extension of the stage-side positioning surface 172BF in the up-down sandwiching direction A1 away from the supporting surface 164F. Thus, the combination positioning surface 202F is disposed in a position protruding to the side of the combination positioning part 200 on a side away from the supporting surface 164F in the stage-side positioning surface 172BF while the combination positioning part 202 and the right positioning part 172B are combined with each other.

The combination positioning part 202 is an example of a fixed position combination positioning part facing the combination positioning part 200 as the adjustable combination positioning part and disposed in a fixed position halfway through the route of the movement of the stage body 161 from the setting position P1 to the reading position P2.

### <Drive mechanism of left positioning part and lower positioning part>

The left positioning parts 172A and the lower positioning part 172C described above may be driven by any configuration. For example, the left positioning part 172A and the lower positioning part 172C may be driven using force of driving the stage 160. The left positioning part 172A and the lower positioning part 172C may be driven by a drive part (for example, a motor or a solenoid actuator) different from a drive part such as a motor driving the stage 160 based on control of the controller, for example.

In the present embodiment, the scanner 120 includes a positioning part operation mechanism 180 in the manner similar to the description in the first embodiment. The positioning part operation mechanism 180 moves the left positioning part 172A as the stage-side adjustable positioning part along the right-left sandwiching direction A2 in accordance with the movement of the stage 160 from the setting position P1 to the reading position P2 by the stage body moving mechanism 150. The positioning part operation mechanism 180 moves the combination positioning part 200 along the right-left sandwiching direction A2 in conjunction with the movement of the left positioning part 172A in the right-left sandwiching direction A2. Furthermore, the positioning part operation mechanism 180 moves the lower positioning part 172C along the up-down sandwiching direction A1 in accordance with the movement of the stage 160 from the setting position P1 to the reading position P2 by the stage body moving mechanism 150. A configuration example therefor is described hereinafter.

### <Configuration for operating left positioning part>

As described above, the left positioning part 172A is movably supported on the stage body 161 along the right-left sandwiching direction A2. The coil spring Sp biases the left positioning part 172A in a direction getting close to the right positioning part 172B. The driven part 172Ap protrudes from the left positioning part 172A to the side of the back surface of the plate-like part 164.

The actuation plate 182 is supported on a part of the frame part 144 closer to the lower side(refer to Fig. 23 and Fig. 26). The actuation plate 182 protrudes to the inner side and the outer side of the frame part 144 in an intermediate portion of the frame part 144 in the right-left direction. The actuation plate 182 may be an actuation member not having a plate-like shape.

A surface of the actuation plate 182 on the side of the left positioning part 172A is an actuation surface 182f having contact with the driven part 172Ap described above to move the driven part 172Ap along the right-left sandwiching direction A2.

The actuation surface 182f includes a straight part 182f1 and an inclined part 182f2.

The straight part 182f1 extends along the up-down sandwiching direction A1. A position of the straight part 182f1 in the right-left sandwiching direction A2 is a position where the left positioning part 172A biased by the coil spring Sp can be regulated in the standby position separated from the right positioning part 172B while the driven part 172Ap has contact with the straight part 182f1. The straight part 182f1 is located within a range of a passage of the driven part 172Ap when the stage 160 is moved to a front side of the reading position P2 through the setting position P1 from the discharge position P3 in the up-down sandwiching direction A1. Thus, the straight part 182f1 can regulate the position of the left positioning part 172A when the stage 160 is moved to the front side of the reading position P2 through the setting position P1 from the discharge position P3.

The inclined part 182f2 is continuously formed with the straight part 182f1 on an upper side. The inclined part 182f2 is formed into a shape directed to the side of the right positioning part 172B toward the upper side along the up-down sandwiching direction A1. The inclined part 182f2 is located within a range of a passage of the driven part 172Ap when at least the stage 160 is moved from the front side of the reading position P2 toward the reading position P2 in the up-down sandwiching direction A1. Thus, the inclined part 182f2 can regulate the position of the left positioning part 172A when the stage 160 is moved from the front side of the reading position P2 toward the reading position P2. Herein, the inclined part 182f2 regulates the position of the left positioning part 172A so that the left positioning part 172A is gradually moved to the side of the right positioning part 172B.

In the present embodiment, the inclined part 182f2 does not have contact with the driven part 172Ap in a state where the stage 160 reaches the reading position P2. That is to say, the inclined part 182f2 is located within a range of a passage of the driven part 172Ap before the stage 160 further gets close to the reading position P2 from the front side of the reading position P2 to reach the reading position P2 in the up-down sandwiching direction A1. Thus, the left positioning part 172A can get closest to the right positioning part 172B in the state where the stage 160 reaches the reading position P2.

### <Configuration for operating lower positioning part>

The positioning part operation mechanism 180 includes a lower positioning part operation mechanism 184. The lower positioning part operation mechanism 184 is a mechanism of moving the lower positioning part 172C along the up-down sandwiching direction A1 in accordance with the movement of the stage 160 from the setting position P1 to the reading position P2 by the stage body moving mechanism 150.

The lower positioning part operation mechanism 184 includes an actuation surface 189f and the link mechanism 185.

The link mechanism 185 includes a first link 186 and a second link 187 as a plurality of links.

The first link 186 is an elongated member, and is an elongated plate-like member herein. The first link 186 is located on a side of a back surface of the stage body 161. One end of the first link 186 is rotatably connected to the lower positioning part 172C via a shaft part. The other end of the first link 186 extends toward a back side position of the right positioning part 172B.

The second link 187 is an elongated member, and includes an elongated plate-like member 187a and a driven part 187b herein. One end of the second link 187 is rotatably connected to the other end of the first link 186 via a shaft part. An intermediate portion of the plate-like member 187a is rotatably supported on the back surface of the stage body 161 via a support shaft part 187c as a rocking fulcrum. The support shaft part 187c is located above the slit 165b on the back surface of the plate-like part 164, for example. The support shaft part 187c is located closer to the left positioning part 172A on the back surface of the plate-like part 164, for example. A position of the support shaft part 187c can be appropriately set in accordance with an amount of movement of the lower positioning part 172C and a position of the actuation surface 189f, for example. The driven part 187b is a roller rotatably supported on the other end of the plate-like member 187a via a shaft part.

The first link 186 is inclined with respect to the up-down sandwiching direction A1 and extends to the upper side from a point where the first link 186 is connected to the lower positioning part 172C. The second link 187 is inclined in a direction opposite to the first link 186 with respect to the up-down sandwiching direction A1 and extends to the upper side from a point where the second link 187 is connected to the first link 186. The driven part 187b on the other end of the second link 187 is located on a side of a side edge of the plate-like part 164 closer to the left positioning part 172A.

A driven part 186b is supported on a connection part between the first link 186 and the second link 187. The driven part 186b is a roller rotatably supported, for example.

Then, when the lower positioning part 172C is moved to the upper side along the up-down sandwiching direction A1, the first link 186 is moved to the upper side, and one end of the second link 187 is moved to the upper side. Accordingly, the second link 187 is rotated around the support shaft part 187c. For example, the second link 187 is rotated counterclockwise around the support shaft part 187c in Fig. 26. Accordingly, the driven part 187b is rotated counterclockwise along a circumferential direction around the support shaft part 187c.

When the lower positioning part 172C is moved to the lower side along the up-down sandwiching direction A1, the first link 186 is moved to the lower side, and one end of the second link 187 is moved to the lower side. Accordingly, the second link 187 is rotated around the support shaft part 187c. For example, the second link 187 is rotated clockwise around the support shaft part 187c in Fig. 26. Accordingly, the driven part 187b is rotated clockwise along the circumferential direction around the support shaft part 187c.

The link mechanism may include a larger number of links. The first link may be swingably supported via the rocking fulcrum.

Since the coil spring Sp biases the lower positioning part 172C in the upper direction, the driven part 187b is biased to be rotated counterclockwise around the support shaft part 187c. When the actuation surface 189f controls the position of the driven part 187b in the right-left sandwiching direction A2, the position of the lower positioning part 172C in the up-down sandwiching direction A1 is controlled.

An actuation plate 189 is supported on the frame part 144. In the present embodiment, the actuation plate 189 is supported on an inward portion of one longitudinal direction side plate 145 in the frame part 144. The actuation plate 189 is located away from the actuation plate 182 described above in the right-left sandwiching direction A2. The actuation plate 189 may be an actuation member not having a plate-like shape but including the actuation surface 189f in a part of rectangular parallel piped, for example.

The actuation plate 189 protrudes from the inward portion of the frame part 144.

An inward side edge portion of the actuation plate 189 is the actuation surface 189f. The driven part 187b described above faces the actuation surface 189f. The biasing force of the coil spring Sp causes force of pressing the driven part 187b against the actuation surface 189f. Thus, the driven part 187b is driven and moved on the actuation surface 189f in accordance with the movement of the stage 160.

The actuation surface 189f causes the driven part 187b to be displaced in the right-left sandwiching direction A2 as a direction intersecting with a movement direction of the stage 160 in accordance with the movement of the stage 160.

In the present embodiment, the actuation surface 189f includes a main actuation surface 189f1. The main actuation surface 189f1 extends along the up-down sandwiching direction A1. Since the driven part 187b is pressed against the main actuation surface 189f1, the driven part 187b is regulated so as not to be rotated clockwise around the support shaft part 187c. Thus, the lower positioning part 172C is regulated to be located in a fixed position, that is the standby position away from the upper positioning part 172D herein.

The main actuation surface 189f1 is located within a range of a passage of the driven part 187b during the movement of the stage 160 from the setting position P1 to the front side of the reading position P2. Thus, the driven part 187b has contact with the main actuation surface 189f1 in the state where the stage 160 is located in the setting position P1. The driven part 187b has contact with the main actuation surface 189f1 even in the state where the stage 160 is located between the setting position P1 and the reading position P2. Thus, the lower positioning part 172C is kept in the standby position during the movement of the stage 160 from the setting position P1 to the reading position P2.

The driven part 187b gets away from the main actuation surface 189f1 before the stage 160 reaches the reading position P2. Thus, the second link 187 is rotated counterclockwise around the support shaft part 187c by the biasing force of the coil spring Sp, and the lower positioning part 172C is moved from the standby position toward the pressing position.

In this manner, the link mechanism 185 can transmit the displacement of the driven part 187b in the direction intersecting with the movement direction of the stage 160 as the force of moving the lower positioning part 172C to the stage body 161.

A timing of start of movement of the lower positioning part 172C from the standby position toward the sandwiching position in the movement of the stage 160 from the setting position P1 to the reading position P2 may be earlier or later than or the same as a timing of start of movement of the left positioning part 172A from the separation position to the close position. In the present embodiment, a timing of start of movement of the lower positioning part 172C to the upper side is later than a timing of start of movement of the left positioning part 172A to the close position on the right side.

In the present embodiment, the actuation surface 189f includes a retracting operation actuation surface 189f2. The retracting operation actuation surface 189f2 is continuously formed with the main actuation surface 189f1 on the lower side. The retracting operation actuation surface 189f2 protrudes to the side of the right positioning part 172B in the up-down sandwiching direction A1 more than the main actuation surface 189f1. More specifically, the retracting operation actuation surface 189f2 includes a surface protruding to an inner side from a lower end of the main actuation surface 189f1 and an inclined surface gradually directed to an outer side from an inner side end of the surface toward a lower side.

When the stage 160 is moved from the setting position P1 to a side of the discharge position P3, the driven part 187b is moved over the retracting operation actuation surface 189f2 to be pressed to the inner side. Accordingly, the second link 187 is rotated clockwise around the support shaft part 187c, and the first link 186 is pressed to the lower side. Then, the lower positioning part 172C is moved from the standby position to the separation discharge position. Then, the IP 10 is easily discharged from the stage 160 by the discharge guide surface 168g.

An additional actuation plate 188 is supported on the frame part 144. In the present embodiment, the additional actuation plate 188 is supported on the inward portion of the other longitudinal direction side plate 145 in the frame part 144. The additional actuation plate 188 is located on a side opposite to the actuation plate 189 described above in the right-left sandwiching direction A2.

The additional actuation plate 188 protrudes from the inward portion of the frame part 144.

An inward side edge portion of the additional actuation plate 188 is the actuation surface 188f. The driven part 186b described above can be driven and moved on the actuation surface 188f in accordance with the movement of the stage 160.

In the present embodiment, the actuation surface 188f is formed in a position where the actuation surface 188f can have contact with the driven part 186b during the movement of the stage 160 from the position on the front side of the reading position P2 toward the back position P4 through the reading position P2.

Then, the driven part 186b has contact with the actuation surface 188f before the stage 160 reaches the setting position P1 from the front side of the reading position P2. Accordingly, the second link 187 is rotated clockwise around the support shaft part 187c, a connection part between the second link 187 and the first link 186 is moved below the plate-like part 164, and the lower positioning part 172C is moved below the plate-like part 164. That is to say, the lower positioning part 172C is moved from the pressing position to the retracting position.

Then, the stage 160 reaches the reading position P2 and passes over the reading position P2 to be moved to the back position in the state where the IP 10 is sandwiched by the left positioning part 172A and the right positioning part 172B in the right-left direction, the upper positioning part 172D has contact with the IP 10, and the lower positioning part 172C is retracted once from the IP 10. When the stage 160 passes through the reading position P2, the radiation image is read from the IP 10.

After reading the radiation image, the stage 160 returns from the back position P4 to the setting position P1 through a reverse operation to the above operation.

### <Operation or scanner>

An operation of the scanner 120 is described.

As illustrated in Fig. 26, the stage 160 is located in the setting position P1 in an initial state. Since the driven part 172Ap has contact with the straight part 182f1 of the actuation surface 182f in this state, the left positioning part 172A is located in the separation position. Since the driven part 187b has contact with the main actuation surface 189f1 in the actuation surface 189f, the lower positioning part 172C is located in the standby position.

The IP 10 is set through the setting guide 96 in this state. The IP 10 is supported on the stage 160 in the state where the back surface 10b of the IP 10 has contact with the supporting surface 164F and the lower edge portion of the IP 10 has contact with the positioning surface 172CF of the lower positioning part 172C.

When instruction for reading the radiation image in the scanner 120 is inputted, the stage 160 is moved from the setting position P1 toward the reading position P2 by driving of the stage body moving mechanism 150. The transmission part 172Aq of the left positioning part 172A enters the guide receiving groove 200g in the combination positioning part 200 during the movement of the stage 160.

When the stage 160 further gets close to the reading position P2, the driven part 172Ap reaches the inclined part 182f2 from the straight part 182f1 of the actuation surface 182f. Since the coil spring Sp biases the left positioning part 172A to the close direction, the driven part 172Ap can be driven and moved along the inclined part 182f2 in accordance with the movement of the stage 160. Accordingly, the left positioning part 172A can be moved to be close to the right positioning part 172B.

As described above, since the transmission part 172Aq of the left positioning part 172A enters the guide receiving groove 200g in the combination positioning part 200, the combination positioning part 200 is also moved to the right direction together with the left positioning part 172A.

Accordingly, the IP 10 is sandwiched between the positioning surface 170Fa on the left side made up of the stage-side positioning surface 172AF and the combination positioning surface 200F and the positioning surface 170Fb on the right side made up of the stage-side positioning surface 172BF and the combination positioning surface 202F, and is positioned in the right-left direction (refer to Fig. 28).

When the stage 160 is further moved to the side of the reading position P2, as illustrated in Fig. 29, a central axis of the driven part 187b passes over a terminal end of the main actuation surface 189f1, and the lower positioning part 172C can be moved above the stage body 161 along the up-down sandwiching direction A1. Then, the IP 10 is sandwiched and positioned between the lower positioning part 172C and the upper positioning part 172D.

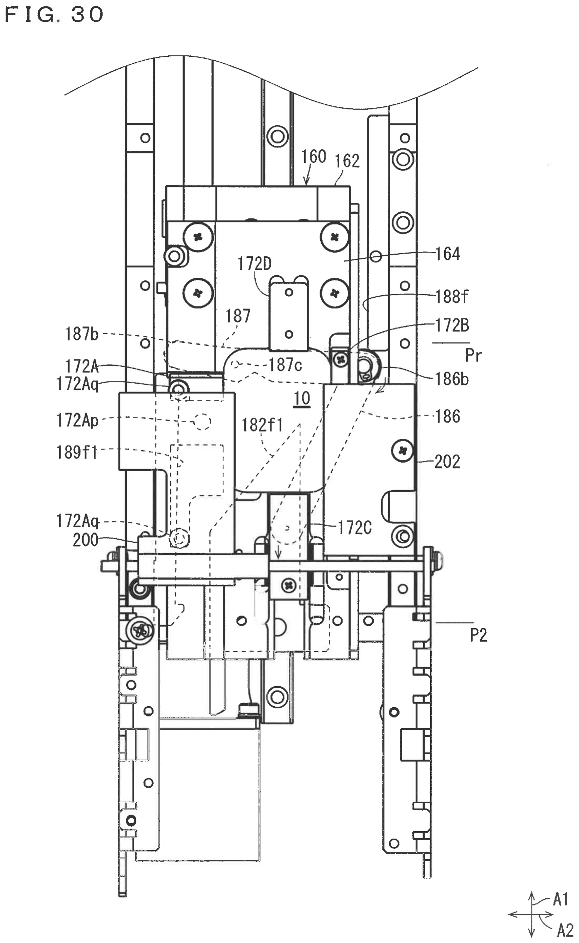

When the stage 160 is further moved to the side of the reading position P2, as illustrated in Fig. 30, a part of the left positioning part 172A and the right positioning part 172B having contact with the IP 10 gets away from the combination positioning parts 200 and 202 to the upper side, and the upper side part of the IP 10 gets away from the combination positioning parts 200 and 202 to the upper side while being sandwiched by the left positioning part 172A and the right positioning part 172B in the right -left direction.

The driven part 186b has contact with the actuation surface 188f of the additional actuation plate 188, and the driven part 186b is pressed to the inner side and the lower side in the right-left direction. Accordingly, the lower positioning part 172C is moved below the plate-like part 164.

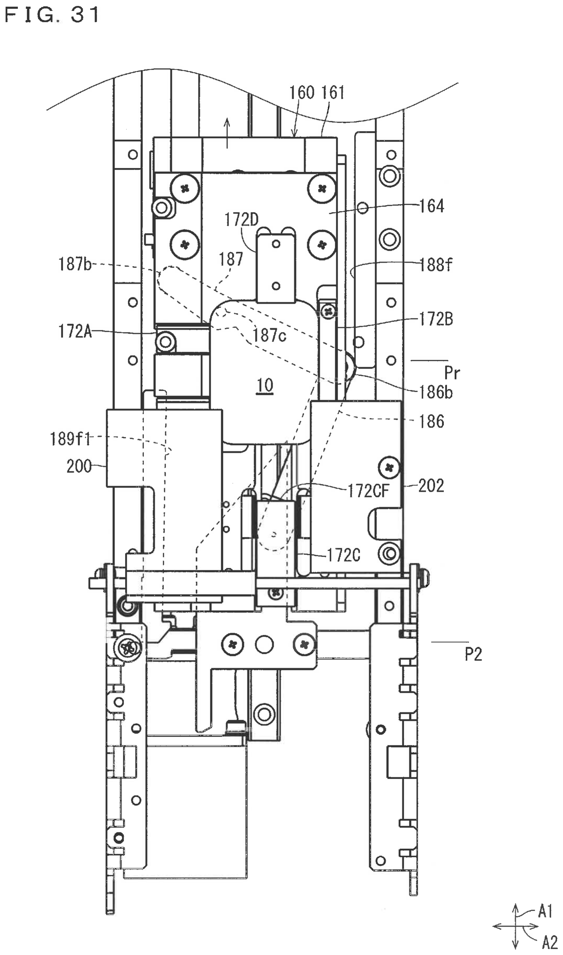

When the stage 160 reaches the reading position P2, as illustrated in Fig. 31, the left positioning part 172A, the right positioning part 172B, and the IP 10 are further exposed from the combination positioning parts 200 and 202 with a large degree. A part of the IP 10 sandwiched by the left positioning part 172A and the right positioning part 172B but not covered by the combination positioning parts 200 and 202 reaches the emission position Pr.

The stage 160 returns to the setting position P1 after reading by the reading unit 90 is finished. A reverse operation to the above operation is performed halfway through the movement of the stage 160, and holding of the IP 10 on the stage 160 is released. When the plural types of IPs 10 are prepared as the IP 10, there is a possibility that the position of the combination positioning part 200 in the right-left sandwiching direction A2 is different depending on the width of the IP 10. The guide receiving groove 200g is formed to have sequentially a larger width toward the upper side. Thus, when the stage 160 returns, the transmission part 172Aq easily enters the guide receiving groove 200g regardless of the position of the combination positioning part 200.

When the stage 160 is moved from the setting position P1 toward the discharge position P3, as illustrated in Fig. 32, the driven part 187b is moved over the retracting operation actuation surface 189f2 in the actuation surface 189f, and is moved to the inner side. Then, the second link 187 is rotated around the support shaft part 187c, and the first link 186 is pressed to the lower side. Accordingly, the lower positioning part 172C is moved to the lower side. When the positioning surface 172CF is moved below the discharge guide surface 168g, the lower edge portion of the IP 10 supported by the positioning surface 172CF has contact with the discharge guide surface 168g. The IP 10 is moved to the lower side by self-weight along the discharge guide surface 168g. Thus, the IP 10 is guided to be away from the supporting surface 164F by the height of the positioning surface 172CF or more, and the IP falls to the lower side from the supporting surface 164F. Accordingly, the IP 10 is discharged.

Figs. 33A to 33D illustrate a positioning operation by the positioning surfaces 170Fa and 170Fb.

As illustrated in Fig. 33A, in an initial setting state of the IP 10, the stage-side positioning surfaces 172AF and 172BF are opened, and the IP 10 is disposed therebetween.

As illustrated in Fig. 33B, the left positioning part 172A and the right positioning part 172B are combined with the combination positioning parts 200 and 202 halfway through the movement of the stage 160 toward the reading position P2. In the combination state, the stage-side positioning surface 172AF and the combination positioning surface 200F constitute the positioning surface 170Fa on the left side, and the stage-side positioning surface 172BF and the combination positioning surface 202F constitute the positioning surface 170Fa on the right side. In this state, the distal end edge 170Fae is away from the supporting surface 164F by the distance L1. Thus, the edge portion of the IP 10 located away from the supporting surface 164F within a range of the distance L1 can be positioned to be pressed against the supporting surface 164F. That is to say, warpage of the IP 10 is resolved, and the IP 10 approaches a flat state along the supporting surface 64F. When the edge portion of the IP 10 is away from the supporting surface 164F, the edge portion sequentially slides from the combination positioning surfaces 200F and 202F toward the stage-side positioning surfaces 172AF and 17BF to get close to the supporting surface 164F.

At this time, the combination positioning surfaces 200F and 202F are partially overlapped with the stage-side positioning surfaces 172AF and 172BF. Thus, the edge portion described above sliding on the combination positioning surfaces 200F and 202F is not caught on a boundary between the combination positioning surfaces 200F and 202F and the stage-side positioning surfaces 172AF and 172BF but can be smoothly moved to a side of the stage-side positioning surfaces 172AF and 172BF.

When the radiation image of the IP 10 is to be read while the IP 10 is positioned by the positioning surface 170Fa, as illustrated in Fig. 33C, there is a possibility that the excitation light La and the emission light Lb are blocked at a position located the inner side from the edge portion of the IP 10.

The left positioning part 172A and the right positioning part 172B are separated from the combination positioning parts 200 and 202 before the stage 160 reaches the reading position P2. As illustrated in Fig. 33D, the left positioning part 172A and the right positioning part 172B position the IP 10 from the right-left direction in the emission position Pr, and the combination positioning surfaces 200F and 202F are not overlapped with the emission position Pr.

In this state, the stage-side positioning surface 172AF serves as the positioning surface 170Fb on the left side, and the stage-side positioning surface 172BF serves as the positioning surface 170Fb on the right side. In this state, the distal end edge 170Fae is away from the supporting surface 164F by the distance L2 smaller than the distance L1.

When the radiation image of the IP 10 is to be read in this state, an amount of overlapping of the positioning surface 170Fb from the edge portion to the inner side of the IP 10 is small; thus, the excitation light La can reach near an outer edge of the IP 10, and the emission light Lb near the outer edge of the IP 10 can be detected.

### <Effect etc.>

According to the radiation image scanner 120 having the above configuration, the positioning mechanism 170 is constituted so that the state can be changed between the first state where the distal end edge 170Fae is disposed to be away from the supporting surface 164F by the first distance L1 and the second state where the distal end edge is disposed to be away from the supporting surface 164F by the second distance L2 smaller than the first distance L1 in the manner similar to the first embodiment. Thus, the IP 10 being in contact with the supporting surface 164F can be held while a shadow obstruction is suppressed in the manner similar to the first embodiment.

Particularly, according to the second embodiment, the IP 10 can be pressed toward the supporting surface 164F and positioned using both the stage-side positioning surfaces 172AF and 172BF and the combination positioning surfaces 200F and 202F in the first state. Thus, even when the edge portion of the IP 10 is away from the supporting surface 164F, the IP 10 being in contact with the supporting surface 164F can be easily held. Since the combination positioning parts 200 and 202 are separated from the left positioning part 172A and the right positioning part 172B in the second state, the distal end edge 170Fbe of the positioning surface can be easily set near the supporting surface 164F. Thus, the positioning surface 170Fb including the stage-side positioning surfaces 172AF and 172BF hardly blocks the excitation light La and the emission light Lb, and a shadow obstruction hardly occurs.

The stage-side positioning surfaces 172AF and 172BF are the inclined surfaces, and the combination positioning surfaces 200F and 202F are the inclined surfaces in the same direction as the corresponding stage-side positioning surfaces 172AF and 172BF, respectively; thus, the edge portion of the IP 10 is sequentially guided from the combination positioning surfaces 200F and 202F by the stage-side positioning surfaces 172AF and 172BF, and can be smoothly pressed against the supporting surface 164F.

The end edge portion of the combination positioning surfaces 200F and 202F on the side of the supporting surface 164F is overlapped with the stage-side positioning surfaces 172AF and 172BF; thus, the edge portion of the IP 10 is hardly caught on the boundary between the combination positioning surfaces 200F and 202F and the stage-side positioning surfaces 172AF and 172BF and can be smoothly moved.

The combination positioning parts 200 and 202 are disposed between the setting position P1 and the reading position P2. Then, the combination positioning parts 200 and 202 are combined with the left positioning part 172A or the right positioning part 172B as the stage-side positioning part halfway through the route of the movement of the stage 160 from the setting position P1 to the reading position P2, and the combination positioning parts 200 and 202 are separated from the left positioning part 172A or the right positioning part 172B in the state where the stage 160 is located in the reading position P2. Thus, the first state and the second state can be easily switched when the stage body 161 is moved from the setting position P1 to the reading position P2.

The stage 160 includes the left positioning part 172A as the stage-side adjustable positioning part, and the left positioning part 172A is moved along the right-left sandwiching direction A2 in accordance with the movement of the stage body 161 from the setting position P1 to the reading position P2; thus, the left positioning part 172A can be moved by the movement of the stage body 161 to sandwich the IP 10.

The combination positioning part 200 is moved in the right-left sandwiching direction A2 in conjunction with the movement of the left positioning part 172A along the right-left sandwiching direction A2. The close movement of the IP 10 can be performed in conjunction with the combination positioning surface 200F and the stage-side positioning surface 172AF, and a continuous positioning operation is smoothly performed using the combination positioning surface 200F and the stage-side positioning surface 172AF.

Since the IP is sandwiched using the right positioning part 172B and the combination positioning part 202 supported at the fixed position on the stage body 161, the IP 10 can be positioned in the fixed position on the supporting surface 164F based on the right positioning part 172B and the combination positioning part 202.

### <Modification example of second embodiment>

Described in the second embodiment is the configuration of the positioning by the overlapping structure of two parts of the left positioning part 172A or the right positioning part 172B and the combination positioning parts 200 and 202. However, the positioning part supported on the stage may be the overlapping structure of two or more parts. The combination positioning part may also be the overlapping structure of two or more parts.

Described in the second embodiment is the example that the left positioning part 172A or the right positioning part 172B are combined with or separated from the combination positioning parts 200 and 202 by moving the stage 160. However, also applicable is a configuration that the stage-side positioning part is combined with or separated from the combination positioning part by moving the combination positioning part with respect to the stage-side positioning part. The stage-side positioning part in this case may be moved using driving force of the stage body moving mechanism or driving force of an actuator such as a motor separately added.

In the embodiment 2, the lower positioning part 172C is moved to the lower side to discharge the IP 10. The configuration example for discharging the IP 10 is not limited to the above example. Described in the embodiment 2 is the example that the upper positioning part 172D is fixed in the fixed position on the stage body 161, and the lower positioning part is moved. The upper positioning part or the lower positioning part may be moved with respect to the stage body.

A modification example regarding a configuration for discharge and a sandwiching configuration in the up-down direction is described.

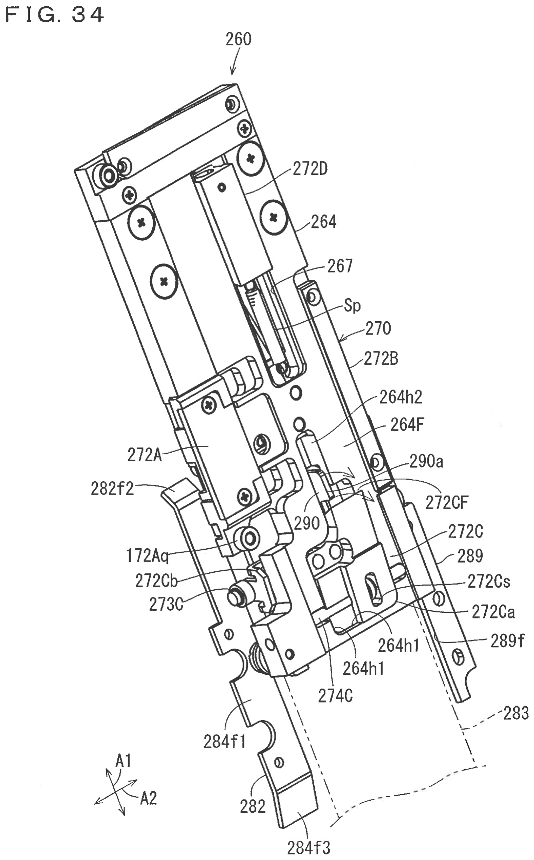

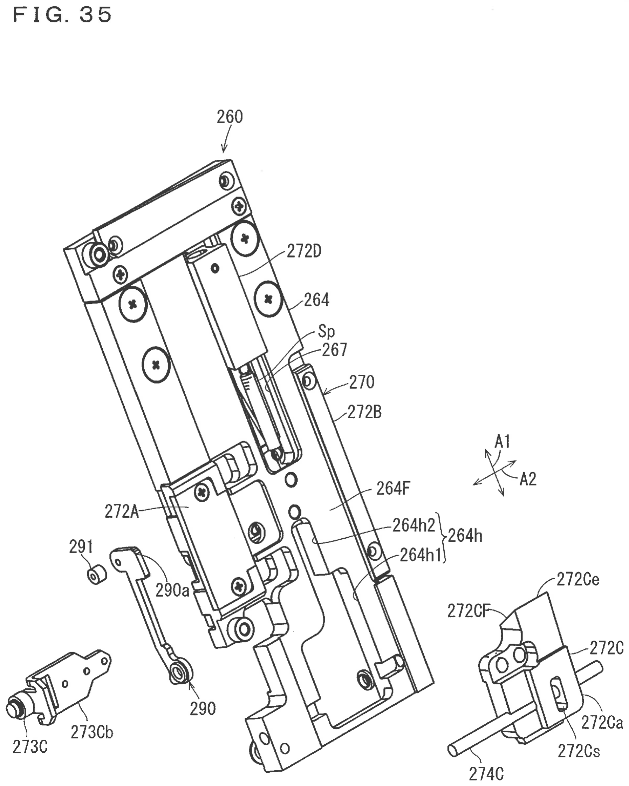

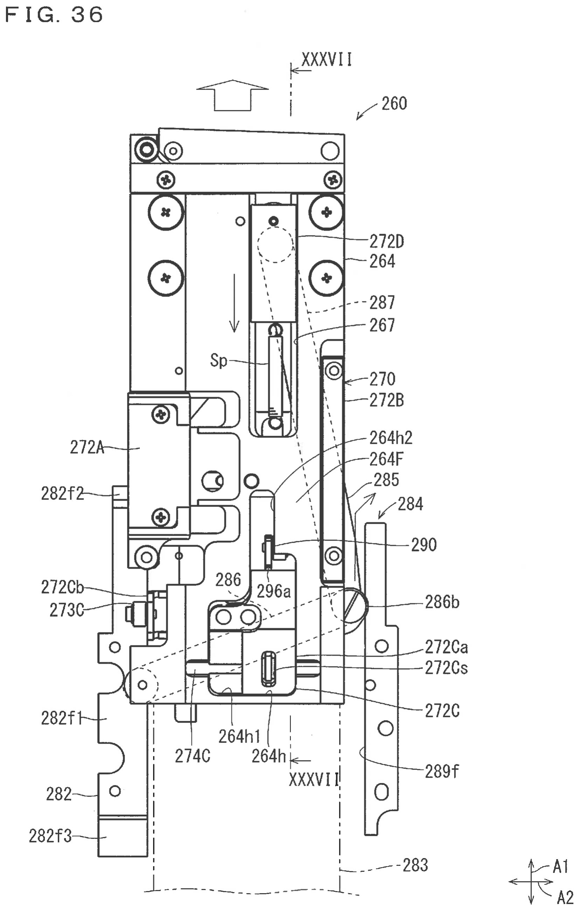

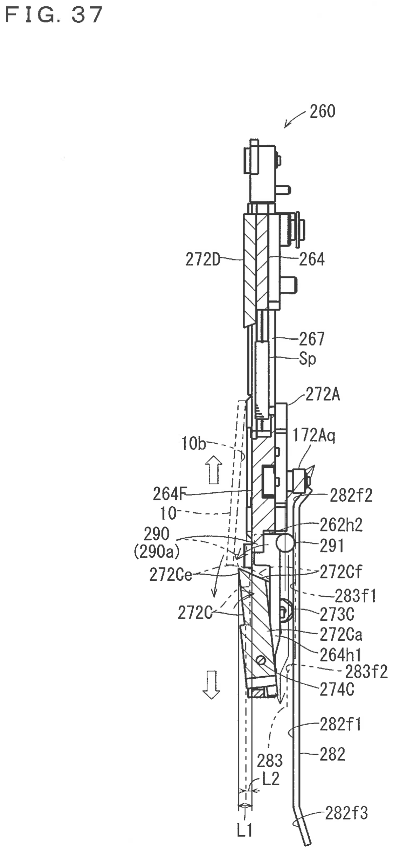

Fig. 34 is a perspective view illustrating a stage 260 according to the modification example. Fig. 35 is an exploded perspective view illustrating the stage 260. Fig. 36 is a front view illustrating the stage 260 seen from a side of a supporting surface 264F. Fig. 37 is a partial cross-sectional view along an XXXVII-XXXVII line in Fig. 36. The movable support is omitted in Fig. 34 to Fig. 37. Fig. 34, Fig. 36, and Fig. 37 illustrate actuation plates 282 and 289 and a discharge actuation plate 283 for moving each part for holding or discharging the IP 10 in accordance with the movement of the stage 260.

The stage 260 includes a plate-like part 264 corresponding to the plate-like part 164 and a positioning mechanism 270 corresponding to the positioning mechanism 170.

The plate-like part 264 is formed into a plate-like shape with the supporting surface 264F corresponding to the supporting surface 164F in the manner similar to the plate-like part 164. A main difference between the plate-like part 164 and the plate-like part 264 is a configuration for supporting the lower positioning part 272C and the upper positioning part 272D.

The positioning mechanism 270 includes a left positioning part 272A, a right positioning part 272B, a lower positioning part 272C, and the upper positioning part 272D.

A configuration regarding the left positioning part 272A and the right positioning part 272B and a configuration that the plate-like part 264 supports the left positioning part 272A and the right positioning part 272B are the same as those described in the second embodiment. In the manner similar to the description in the second embodiment, when the driven part 172Ap on a side of a back surface of the left positioning part 272A has contact with the actuation surface 182f of the actuation plate 182 in accordance with movement of the stage 260, the left positioning part 272A can be moved close to and away from the right positioning part 272B. In the manner similar to the description in the second embodiment, the left positioning part 172A supports the transmission part 172Aq, and can move the combination positioning part 200 in accordance with the movement of the left positioning part 172A in the right-left sandwiching direction A2.

In the manner similar to the description in the second embodiment, the left positioning part 272A and the right positioning part 272B can be combined with and separated from the combination positioning parts 200 and 202 by the movement of the stage 260.

The configuration of the plate-like part 264 supporting the lower positioning part 272C and the upper positioning part 272D is different from that described in the second embodiment.

An opening 264h passing through front and back sides is formed in the plate-like part 264 close to a lower side. A lower part of the opening 264h is a positioning opening 264h1 for locating the lower positioning part 272C. An upper part of the opening 264h is a discharge opening 264h2. An inner space of the discharge opening 264h2 is continuously formed with an inner space of the positioning opening 264h1. The discharge opening 264h2 has a smaller width than the positioning opening 264h1. The openings 264h1 and 264h2 may be partitioned.

The lower positioning part 272C includes a positioning body 272Ca and a transmission part 272Cb.

The positioning body 272Ca is pivotably supported by a shaft 274C while being disposed in the positioning opening 264h1. The shaft 274C supports a part of the positioning body 272Ca close to a lower side at a position close to a lower side in the positioning opening 264h1.

The positioning body 272Ca extends to an upper side from the shaft 274C along the up-down sandwiching direction A1. A surface of the positioning body 272Ca directed upward in the up-down sandwiching direction A1 is a lower positioning surface 272CF.

When the lower positioning surface 272CF is rotated around the shaft 274C as a pivot shaft, a posture of the lower positioning surface 272CF is changed between a sandwiching posture (refer to a solid line in Fig. 37) and a low height posture (refer to a dash-double-dot line in Fig. 37). The lower positioning surface 272CF protrudes from the supporting surface 264F in both the sandwiching posture and the low height posture. An amount of protrusion of the lower positioning surface 272CF with respect to the supporting surface 264F is larger in the sandwiching posture than in the low height posture. It is sufficient that the lower positioning surface 272CF is inclined toward a center of the supporting surface 264F with getting far from the supporting surface 264F in any posture.

The lower positioning part 272C may be biased to have the low height posture by gravity or a biasing member such as a twist coil spring, for example.

An end edge of the lower positioning surface 272CF described above located in front of the supporting surface 264F on a side farther away from the supporting surface 264F is a distal end edge 272Ce. The lower positioning part 272C can change a state between the first state (the sandwiching posture) where the distal end edge 272Cd is disposed to be away from the supporting surface 264F by the first distance L1 and the second state (the low height posture) where the distal end edge 272Ce is disposed to be away from the supporting surface 264F by the second distance L2 smaller than the first distance.

Thus, as described in the first embodiment or the second embodiment, since the IP 10 is sandwiched using the lower positioning surface 272CF in the sandwiching posture, the IP 10 can be easily sandwiched to be pressed against the supporting surface 264F even when the IP 10 is away from the supporting surface 264F. Since the IP 10 is positioned using the lower positioning surface 272CF in the low height posture, the lower positioning surface 272CF hardly causes a shadow obstruction.

That is to say, the lower positioning part 272C is an example of the height adjustable positioning part which can adjust a height with respect to the supporting surface 264F in the manner similar to the positioning parts 72A, 72B, 72C, and 72D in the first embodiment. That is to say, it is applicable that the height adjustable positioning part is moved in a direction perpendicular to the supporting surface to adjust the height, rotated around a predetermined axis to adjust the height with respect to the supporting surface, or moved obliquely with respect to the supporting surface to adjust the height.

The transmission part 272Cb is a member for transmitting force for pivoting the lower positioning surface 272CF in accordance with the movement of the stage 260 to the lower positioning surface 272CF.

The transmission part 272Cb is connected to a back surface of the lower positioning surface 272CF on a side of a back surface of the plate-like part 264. The transmission part 272Cb extends to one side of the right-left sandwiching direction A2 through the side of the back surface of the plate-like part 264 from the back surface of the lower positioning surface 272CF. A driven part 273C is rotatably supported on an outward end portion of the transmission part 272Cb. The driven part 273C is a roller rotatably supported around a rotational axis along the right-left sandwiching direction A2, for example.

When the transmission part 272Cb and the driven part 273C are displaced in a thickness direction of the plate-like part 264, the lower positioning surface 272CF can be pivoted between the sandwiching posture and the low-height posture.

The actuation plate 282 with which the driven part 273C can have contact is supported on the frame part 144. The actuation plate 282 includes a planar surface 282f1, a first slope surface 282f2 connected to an upper side of the planar surface 282f1, and a second slope surface 282f3 connected to a lower side of the planar surface 282f1.

The planar surface 282f1 is formed in a position having contact with the driven part 273C so that the lower positioning surface 272CF is kept in the sandwiching posture in a direction perpendicular to the supporting surface 264F. The planar surface 282f1 is formed within a range where the driven part 273C can have contact with the planar surface 282f1 between the state where the stage 260 is located in the setting position P1 and a position halfway through the movement of the stage 260 from the setting position P1 toward the reading position P2. Since the driven part 273C has contact with the planar surface 282f1 while the stage 260 is located in the setting position P1, the lower positioning part 272C is kept in the sandwiching state. The driven part 273C rolls on the planar surface 282f1 until the stage 260 reaches the reading position P2, and the lower positioning part 272C is kept in the sandwiching posture. Since the IP 10 is sandwiched halfway through the movement of the stage 260 from the setting position P1 toward the reading position P2, the lower positioning surface 272CF can be made to protrude from the supporting surface 264F with a large degree.

The first slope surface 282f2 is inclined to a side away from the supporting surface 264F toward the upper side in the up-down sandwiching direction A1. Thus, when the stage 260 gets close to the reading position P2, the driven part 273C rolls on the first slope surface 282f2, and is displaced in the direction away from the supporting surface 264F. Accordingly, the lower positioning surface 272CF is rotated in the low height posture. Since the radiation image is read in the low height posture while the stage 260 reaches the reading position P2, the lower positioning part 272C hardly interferes with the reading.

The second slope surface 282f3 is inclined to a side away from the supporting surface 264F toward the lower side in the up-down sandwiching direction A1. Thus, when the stage 260 is moved from the setting position P1 toward the discharge position P3, the driven part 273C rolls on the second slope surface 282f3, and is displaced in the direction away from the supporting surface 264F. Accordingly, the lower positioning surface 272CF is rotated in the low height posture. Since the height of the lower positioning surface 272CF with respect to the supporting surface 264F is reduced, the IP 10 can easily pass over the lower positioning surface 272CF to be discharged.

The upper positioning part 272D is movably supported on the plate-like part 264 along the up-down sandwiching direction A1. More specifically, a slit 267 is formed along the up-down sandwiching direction A1 in a part on an upper side of the plate-like part 264.

The upper positioning part 272D is formed into an elongated rectangular parallelepiped shape along an extension direction of the slit 267. The upper positioning part 272D is disposed in the slit 267, and is movably supported along the up-down sandwiching direction A1. The coil spring Sp biases the upper positioning part 272D toward the lower positioning surface 272CF.

A surface of the upper positioning part 272D directed to an inner side (lower side) is formed in the lower positioning surface 272CF. The lower positioning surface 272CF sandwiches the IP 10 on the supporting surface 264F from the upper side.

Differing from the second embodiment, in the present modification example, the lower positioning part 272C is located in a fixed position, and the upper positioning part 272D reciprocates in the up-down sandwiching direction A1. The upper positioning part 272D is moved in conjunction with the movement of the stage 260 by the following configuration, for example.

That is to say, the upper positioning part operation mechanism 284 moves the upper positioning part 272D along the up-down sandwiching direction A1 in accordance with the movement of the stage 260 from the setting position P1 to the reading position P2 by the stage body moving mechanism 150.

The upper positioning part operation mechanism 284 includes an actuation surface 289f and a link mechanism 285.

The link mechanism 285 includes a first link 286 and a second link 287 as a plurality of links.

The first link 286 and the second link 287 elongated members, and are elongated plate-like members herein. The first link 286 and the second link 287 are located on the side of the back surface of the plate-like part 264. One end of the first link 286 is rotatably connected to a part close to a lower side in the up-down sandwiching direction A1 and close to one (left) side in the right-left sandwiching direction A2 on the side of the back surface of the plate-like part 264. The other end of the first link 286 extends close to the other (right) side toward the upper side of the plate-like part 264.

One end of the second link 287 is rotatably connected to the other end of the first link 286 via a shaft part. The other end of the second link 287 is rotatably connected to the back surface of the upper positioning part 272D via a shaft part.

A driven part 286b is rotatably supported on a connection part between the first link 286 and the second link 287. The driven part 286b is a rolling body such as a roller, for example. The driven part 286b protrudes to the other side of the plate-like part 264.

The coil spring Sp biases the upper positioning part 272D to the lower side along the up-down sandwiching direction A1. When the upper positioning part 272D is moved to the lower side, an angle of the connection part between the first link 286 and the second link 287 is reduced, and an amount of protrusion of the driven part 286b from the plate-like part 264 increases. When the amount of protrusion of the driven part 286b from the plate-like part 264 is adjusted, the position of the upper positioning part 272D can be adjusted.

An actuation plate 289 is supported on the frame part 144. An inward side edge portion of the actuation plate 289 is the actuation surface 289f. The driven part 286b described above faces the actuation surface 289f. The biasing force of the coil spring Sp causes force of pressing the driven part 286b against the actuation surface 289f. Thus, the driven part 286b is driven and moved on the actuation surface 289f in accordance with the movement of the stage 260.

The actuation surface 289f causes the driven part 286b to be displaced in the right-left sandwiching direction A2 as a direction intersecting with a movement direction of the stage 260 in accordance with the movement of the stage 260.

In the present embodiment, the actuation surface 289f extends along the up-down sandwiching direction A1. The driven part 286b is pressed against the actuation surface 289f; thus, the amount of protrusion of the driven part 286b from the plate-like part 264 is kept constant. The upper positioning part 272D is regulated to be located in the fixed position, that is the standby position away from the lower positioning part 272C herein while the driven part 286b is pressed against the actuation surface 289f.

The actuation surface 289f is located within a range of a passage of the driven part 286b during the movement of the stage 260 from the setting position P1 to the front side of the reading position P2. Thus, the driven part 286b has contact with the actuation surface 289f in the state where the stage 260 is located in the setting position P1. The driven part 286b has contact with the actuation surface 289f even in the state where the stage 260 is located between the setting position P1 and the reading position P2. Thus, the upper positioning part 272D is kept in the standby position halfway through the movement of the stage 260 from the setting position P1 to the reading position P2.

The driven part 286b gets away from the actuation surface 289f before the stage 260 reaches the reading position P2. Then, the driven part 286b can be moved in a direction away from the plate-like part 264 to an outer lateral side. When the upper positioning part 272D is moved to the lower side along the up-down sandwiching direction A1 by biasing force of the coil spring Sp, the driven part 286b is moved to the outer lateral side and the angle between the first link 286 and the second link 287 gets smaller.

It is preferable that the driven part 286b gets away from the actuation surface 289f before the driven part 273C is moved from the planar surface 282f1 to the first slope surface 282f2, and the upper positioning part 272D is moved to the lower side. Accordingly, the IP 10 is sandwiched between the upper positioning part 272D and the lower positioning part 272C while the lower positioning surface 272CF has the sandwiching posture.

In this manner, the link mechanism 285 can transmit the displacement of the driven part 286b in the direction intersecting with the movement direction of the stage 260 as the force of moving the upper positioning part 272D.

In the present modification example, the stage 260 includes a discharge member 290. The discharge member 290 is movably supported between a protruding position (refer to a dash-double-dot line in Fig. 37) protruding from the supporting surface 264F and a retracting position (refer to a solid line in Fig. 37) retracting from the supporting surface 264F.

More specifically, the discharge member 290 is an elongated member formed into a plate-like shape. One end portion of the discharge member 290 is a rotatably supported part, and is rotatably supported by the shaft 274C in the present embodiment. An intermediate portion of the discharge member 290 is an elongatedly-extending part. The other end portion of the discharge member 290 protrudes to both directions perpendicular to the supporting surface 264F from the intermediate portion of the discharge member 290. A part of the other end portion of the discharge member 290 protruding to the side of the supporting surface 264F is a pressing part 290a pressing the back surface 10b of the IP 10. A part of the other end portion of the discharge member 290 protruding to a side opposite to the supporting surface 264F rotatably supports the driven part 291. The driven part 291 is a roller rotatably supported around a rotational axis along the right-left sandwiching direction A2, for example.

The discharge member 290 is supported on the plate-like part 264 as follows, for example.

That is to say, a slit 272CS is formed in a part of the positioning body 272Ca directed to a back surface. The slit 272CS is a slit extending along the up-down sandwiching direction A1 and opened in the upper side of the up-down sandwiching direction A1 and a side of the back surface of the positioning body 272Ca. The slit 272CS has a depth deep enough to reach the shaft 274C in a part where the shaft 274C is formed. For example, the slit 272CS may pass through front and back sides of the lower positioning surface 272CF in a part where the shaft 274C is formed.

Then, one end portion of the discharge member 290 is rotatably supported around a central axis of the shaft 274C by the shaft 274C while the discharge member 290 is disposed in the slit 272CS. Since the discharge member 290 or the lower positioning part 272C are rotatably supported by the shaft 274C, the discharge member 290 and the lower positioning part 272C can be rotated around the central axis of the shaft 274C with no linkage. The discharge member 290 is biased to the retracting position by gravity or a spring such as a twist coil spring, for example.

The discharge member 290 extends to an upper side from the shaft 274C along the up-down sandwiching direction A1 from the shaft 274C through the slit 272CS. The other end portion of the discharge member 290 reaches the discharge opening 264h2. The pressing part 290a is retracted from the supporting surface 264F to a side of the discharge opening 264h2 in the retracting position. Thus, the pressing part 290a does not have contact with the IP 10 located on the supporting surface 264F. The pressing part 290a is partially exposed from the discharge opening 264h2 to protrude from the supporting surface 264F in the protruding position. Thus, the pressing part 290a can press the IP 10 on the supporting surface 264F in a direction away from the supporting surface 264F.

The driven part 291 supported on the other end portion of the discharge member 290 protrudes to the side of the back surface of the plate-like part 264. Since the driven part 291 is displaced in the direction perpendicular to the supporting surface 264F, the discharge member 290 can be moved between the protruding position and the retracting position.

Since the driven part 291 is moved, the discharge actuation plate 283 is supported on the back side of the stage 260. It is sufficient that the discharge actuation plate 283 is directly or indirectly supported on the frame part 144.

The discharge actuation plate 283 includes a slope surface 283f2. The slope surface 283f2 is located closer to a side of the discharge position P3 than the driven part 291 of the stage 260 located in the setting position P1. The slope surface 283f2 is inclined to be closer to the supporting surface 264F toward the lower side along the up-down sandwiching direction A1.

In the state where the stage 260 is located in the setting position P1, the driven part 291 is as far from the supporting surface 264F as the end edge of the slope surface 283f2 farthest from the supporting surface 264F or farther from the supporting surface 264F. Thus, the discharge member 290 is located in the retracting position. In this state, the IP 10 can have contact with the supporting surface 264F. When the stage 260 is moved from the setting position P1 to the reading position P2, the discharge member 290 is kept in a state of being located in the retracting position; thus, the IP 10 can keep the state of having contact with the supporting surface 264F.

When the stage 260 is moved from the setting position P1 toward the discharge position P3 by the driving of the stage body moving mechanism, the driven part 291 rolls on the slope surface 283f2. Accordingly, the driven part 291 gets close to the supporting surface 264F, and the discharge member 290 is moved to the protruding position. Then, the pressing part 290a protrudes from the supporting surface 264F, and the IP 10 on the supporting surface 264F is pressed in a direction away from the supporting surface 264F. Accordingly, the IP 10 easily passes over the lower positioning part 272C and is discharged to the lower side.

The pressing part 290a preferably protrudes from the supporting surface 264F so as to protrude more than the protrusion length of a part of the lower positioning part 272C farthest from the supporting surface 264F. As described above, when the stage 260 is moved from the setting position P1 to the discharge position P3, the height of the lower positioning part 272C is reduced; thus, the pressing part 290a easily protrudes more than the protrusion length of the lower positioning part 272C.

The planar surface 283f1 may extend on the upper side of the slope surface 283f2 described above in the up-down sandwiching direction A1. It is applicable that the driven part 291 is moved on the planar surface 283f1 and the discharge member 290 is kept in a fixed position in the state where the stage 260 is located in the setting position P1 and when the stage 260 is moved from the setting position P1 toward the reading position P2.

The driven part 291 and the discharge actuation plate 283 described above are examples of constituent elements of the positioning part operation mechanism of moving the discharge member 290 from the retracting position toward the protruding position in accordance with the movement of the stage body from the setting position P1 to the discharge position P3 by the stage body moving mechanism.

Also according to this modification example, an effect similar to that in the second embodiment can be obtained. The discharge member 290 described in the present modification example may be rotatably supported at a position different from the lower positioning surface 272CF.

The lower positioning part 272C can also be considered to include the distal end edge 272Ce which can change the distance from the supporting surface 264F as the adjustable height positioning part. Thus, also in the lower positioning part 272C, the edge portion is easily pressed against the supporting surface 264F even when the edge portion of the IP 10 comes off the supporting surface 264F. The IP 10 being in contact with the supporting surface can be held while the shadow obstruction is suppressed.

### {Modification example}

The biasing member described in each embodiment described above needs not be the coil spring Sp or the helical torsion spring Spt, but may also be a plate spring or rubber, for example.

Each driven part described above needs not be a rotated member such as a ball or a roller, but may also be a movable member while grazing and having contact with a counterpart surface.

Described in the first embodiment is the configuration of rotating the lower positioning part 72C, thereby easily discharging the IP 10. Described in the second embodiment is the configuration of moving the lower positioning part 172C to the lower side along the up-down sandwiching direction A1, thereby locating the IP 10 on the discharge guide surface 168g to easily discharge the IP 10. Described in the modification example of the second embodiment is the configuration of pressing the IP 10 from the side of the back surface by the discharge member 290 so that the IP 10 easily passes over the lower positioning part 272C. Three types of configurations for discharge described above can be applied to the first embodiment, the second embodiment, and the modification example of the second embodiment. For example, applicable to the first embodiment is a configuration of moving the lower positioning part to the lower side along the up-down sandwiching direction, thereby locating the IP on the discharge guide surface to easily discharge the IP as with the second embodiment. For example, applicable to the first embodiment is a configuration of pressing the IP from the side of the back surface by the discharge member so that the IP easily passes over the lower positioning part as with the modification example of the second embodiment. Adoptable to the second embodiment or the modification example is a configuration of rotating the lower positioning part 72C, thereby easily discharging the IP 10 as with the first embodiment.

Each configuration described in each embodiment and each modification example can be appropriately combined as long as they are not contradictory.

The present disclosure discloses each aspect described hereinafter.

A first aspect is a radiation image scanner reading a radiation image from an imaging plate, including: a stage body including a supporting surface which can have contact with a back surface of the imaging plate; a positioning mechanism with a positioning surface having contact with an edge portion of the imaging plate located on the supporting surface to position the edge portion from an outer side of the edge portion in an extension direction of the supporting surface and press the edge portion against the supporting surface; an excitation light source irradiating the imaging plate held on the stage body with excitation light; and a photodetector detecting emission light by the excitation light from the image plate, wherein an end edge of the positioning surface located in front of the supporting surface on a side farther away from the supporting surface is a distal end edge, and the positioning mechanism is constituted so that a state can be changed between a first state where the distal end edge is disposed to be away from the supporting surface by a first distance and a second state where the distal end edge is disposed to be away from the supporting surface by a second distance smaller than the first distance.

According to this scanner, when the positioning surface is moved toward the edge portion of the IP from the first state, the edge portion is easily pressed against the supporting surface even in a case where the edge portion of the IP comes off the supporting surface. When the radiation image is read from the IP using the excitation light source and the photodetector in the second state, the positioning surface hardly blocks the excitation light and the emission light, and the shadow obstruction hardly occurs. Accordingly, the IP being in contact with the supporting surface can be held while the shadow obstruction is suppressed.

A second aspect is the radiation image scanner according to the first aspect, wherein when a part of the positioning surface located on the supporting surface or a part of the positioning surface located on an extension of the supporting surface is a positioning reference part, the distal end edge is located closer to a center side of the supporting surface in relation to the positioning reference part.

Since the distal end edge of the positioning surface is located on the inner side of the supporting surface than the positioning reference part, the IP can be effectively pressed against the supporting surface.

A third aspect is the radiation image scanner according to the first or second aspect, wherein performed in the first state is a positioning operation of positioning the edge portion of the imaging plate using the positioning surface, and in the second state, the radiation image is read from the imaging plate by the excitation light source and the photodetector.

In this case, the positioning surface is moved toward the edge portion of the IP in the first state, and can press the edge portion against the supporting surface. The positioning surface hardly blocks the excitation light and the emission light in the second state, and the shadow obstruction hardly occurs. Accordingly, the IP being in contact with the supporting surface can be held while the shadow obstruction is suppressed.

A fourth aspect is the radiation image scanner according to any one of the first to third aspects, wherein the positioning mechanism includes a height adjustable positioning part which can adjust a height with respect to the supporting surface, and the height adjustable positioning part includes the positioning surface.

Since the height of the height adjustable positioning part is adjusted, the position of the distal end edge of the positioning surface can be changed.

A fifth aspect is the radiation image scanner according to the fourth aspect, wherein the positioning surface includes a main positioning surface extending in a direction perpendicular to the supporting surface and a main pressing surface continuously formed with the main positioning surface and protruding from the main positioning surface to face the supporting surface.

In this case, in the first state, the main pressing surface is disposed away from the supporting surface with a large degree. Thus, even when the protrusion length of the main pressing surface from the main positioning surface is small, the edge portion of the IP can be easily pressed against the supporting surface. In the second state, the main pressing surface gets close to the supporting surface. Since the protrusion length of the main pressing surface from the main positioning surface can be reduced, the shadow obstruction further hardly occurs.

A sixth aspect is radiation image scanner according to the fifth aspect, wherein the main pressing surface is an inclined surface directed to a direction away from the supporting surface with getting far from the main positioning surface.

In this manner, since the main pressing surface is the inclined surface, the IP is easily positioned in the direction along the supporting surface while being pressed against the supporting surface.

A seventh aspect is the radiation image scanner according to any one of the fourth to sixth aspects, wherein the positioning mechanism includes a sandwiching adjustable base movably supported on the stage body along a sandwiching direction along the supporting surface, and the height adjustable positioning part includes a biaxial direction adjustable positioning part supported in a height-adjustable form with respect to the supporting surface on the sandwiching adjustable base.

In this case, the IP can be positioned while being pressed toward the supporting surface by the biaxial direction adjustable positioning part.

An eighth aspect is the radiation image scanner according to the seventh aspect, wherein the height adjustable positioning part includes a fixed position adjustable positioning part facing the biaxial direction adjustable positioning part and supported in a height-adjustable form at a fixed position in a direction along the supporting surface.

Accordingly, the IP can be positioned at the fixed position on the supporting surface based on the fixed position adjustable positioning part.

A ninth aspect is the radiation image scanner according to any one of the fourth to eighth aspects, wherein the height adjustable positioning part includes a discharge adjustable positioning part, the positioning mechanism includes a discharge base pivotably supporting the discharge adjustable positioning part around a rotating shaft along the supporting surface on the stage body, and the discharge adjustable positioning part is supported in a height-adjustable form with respect to the supporting surface via the discharge base.

In this case, the discharge adjustable positioning part can be pivoted in the direction away from the edge portion of the IP. Accordingly, the IP can be easily discharged.

A tenth aspect is the radiation image scanner according to any one of the fourth to ninth aspects, further including: a stage body moving mechanism moving the stage body between a setting position where the imaging plate is set on the stage body and a reading position where the photodetector reads the radiation image in accordance with excitation light from the excitation light source; and a positioning part operation mechanism moving the height adjustable positioning part to reduce a height with respect to the supporting surface in accordance with the movement of the stage body from the setting position to the reading position by the stage body moving mechanism.

In this case, when the stage body is moved to the reading position after the IP is set, the IP is pressed against the supporting surface.

An eleventh aspect is the radiation image scanner according to a tenth aspect, wherein the positioning mechanism includes a sandwiching adjustable base movably supported on the stage body along a sandwiching direction along the supporting surface, the height adjustable positioning part includes a biaxial direction adjustable positioning part supported in a height-adjustable form with respect to the supporting surface on the sandwiching adjustable base, and the positioning part operation mechanism moves the sandwiching adjustable base toward the edge portion of the imaging plate in accordance with the movement of the stage body from the setting position to the reading position by the stage body moving mechanism.

Accordingly, when the stage body is moved to the reading position after the IP is set, the IP can be positioned.

A twelfth aspect is the radiation image scanner according to the tenth or eleventh aspect, wherein the height adjustable positioning part includes a discharge adjustable positioning part, the positioning mechanism includes a discharge base pivotably supporting the discharge adjustable positioning part around a rotating shaft along the supporting surface on the stage body, the discharge adjustable positioning part is supported in a height-adjustable form with respect to the supporting surface via the discharge base, the stage body moving mechanism moves the stage body from the setting position to a discharge position on a side opposite to the reading position, and the positioning part operation mechanism pivots the discharge adjustable positioning part so that the discharge adjustable positioning part gets away from the edge portion of the imaging plate in accordance with the movement of the stage body from the setting position to the discharge position by the stage body moving mechanism.

In this case, when the stage body is moved to the discharge position while being located in the setting position, the IP is easily discharged.

A thirteenth aspect is the radiation image scanner according to any one of the first to third aspects, wherein the positioning mechanism includes a stage-side positioning part protruding from the supporting surface and a combination positioning part located away from the supporting surface, the stage-side positioning part includes a stage-side positioning surface extending from the supporting surface or an extension of the supporting surface to a front side of the supporting surface, the combination positioning part includes a combination positioning surface which can be disposed to protrude from the stage-side positioning surface and face the supporting surface, the combination positioning part can change a state between a state of being combined with the stage-side positioning part and a state of being separated from the stage-side positioning part, in the first state, the combination positioning part is combined with the stage-side positioning part, the positioning surface in the first state includes the stage-side positioning surface and the combination positioning surface disposed to protrude from the stage-side positioning surface and face the supporting surface, and an end edge of the combination positioning surface located on a side farther away from the supporting surface is the distal end edge, in the second state, the combination positioning part is separated from the stage-side positioning part, and the positioning surface in the second state includes the stage-side positioning surface, and an end edge of the stage-side positioning surface located on a side farther away from the supporting surface is the distal end edge.

In this state, in the first state, the IP can be positioned while being pressed toward the supporting surface using both the stage-side positioning surface and the combination positioning surface; thus, the IP being in contact with the supporting surface can be easily held. In the second state, the combination positioning part is separated from the stage-side positioning part; thus, the distal end edge of the positioning surface is easily set near the supporting surface. Thus, the positioning surface including the stage-side positioning surface hardly blocks the excitation light and the emission light, and the shadow obstruction hardly occurs. Accordingly, the IP being in contact with the supporting surface can be held while the shadow obstruction is suppressed.

A fourteenth aspect is the radiation image scanner according to the thirteenth aspect, wherein the stage-side positioning surface is an inclined surface directed to a direction away from the supporting surface with closing to a center of the supporting surface, and the combination positioning surface is an inclined surface inclined in a same direction as the stage-side positioning surface.

In this case, in the first state, the edge portion of the IP is sequentially guided from the combination positioning surfaces as the inclined surface having the same direction by the stage-side positioning surfaces, and can be pressed against the supporting surface.

A fifteen aspect is the radiation image scanner according to the fourteenth aspect, wherein an end edge portion of the combination positioning surface on a side of the supporting surface may be overlapped with an end edge portion of the stage-side positioning surface on a side farther away from the supporting surface.

Accordingly, the edge portion of the IP is smoothly moved from the combination positioning surface to the stage-side positioning surface.

A sixteenth aspect is the radiation image scanner according to any one of the thirteenth to fifteenth aspects, further including a stage body moving mechanism moving the stage body between a setting position where the imaging plate is set on the stage body and a reading position where the photodetector reads the radiation image in accordance with excitation light from the excitation light source, wherein the stage-side positioning part is supported by the stage body and is moved from the setting position toward the reading position together with the stage body, the combination positioning part is disposed midway through a route along which the stage body is moved from the setting position to the reading position, the combination positioning part is combined with the stage-side positioning part midway through the route along which the stage body is moved from the setting position to the reading position, and the combination positioning part is separated from the stage-side positioning part while the stage body is located in the reading position.

Accordingly, the first state and the second state are switched when the stage body is moved from the setting position to the reading position.

A seventeenth aspect is the radiation image scanner according to the sixteenth aspect, wherein the stage-side positioning part includes a stage-side adjustable positioning part movably supported on the stage body along a sandwiching direction along the supporting surface, the radiation image scanner further including the positioning part operation mechanism moving the stage-side adjustable positioning part along the sandwiching direction in accordance with the movement of the stage body from the setting position to the reading position by the stage body moving mechanism.

Accordingly, the stage-side adjustable positioning part is moved by moving the stage body, and the IP can be sandwiched.

An eighteenth aspect is the radiation image scanner according the seventeenth aspect, wherein the combination positioning part includes an adjustable combination positioning part movably supported along the sandwiching direction, the stage-side adjustable positioning part includes a transmission part transmitting force along the sandwiching direction to the combination positioning part, the combination positioning part includes a transmission force receiving part receiving the force of the transmission part, and the adjustable combination positioning part is moved in the sandwiching direction in conjunction with the movement of the stage-side adjustable positioning part along the sandwiching direction.

Accordingly, the stage-side positioning part and the adjustable combination positioning part can be moved in conjunction with each other by moving the stage body.

A nineteenth aspect is the radiation image scanner according to the eighteenth aspect, wherein the stage-side positioning part includes a stage-side fixed positioning part facing the stage-side adjustable positioning part and supported at a fixed position on the stage body, and the combination positioning part includes a fixed position combination positioning part facing the adjustable combination positioning part and disposed in a fixed position midway through a route along which the stage body is moved from the setting position to the reading position.

Accordingly, the IP can be positioned at the fixed position on the supporting surface based on the stage-side fixed positioning part and the fixed position combination positioning part.

A twentieth aspect is the radiation image scanner according to any one of the seventeenth to nineteenth aspects, further including a discharge member movably supported between a protruding position protruding from the supporting surface and a retracting position retracting from the supporting surface, wherein the stage body moving mechanism moves the stage body from the setting position to a discharge position on a side opposite to the reading position, and the positioning part operation mechanism moves the discharge member from the retracting position to the protruding position in accordance with the movement of the stage body from the setting position to the discharge position by the stage body moving mechanism.

When the stage body is moved to the discharge position, the discharge member can press the IP on the supporting surface from the side of the back surface, and the IP is easily discharged.

The radiation image scanner according to the present disclosure is used for reading image information of a dental X-ray picture. X-ray photography is performed on teeth using an IP in photographing of the dental X-ray picture. Warpage (curvature) occurs in the IP in the process of X-ray photography in some cases.

Occurrence of warpage of the IP is additionally described hereinafter. In the X-ray photography of teeth using the IP, the IP is inserted into a mouth of a person or animals as photography targets. At this time, the IP needs to be located along an arrangement of teeth forming a curved line depending on a method or means of photography, so that the IP may be warped from a flat state as a state before being used for photography by external force received in a mouth in photography. This warpage of the IP becomes an obstacle in accurately reading the photographed image. Accordingly, it is preferable for obtaining a clear and fine image data to read a latent image of the IP in a state of reducing the warpage of the curved IP.

The IP is grasped in a flat state in achieving reduction of the warpage of the IP. Desired is a design of grasping reachable to a fixed height (the positioning mechanism according to the present invention, for example) to reliably grasp the IP regardless of a magnitude of warpage (curvature), that is to say, the IP in which large warpage occurs.

In the meanwhile, the design of grasping which can correspond to the fixed height tends to be an obstacle of blocking the emission of the excitation light to the IP. The design of grasping tends to be an obstacle in receiving light when the photodetector detects the emission light from the IP. It can be recognized that the scanner according to the present disclosure solves such a double bind in design. The present disclosure achieves both reliable grasping the IP in any curved state in a regular posture and the configuration of preventing occurrence of the shadow obstruction as a clinical problem in the generated image.

Some of the features of the configuration according to the present disclosure include the mechanism of grasping the IP capable of corresponding to the fixed height so that even the IP having large warpage can be reliably pressed at a bulky part thereof and the mechanism which does not cause the shadow obstruction in reading the image information of the IP when the IP is read.

The above description is in all aspects illustrative and the present invention is not limited thereto. Various modification examples not exemplified are construed to be made without departing from the scope of the present invention.

## Claims

1. A radiation image scanner (20; 120) configured to read a radiation image from an imaging plate (10), comprising:
a stage body (61; 161) including a supporting surface (64F; 164F) which can have contact with a back surface (10b) of the imaging plate;
a positioning mechanism (70; 170) with a positioning surface (70F; 170Fa) having contact with an edge portion of the imaging plate (10) located on the supporting surface (64F; 164F) to position the edge portion from an outer side of the edge portion in an extension direction of the supporting surface and press the edge portion against the supporting surface;
an excitation light source (92) configured to irradiate the imaging plate held on the stage body with excitation light; and
a photodetector (94) configured to detect emission light by the excitation light from the image plate, wherein
an end edge of the positioning surface (70F; 170Fa) located in front of the supporting surface (64F; 164F) on a side farther away from the supporting surface (64F; 164F) is a distal end edge (70Fe; 170Fae,170Fbe),
the positioning mechanism is constituted so that a state can be changed between a first state where the distal end edge (70Fe; 170Fae) is disposed to be away from the supporting surface (64F; 164F) by a first distance and a second state where the distal end edge (70Fe; 170Fae) is disposed to be away from the supporting surface (64F; 164F) by a second distance smaller than the first distance,
the positioning mechanism (170) includes a stage-side positioning part (172A, 172B) protruding from the supporting surface and a combination positioning part (200, 202) located away from the supporting surface,
the stage-side positioning part includes a stage-side positioning surface (172AF, 172BF) extending from the supporting surface or an extension of the supporting surface to a front side of the supporting surface,
the combination positioning part includes a combination positioning surface (200F, 202F) which can be disposed to protrude from the stage-side positioning surface and face the supporting surface,
the combination positioning part can change a state between a state of being combined with the stage-side positioning part and a state of being separated from the stage-side positioning part,
in the first state, the combination positioning part is combined with the stage-side positioning part,
the positioning surface (170Fa) in the first state includes the stage-side positioning surface (172AF, 172BF) and the combination positioning surface (200F, 202F) disposed to protrude from the stage-side positioning surface and face the supporting surface, and an end edge of the combination positioning surface located on a side farther away from the supporting surface is the distal end edge (170Fae),
in the second state, the combination positioning part is separated from the stage-side positioning part, and
the positioning surface (170Fb) in the second state includes the stage-side positioning surface (172AF, 172BF), and an end edge of the stage-side positioning surface located on a side farther away from the supporting surface is the distal end edge (170Fbe).

2. The radiation image scanner according to claim 1, wherein
the stage-side positioning surface (172AF, 172BF) is an inclined surface directed to a direction away from the supporting surface with closing to a center of the supporting surface, and
the combination positioning surface (200F, 202F) is an inclined surface inclined in a same direction as the stage-side positioning surface.

3. The radiation image scanner according to claim 1 or 2, further comprising
a stage body moving mechanism (150) moving the stage body between a setting position (P1) where the imaging plate is set on the stage body and a reading position (P2) where the photodetector reads the radiation image in accordance with excitation light from the excitation light source,
the stage-side positioning part (172AF, 172BF) is supported by the stage body and is moved from the setting position toward the reading position together with the stage body,
the combination positioning part (200F, 202F) is disposed midway through a route along which the stage body is moved from the setting position to the reading position,
the combination positioning part is combined with the stage-side positioning part midway through the route along which the stage body is moved from the setting position to the reading position, and
the combination positioning part is separated from the stage-side positioning part while the stage body is located in the reading position.

4. A radiation image scanner according to anyone of claims 1 to 3, wherein
when a part of the positioning surface located on the supporting surface or a part of the positioning surface located on an extension of the supporting surface is a positioning reference part (70Fs), the distal end edge (70Fe; 170Fae) is located closer to a center side of the supporting surface in relation to the positioning reference part.

5. The radiation image scanner according to anyone of claims 1 to 4, wherein
performed in the first state is a positioning operation of positioning the edge portion of the imaging plate (10) using the positioning surface, and
in the second state, the radiation image is read from the imaging plate (10) by the excitation light source (92) and the photodetector (94).
